# EUROPEAN PATENT APPLICATION

(11) **EP 4 403 362 A1**
(43) Date of publication of application: **24.07.2024**
(21) Application number: 21957522.2
(22) Date of filing: 16.09.2021
(51) Int. Cl.: B33Y 10/00, B33Y 30/00, B29C 64/277, B22F 10/25, B22F 10/38, B22F 12/45, B22F 12/49

(54) **FABRICATION SYSTEM**

(71) Applicant: NIKON CORPORATION, Minato-ku Tokyo 108-6290 (JP)
(72) Inventor: FUNATSU, Takayuki, Tokyo 108-6290 (JP); TANAKA, Koji, Tokyo 108-6290 (JP); UENO, Kazuki, Tokyo 108-6290 (JP)
(74) Representative: Hoffmann Eitle
(86) International application number: PCT/JP2021/034121
(87) International publication number: WO 2023/042341

(57) **Abstract**

A build system irradiates a second position different from a first position with a second energy beam at a first time at which the first position is irradiated with a first energy beam, irradiates a third position different from the first and second positions with the first energy beam at a second time different from the first time, and irradiates the third position with the second energy beam at a third time different from the second time.

## Description

### Technical Field

The present invention relates to a technical field of a build system that is configured to build a build object, for example.

### Background Art

A Patent literature 1 discloses one example of a build system that is configured to build a build object. One technical problem of this build system is to properly build the build object.

### Citation List

### Patent Literature

Patent Literature 1: US2019/0168499A1

### Summary of Invention

A first aspect provides a build system including: a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and a control apparatus that is configured to control the build apparatus, wherein the first irradiation optical system includes a first deflection member that changes a deflection angle of the first energy beam so that a first irradiation position moves on the surface of the object, the first irradiation position is an irradiation position of the first energy beam on the surface of the object, the second irradiation optical system includes a second deflection member that changes a deflection angle of the second energy beam so that a second irradiation position moves on the surface of the object, the second irradiation position is an irradiation position of the second energy beam on the surface of the object, the control apparatus controls the build apparatus to: irradiate a second position different from a first position with the second energy beam at a first time at which the first position is irradiated with the first energy beam; irradiate a third position different from the first position and the second position with the first energy beam at a second time different from the first time; and irradiate the third position with the second energy beam at a third time different from the second time.

A third aspect provides a build system including: a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and a control apparatus that is configured to control the build apparatus, wherein the control apparatus is configured to control a heat amount per unit area that is transferred from at least one of the first energy beam and the second energy beam based on build path information related to a path along which the build apparatus performs a building.

A fourth aspect provides a build system including: a build apparatus that includes an irradiation optical system configured to irradiate a surface of an object with an energy beam, a material supply member configured to supply a build material to a melt pool formed by the energy beam, and a build head including at least a part of the irradiation optical system; a position change apparatus that is configured to change a relative positional relationship between the build head and the object; and a control apparatus, wherein the control apparatus controls the irradiation optical system so as to reciprocate an irradiation position, which is irradiated with the energy beam, along a second direction intersecting a first direction in a first section in a first period in a period in which the positional relationship along the first direction is changed, the control apparatus controls the irradiation optical system so as to reciprocate the irradiation position, which is irradiated with the energy beam, along the second direction intersecting the first direction in a second section different from the first section in a second period different from the first period.

A fifth aspect provides a build system that is a build apparatus including: a first light source; a second light source that is different from the second light source; an irradiation optical system that is configured to irradiate a surface of an object with a first energy beam from the first light source and a second energy beam from the second light source; a material supply member that is configured to supply a build material to a melt pool formed by at least one of the first energy beam and the second energy beam; and a build head that includes at least a part of the irradiation optical system, wherein the irradiation optical system includes: a first deflection member that deflects the first energy beam from the first light source; a second deflection member that deflects the second energy beam from the second light source; and a condensing member that condenses the first energy beam deflected by the first deflection member and the second energy beam deflected by the second deflection member, the build head includes: a first change apparatus that changes a position or an orientation of the first deflection member to change an irradiation position of the first energy beam; and a second change apparatus that changes a position or an orientation of the second deflection member to change an irradiation position of the second energy beam.

A sixth aspect provides a build system including: a build apparatus that includes an irradiation optical system configured to irradiate a surface of an object with an energy beam, and a material supply member configured to supply a build material to a melt pool formed by the energy beam; a control apparatus that is configured to control the build apparatus, wherein the control apparatus controls the irradiation optical system so that the irradiation position of the energy beam, which is set on a surface of the object, moves along a first movement trajectory in a build unit area on the object, the control apparatus controls at least one of an intensity, the number of pulses, and a pulse width of the energy beam based on heat amount distribution information related to a distribution of a heat mount that is transferred from the energy beam to the object in a case where the build unit area irradiated with the energy beam having a first intensity so that the irradiation position moves along the first movement path in the build unit area.

A seventh aspect provides a build system including: a build apparatus that includes an irradiation optical system configured to irradiate a surface of an object with a first energy beam and a second energy beam, and a material supply member configured to supply a build material to a melt pool formed by at least one of the first energy beam and the second energy beam; and a control apparatus that is configured to control the build apparatus, wherein the irradiation optical system includes: a first deflection member that changes a deflection angle of the first energy beam so that a first irradiation position moves on the surface of the object along a surface of the object; and a second deflection member that changes a deflection angle of the second energy beam so that a second irradiation position moves on the surface of the object along a surface of the object, the control apparatus controls the build apparatus to: irradiate a second position different from a first position with the second energy beam at a first time at which the first position is irradiated with the first energy beam; irradiate a third position different from the first position and the second position with the first energy beam at a second time different from the first time; and irradiate the third position with the second energy beam at a third time different from the second time.

An eighth aspect provides a build system including: a build apparatus that includes an irradiation optical system configured to irradiate a surface of an object with a first energy beam and a second energy beam, and a material supply member configured to supply a build material to a melt pool formed by at least one of the first energy beam and the second energy beam; and a control apparatus that is configured to control the build apparatus, wherein the irradiation optical system includes: a first deflection member that changes a deflection angle of the first energy beam so that a first irradiation position moves on the surface of the object along a surface of the object; and a second deflection member that changes a deflection angle of the second energy beam so that a second irradiation position moves on the surface of the object along a surface of the object, the control apparatus controls the build apparatus to: irradiate a third position with the first energy beam at a second time; irradiate the third position with the second energy beam at a third time different from the second time; irradiate a fourth position different from the third position with the first energy beam at a fourth time different from the second time and the third time; and irradiate the fourth position with the second energy beam at a fifth time different from the second time, the third time, and the fourth time.

A ninth aspect provides a build system including: a build apparatus that includes an irradiation optical system configured to irradiate a surface of an object with a first energy beam and a second energy beam, and a material supply member configured to supply a build material to a melt pool formed by at least one of the first energy beam and the second energy beam; and a control apparatus that is configured to control the build apparatus, wherein the irradiation optical system includes: a first deflection member that changes a deflection angle of the first energy beam so that a first irradiation position moves on the surface of the object along a surface of the object; and a second deflection member that changes a deflection angle of the second energy beam so that a second irradiation position moves on the surface of the object along a surface of the object, the control apparatus controls the build apparatus to: irradiate the fifth position with the first energy beam at a sixth time; irradiate the fifth position with the first energy beam at a seventh time different from the sixth time; irradiate a sixth position different from the fifth position with the second energy beam at an eighth time different from the sixth time and the seventh time; and irradiate the sixth position with the second energy beam at a ninth time different from the sixth time, the seventh time, and the eighth time.

A tenth aspect provides a build system including: a build apparatus that includes an irradiation optical system configured to irradiate a surface of an object with an energy beam, a material supply member configured to supply a build material to a melt pool formed by the energy beam, and a build head including at least a part of the irradiation optical system; a position change apparatus that is configured to change a relative positional relationship between the build head and the object; and a control apparatus, wherein the control apparatus controls the irradiation optical system so that an irradiation position, which is irradiated with the energy beam, moves along a second direction intersecting a first direction in a first section in a first period in a period in which the positional relationship along the first direction is changed, the control apparatus controls the irradiation optical system that the irradiation position, which is irradiated with the energy beam, moves along the second direction intersecting the first direction in a second section different from the first section in a second period different from the first period.

A eleventh aspect provides a build system including: a build apparatus that includes an irradiation optical system configured to irradiate a surface of an object with a first energy beam and a second energy beam, and a material supply member configured to supply a build material to a melt pool formed by at least one of the first energy beam and the second energy beam; and a control apparatus that is configured to control the build apparatus, wherein the control apparatus is configured to control a heat amount per unit area that is transferred from at least one of the first energy beam and the second energy beam based on build path information related to a path along which the build apparatus performs a building.

A twelfth aspect provides a build system that is a build apparatus including: an irradiation optical system that is configured to irradiate a surface of an object with a first energy beam and a second energy beam; a material supply member that is configured to supply a build material to a melt pool formed by at least one of the first energy beam and the second energy beam; and a build head that includes at least a part of the irradiation optical system, wherein the irradiation optical system includes: a first deflection member that deflects the first energy beam; a second deflection member that deflects the second energy beam; and a condensing member that condenses the first energy beam deflected by the first deflection member and the second energy beam deflected by the second deflection member, the build head includes: a first change apparatus that changes a position or an orientation of the first deflection member to change an irradiation position of the first energy beam; and a second change apparatus that changes a position or an orientation of the second deflection member to change an irradiation position of the second energy beam.

An operation and another advantage of the present invention will be apparent from an example embodiment described below.

### Brief Description of Drawings

[FIG. 1] FIG. 1 is a cross-sectional view that illustrates a configuration of a build system in a present example embodiment.
[FIG. 2] FIG. 2 is a block diagram that illustrates a system configuration of the build system in the present example embodiment.
[FIG. 3] FIG. 3 is a perspective view that illustrates a configuration of an irradiation optical system.
[FIG. 4] Each of FIG. 4A to FIG 4E is a cross-sectional view that illustrates an aspect in which a certain area on a workpiece is irradiated with a build light and a build material are supplied thereto.
[FIG. 5] Each of FIG. 5A to FIG. 5C is a cross-sectional view that illustrates a process for building a 3D structural object.
[FIG. 6] FIG. 6A is a planar view that illustrates a movement trajectory of a build unit area on a build surface, FIG. 6B is a planar view that illustrates a movement trajectory of a target irradiation area in the build unit area, and FIG. 6C is a planar view that illustrates a movement trajectory of the target irradiation area on the build surface.
[FIG. 7] Each of FIG. 7A to FIG. 7E is a graph that illustrates a characteristic of the build light with which an outer area is irradiated and a characteristic of the build light with which an inner area is irradiated.
[FIG. 8] FIG. 8 is a planar view that illustrates the movement trajectory of the target irradiation area on the build surface,
[FIG. 9] FIG. 9 is a cross-sectional view that illustrates the build light with which the build surface, which is an inclined surface, is irradiated.
[FIG. 10] FIG. 10 is a cross-sectional view that illustrates the build light with which the build surface, which is the inclined surface, is irradiated.
[FIG. 11] FIG. 11 is a cross-sectional view that illustrates the build light with which the build surface, which is set at an edge of the workpiece or near the edge, is irradiated.
[FIG. 12] FIG. 12 is a cross-sectional view that illustrates the build light with which the build surface, which is set on the workpiece whose thickness varies, is irradiated.
[FIG. 13] FIG. 13A is a planar view that illustrates the movement trajectory of the target irradiation area in the build unit area, and FIG. 13B is a planar view that illustrates the movement trajectory of the target irradiation area on the build surface.
[FIG. 14] Each of FIG. 14A and FIG. 14B is a planar view that illustrates the movement trajectory of the target irradiation area in the build unit area, and FIG. 14C is a planar view that illustrates the movement trajectory of the target irradiation area on the build surface.
[FIG. 15] Each of FIG. 15A to FIG. 15i is a planar view that illustrates a position of the target irradiation area in the build unit area.
[FIG. 16] FIG. 16 is a planar view that illustrates the movement trajectory of the target irradiation area in the build unit area.
[FIG. 17] FIG. 17 is a planar view that illustrates the movement trajectory of the target irradiation area in the build unit area.
[FIG. 18] FIG. 18 is a planar view that illustrates the movement trajectory of the target irradiation area in the build unit area.
[FIG. 19] FIG. 19 is a planar view that illustrates the movement trajectory of the target irradiation area in the build unit area.
[FIG. 20] FIG. 20 is a planar view that illustrates the movement trajectory of the target irradiation area in the build unit area.
[FIG. 21] FIG. 21 is a planar view that illustrates the movement trajectory of the target irradiation area in the build unit area.
[FIG. 22] FIG. 22 is a table that illustrates one example of a phase amount indicating an initial position of the target irradiation area.
[FIG. 23] FIG. 23 is a table that illustrates one example of the phase amount indicating an initial position of the target irradiation area.
[FIG. 24] FIG. 24 is a planar view that illustrates the movement trajectory of the target irradiation area in the build unit area.
[FIG. 25] Each of FIG. 25A and FIG. 25B is a planar view that illustrates a relationship between a size of the build unit area and a spot diameter of the build light.
[FIG. 26] Each of FIG. 26A and FIG. 26B is a planar view that illustrates a relationship between the size of the build unit area and a pitch of the movement trajectory of the target irradiation area.
[FIG. 27] FIG. 27 is a planar view that illustrates a relationship between the build unit area and the spot diameter of the build light.
[FIG. 28] FIG. 28 illustrates heat amount distribution information.
[FIG. 29] FIG. 29 illustrates an intensity correction map.
[FIG. 30] FIG. 30 is a cross-sectional view that illustrates an irradiation position of the build light.
[FIG. 31] FIG. 31 is a cross-sectional view that illustrates an irradiation position of the build light.
[FIG. 32] FIG. 32 is a cross-sectional view that illustrates an irradiation position of the build light.
[FIG. 33] FIG. 33 is a cross-sectional view that illustrates an irradiation position of the build light.
[FIG. 34] Each of FIG. 34Ato FIG. 34C is a planar view that illustrates a positional relationship between a plurality of areas on the build surface on which the build unit area is set.
[FIG. 35] Each of FIG. 35A to FIG. 35C is a planar view that illustrates the positional relationship between the plurality of areas on the build surface on which the build unit area is set.
[FIG. 36] Each of FIG. 36A to FIG. 36C is a planar view that illustrates the positional relationship between the plurality of areas on the build surface on which the build unit area is set.
[FIG. 37] Each of FIG. 37Ato FIG. 37D is a planar view that illustrates a positional relationship between the build unit area and a target supply area.
[FIG. 38] FIG. 38Ais a cross-sectional view that illustrates a material nozzle, and FIG. 38B is a planar view that illustrates the material nozzle.
[FIG. 39] FIG. 39 is a planar view that illustrates the material nozzle.
[FIG. 40] FIG. 40A is a cross-sectional view that illustrates the material nozzle, and FIG. 40B is a planar view that illustrates the material nozzle.
[FIG. 41] FIG. 41 is a cross-sectional view that illustrates a configuration of the irradiation optical system in a first modified example.

### Description of Example embodiments

Next, with reference to drawings, an example embodiment of a build system will be described. In the below-described description, the example embodiment of the build system will be described by using a build system SYS that is configured to process a workpiece W that is one example of an object. Especially, in the below-described description, the example embodiment of the build system will be described by using the build system SYS that is configured to perform an additive manufacturing based on a Laser Metal Deposition (LMD). The additive manufacturing based on the Laser Metal Deposition is an additive manufacturing for building a build object that is integrated with or separatable from the workpiece W by melting a build material M supplied to the workpiece W with build light EL (namely, an energy beam in a form of light).

Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below-described description, a positional relationship of various components included in the build system SYS will be described by using an XYZ rectangular coordinate system that is defined by a X-axis, a Y-axis and a Z-axis that are orthogonal to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Build System SYS

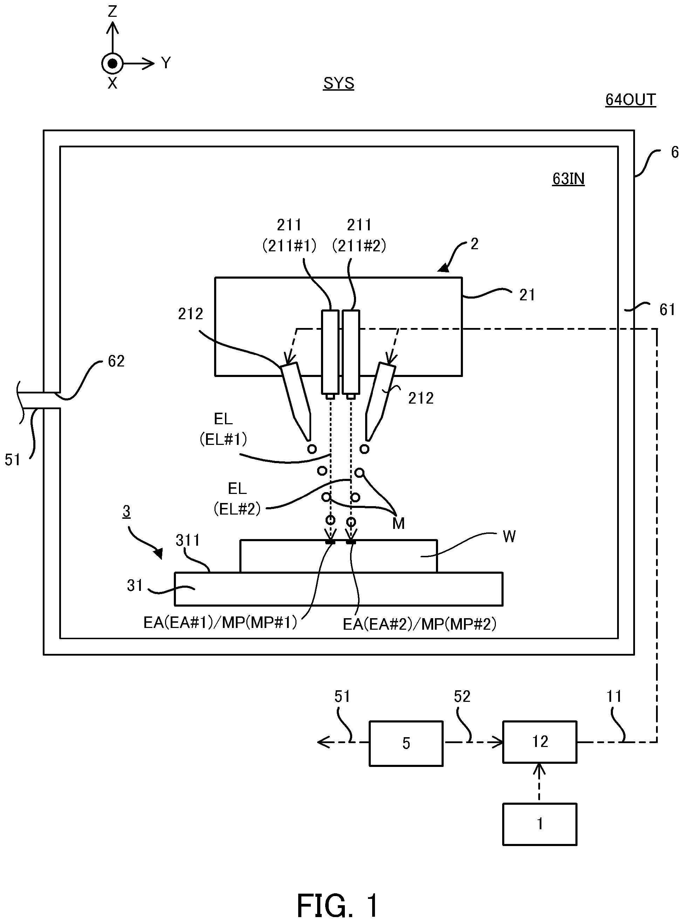

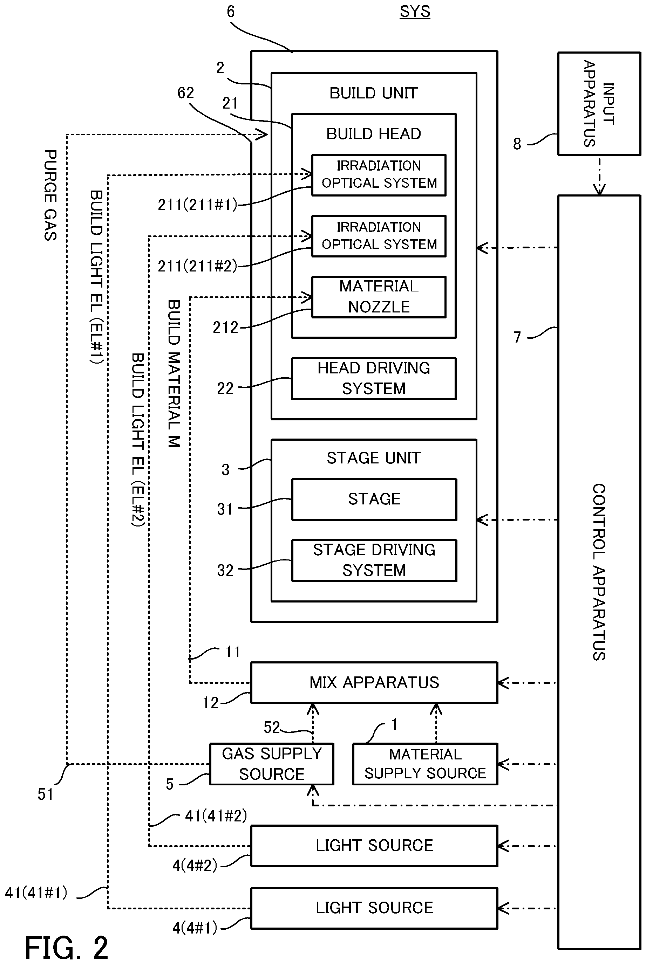

Firstly, with reference to FIG. 1 and FIG. 2, a configuration of the build system SYS in the present example embodiment will be described. FIG. 1 is a cross-sectional view that schematically illustrates the configuration of the build system SYS in the present example embodiment. FIG. 2 is a system configuration diagram that illustrates one example of a system configuration of the build system SYS in the present example embodiment.

The build system SYS is configured to perform the additive manufacturing on the workpiece W. The build system SYS is configured to build the build object integrated with (alternatively, separatable from) the workpiece W by performing the additive manufacturing on the workpiece W. In this case, the additive manufacturing performed on the workpiece W corresponds to a processing for adding, to the workpiece W, the build object integrated with (alternatively, separatable from) the workpiece W. Note that the build object in the present example embodiment may mean any object built by the build system SYS. For example, the build system SYS is configured to build a three-dimensional structural object ST (namely, a three-dimensional object having a magnitude (a size) in each of three-dimensional directions, a solid object, in other words, an object having a magnitude (a size) in the X-axis direction, the Y-axis direction, and the Z-axis direction).

In a case where the workpiece W is a below-described stage 31, the build system SYS is configured to perform the additive manufacturing on the stage 31. In a case where the workpiece W is a placed object that is an object placed on the stage 31, the build system SYS is configured to perform the additive manufacturing on the placed object. The placed object placed on the stage 31 may be another three-dimensional structural object ST built by the build system SYS (namely, an existing structural object). Note that FIG. 1 illustrates an example in which the workpiece W is the existing structural object held by the stage 31. Moreover, in the below-described description, the example in which the workpiece W is the existing structural object held by the stage 31 will be described.

The workpiece W may be an item that needs to be repaired having a missing part. In this case, the build system SYS may perform a repair processing for repairing the item that needs to be repaired by performing the additive manufacturing for building the build object for filling in the missing part. Namely, the additive manufacturing performed by the build system SYS may include the additive manufacturing for adding, to the workpiece W, the build object for filling in the missing part.

As described above, the build system SYS is configured to perform the additive manufacturing based on the Laser Metal Deposition. Namely, it can be said that the build system SYS is a 3D printer that builds an object by using an Additive layer manufacturing technique. Note that the Additive layer manufacturing technique may be referred to as a Rapid Prototyping, a Rapid Manufacturing or an Additive Manufacturing.

The build system SYS performs the additive manufacturing by processing the build material M with the build light EL that is an energy beam. The build material M is a material that is molten by an irradiation with the build light EL having a predetermined intensity or more intensity. At least one of a metal material and a resin material is usable as the build material M, for example. However, another material that is different from the metal material and the resin material may be used as the build material M. The build material M is a powder-like or grain-like material. Namely, the build material M is a powdery material. However, the build material M may not be the powdery material. For example, at least one of a wired-like build material and a gas-like build material may be used as the build material M.

In order to perform the additive manufacturing, the build system SYS includes a material supply source 1, a build unit 2, a stage unit 3, a light source 4, a gas supply source 5, and a control apparatus 7, as illustrated in FIG. 1 to FIG. 2. The build unit 2 and the stage unit 3 may be contained in a chamber space 63IN in a housing 6.

The material supply source 1 is configured to supply the build material M to the build unit 2. The material supply source 1 supplies, to the build unit 2, the build material M the amount of which is necessary for performing the additive manufacturing per unit time by supplying the build material M the amount of which is based on the necessary amount.

The build unit 2 builds the build object by processing the build material M supplied from the material supply source 1. In order to build the build object, the build unit 2 include a build head 21, and a head driving system 22. Furthermore, the build head 21 includes a plurality of irradiation optical systems 211, and a plurality of material nozzles 212 (namely, supply systems that supply the build material M). However, the build head 21 may include a single irradiation optical system 211. The build head 21 may include a single material nozzle 212. In the below-described description, an example in which the build head 21 includes two irradiation optical systems 211 will be described. In a case where it is necessary to distinguish the two irradiation optical systems 211, one of the two irradiation optical systems 211 is referred to as an "irradiation optical system 211#1" and the other one of the two irradiation optical systems 211 is referred to as an "irradiation optical system 211#2" , as necessary.

The irradiation optical system 211 is an optical system (for example, a condensing optical system) for emitting the build light EL from an emission part. Specifically, the irradiation optical system 211 is optically connected to the light source 4 that generates the build light EL through a light transmitting member 41 such as an optical fiber and light pipe. In the example illustrated in FIG. 2, the build system SYS includes two light sources 4 (specifically, light sources 4#1 and 4#2), and the irradiation optical systems 211#1 and 211#2 are optically connected to the light sources 4#1 and 4#2 through the light transmitting members 41#1 and 41#2, respectively. The irradiation optical systems 211#1 emits the build light EL transmitted from the light source 4#1 through the light transmitting member 41#1. The irradiation optical system 211#2 emits the build light EL transmitted from the light source 4#2 through the light transmitting member 41#2. In the below-described description, in a case where it is necessary to distinguish the two build lights EL emitted from the two irradiation optical systems 211, the build light EL emitted from the irradiation optical system 211#1 is referred to as "build light EL#1", and the build light EL emitted from the irradiation optical system 211#2 is referred to as "build light EL#2", as necessary.

The irradiation optical system 211 emits the build light EL in a downward direction (namely, toward a -Z side) from the irradiation optical system 211. The stage 31 is disposed below the irradiation optical system 211. In a case where the workpiece W is placed on the stage 31, the irradiation optical system 211 irradiates the workpiece W (especially, a surface of the workpiece W) with the emitted build light EL. Specifically, the irradiation optical system 211 is configured to irradiate a target irradiation area (a target irradiation position) EA, which is set on the workpiece W or near the workpiece W as an area that is irradiated with the build light EL (typically, in which the light is condensed), with the build light EL. In the below-described description, in a case where it is necessary to distinguish two target irradiation areas EA that are irradiated with build light EL by the two irradiation optical systems 211, respectively, the target irradiation area EA that is irradiated with the build light EL by the irradiation optical system 211#1 is referred to as a "target irradiation area EA#1" and the target irradiation area EA that is irradiated with the build light EL by the irradiation optical system 211#2 is referred to as a "target irradiation area EA#2", as necessary. Furthermore, a state of the irradiation optical system 211 is switchable between a state where the target irradiation area EA is irradiated with the build light EL and a state where the target irradiation area EA is not irradiated with the build light EL under the control of the control apparatus 7. Note that a direction of the build light EL emitted from the irradiation optical system 211 is not limited to a direct downward direction (namely, coincident with the -Z-axis direction), and may be a direction that is inclined with respect to the Z-axis by a predetermined angle, for example.

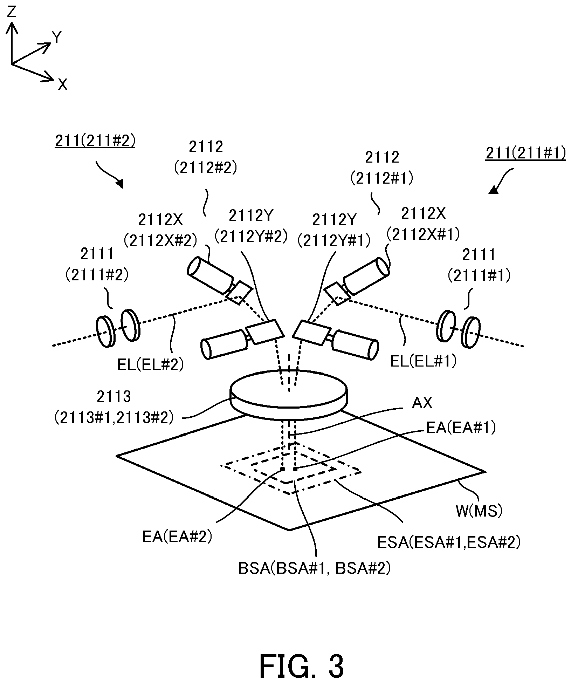

One example of a configuration of the irradiation optical system 211 is illustrated in FIG. 3. As illustrated in FIG. 3, the irradiation optical system 211 may include a state control optical system 2111, a Galvano mirror 2112, and an fθ lens 2113. Specifically, irradiation optical systems 211#1 may include a state control optical systems 2111#1, a Galvano mirror 2112#1, and a fθ lens 2113#1. The irradiation optical system 211#2 may include a state control optical system 2111#2, a Galvano mirror 2112#2, and a fθ lens 2113#2. However, the fθ lens 2113#1 of the irradiation optical system 211#1 may be used as the fθ lens 2113#2 of the irradiation optical system 211#2. Namely, the irradiation optical systems 211#1 and 211#2 may share a single fθ lens 2113. In the below-described description, an example in which the irradiation optical systems 211#1 and 211#2 share the single fθ lens 2113 will be described. In this case, the build head 21 may be considered to include the fθ lens 2113 separately from the irradiation optical system 211#1 including the state control optical system 2111#1 and the Galvano mirror 2112#1 and the irradiation optical system 211#2 including the state control optical system 2111#2 and the Galvano mirror 2112#2.

In the below-described description, the configuration of the irradiation optical system 211#1 will be mainly described in order to omit a redundant description. However, the below-described description of the configuration of the irradiation optical system 211#1 may be used as the description of the configuration of the irradiation optical system 211#2 by replacing the reference sing "#1" with the reference sing "#2". Moreover, in the below-described description, in a case where it is not necessary to distinguish the state control optical systems 2111#1 and 2111#2, each of the state control optical systems 2111#1 and 2111#2 is collectively referred to as the state control optical system 2111. Similarly, in a case where it is not necessary to distinguish the Galvano mirrors 2112#1 and 2112#2, each of the Galvano mirrors 2112#1 and 2112#2 is collectively referred to as Galvano mirror 2112.

The state control optical system 2111#1 is an optical system configured to control a state of the build light EL#1 emitted from the irradiation optical system 2111#1. For example, the state control optical system 2111#1 may include a focus control optical system configured to control (for example, change) a condensed position (namely, a converged position) of the build light EL#1. The focus control optical system may include, for example, a plurality of lenses aligned along a propagating direction of the build light EL#1. In this case, the condensed position of the build light EL#1 may be changed by moving at least one of the plurality of lenses along its optical axis direction. Moreover, the state control optical system 2111#1 may include an intensity control optical system configured to control (for example, change) an intensity of the build light EL#1. The intensity control optical system may include a shutter configured to shield or a filter configured to attenuate at least a part of the build light EL#1. However, the irradiation optical system #1 may not include the state control optical system 2111#1.

The build light EL#1 that has passed through the state control optical system 2111#1 enters the Galvano mirror 2112#1. The Galvano mirror 2112 changes an exit direction of the build light EL#1 from the Galvano mirror 2112#1 by deflecting the build light EL#1 (namely, changing a deflection angle (an exit angle) of the build light EL#1). Therefore, the Galvano mirror 2112#1 may be referred to as a deflection member. When the exit direction of the build light EL#1 from the Galvano mirror 2112#1 is changed, a position from which the build light EL#1 is emitted from the build head 21 is changed. When the position from which the build light EL#1 is emitted from the build head 21 is changed, the target irradiation area EA#1 that is irradiated with the build light EL#1 on the surface of the workpiece W (more specifically, a build surface MS described below on which the additive manufacturing is performed) is moved. Namely, the irradiation position that is irradiated with the build light EL#1 on the build surface MS moves. In other words, the build light EL#1 moves on the build surface MS.

The Galvano mirror 2112#1 includes, for example, an X scanning mirror 2112X#1 and a Y scanning mirror 2112Y#1. Note that each of the X scanning mirror 2112X#1 and the Y scanning mirror 2112Y#1 may be referred to as a Galvano mirror. Each of the X scanning mirror 2112X#1 and the Y scanning mirror 2112Y#1 is an inclined angle variable mirror whose angle relative to an optical path of the build light EL#1 entering each mirror is changeable. The X scanning mirror 2112X#1 reflects the build light EL#1 toward the Y scanning mirror 2112Y#1. The X scanning mirror 2112X#1 is swingable or rotatable around an rotational axis along the Y-axis. The build surface MS is scanned with the build light EL#1 along the X-axis due to the swinging or the rotation of the X scanning mirror 2112X#1. The target irradiation area EA#1 moves along the X-axis on the build surface MS due to the swinging or the rotation of the X scanning mirror 2112X#1. The Y scanning mirror 2112Y#1 reflects the build light EL#1 toward the fθ lens 2113. The Y scanning mirror 2112 Y#1 is swingable or rotatable around an rotational axis along the X-axis. The build surface MS is scanned with the build light EL#1 along the Y - axis due to the swinging or the rotation of the Y scanning mirror 2112 Y#1. The target irradiation area EA#1 moves along the Y -axis on the build surface MS due to the swinging or the rotation of the Y scanning mirror 2112 Y#1.

The Galvano mirror 2112#1 allows the build light EL#1 to scan a build shot area ESA that is defined based on the irradiation optical systems 211#1. The irradiation optical systems 211 is configured to irradiate the build shot area ESA, which is defined based on the irradiation optical systems 211#1, with the build light EL#1. The target irradiation area EA#1 is movable in the build shot area ESA that is defined based on the irradiation optical systems 211#1. Incidentally, in the below-described description, the build shot area ESA that is scannable with the build light EL#1 is referred to as a "build shot area ESA#1" and the build shot area ESA that is scannable with the build light EL#2 is referred to as a "build shot area ESA#2", as necessary. The build shot area ESA#1 and the build shot area ESA#2 may be common areas defined on the same build surface MS. Typically, the build shot area ESA#1 and the build shot area ESA#2 are coincident with each other. Therefore, in the below-described description, in a case where it is not necessary to distinguish the build shot area ESA#1 and the build shot area ESA#2, the build shot area ESA#1 and the build shot area ESA#2 are collectively referred to as the build shot area ESA. However, the build shot area ESA#1 and the build shot area ESA#2 may be at least partially different from each other. Incidentally, in a case where the build shot area ESA#1 and the build shot area ESA#2 are coincident with each other or in a case where the build shot area ESA#1 and the build shot area ESA#2 partially overlap with each other, directions of the build lights EL#1 and EL#2 that are emitted from the irradiation optical systems 211#1 and 211#2, respectively, may be a direction that is inclined with respect to the Z-axis at a predetermined angle, and an optical axis of the irradiation optical system 211#1 on the build surface MS side (typically, an optical axis of the condensing optical system (the fθ lens 2113) of the irradiation optical system 211#1) may intersect an optical axis of the irradiation optical system 211#2 on the build surface MS side (typically, an optical axis of the condensing optical system (the fθ lens 2113) of the irradiation optical systems 211#2) on or near the build surface MS.

More specifically, the target irradiation area EA#1 is movable along the X-axis direction in the build shot area ESA#1 by the X scanning mirror 2112X#1. Furthermore, the target irradiation area EA#1 is movable along the Y-axis direction in the build shot area ESA#1 by the Y scanning mirror 2112Y#1. Furthermore, as described above, the condensed position of the build light EL#1 is changeable along the Z-axis direction by the state control optical system 211#1. Therefore, the irradiation optical system 211#1 is configured to move the irradiation position of the build light EL#1 in the build shot area ESA#1 (specifically, the position of the target irradiation area EA#1 in each of the X-axis direction and the Y-axis direction and the condensed position in the Z-axis direction) along each of the X-axis direction, the Y-axis direction, and the Z-axis direction. Namely, the irradiation optical system 211#1 is configured to move the build light EL along each of the X-axis direction, the Y-axis direction, and the Z-axis direction in the build shot area ESA#1.

The build shot area ESA#1 represents a maximum area (in other words, a maximum range) in which the build head 21 is allowed to perform the additive manufacturing by using the build light EL#1 in a state where a positional relationship between the irradiation optical systems 211#1 and the build surface MS is fixed (namely, is not changed). Typically, the build shot area ESA#1 may be coincident with a maximum scanning range of the build light EL#1 that is deflected by the Galvano mirror 2112#1 in a state where the positional relationship between the irradiation optical systems 211#1 and the build surface MS is fixed. Namely, the build shot area ESA#1 may be an area determined based on an effective movable range of the Galvano mirror 2112#1. Since the build surface MS is irradiated with the build light EL#1 through the fθ lens 2113, the build shot area ESA#1 may be an area defined based on an optical effective range of the fθ lens 2113.

The build shot area ESA#1 may be defined in a plane orthogonal to the optical axis AX of the irradiation optical systems 211#1. The optical axis AX of the irradiation optical systems 211#1 is an axis along the propagating direction of the build light EL#1 with which the build surface MS is irradiated. The optical axis AX of the irradiation optical systems 211#1 may be the optical axis of the fθ lens 2113. Alternatively, in a case where the propagating direction of the build light EL is changed by a deflection member such as a mirror after the build light EL is emitted from the fθ lens 2113, the optical axis AX of the irradiation optical systems 211#1 may be different from the optical axis of the fθ lens 2113. In the below-described description, an example in which the optical axis AX is an axis along the Z-axis will be described.

The build head 21 may perform the additive manufacturing in a build unit area BSA set in the build shot area ESA#1. In the below-described description, the build unit area BSA set in the build shot area ESA#1 is referred to as a "build unit area BSA#1" and the build unit area BSA set in the build shot area ESA#2 is referred to as a "build unit area BSA#2" as necessary. Typically, the build unit area BSA#1 and the build unit area BSA#2 are coincident with each other. Therefore, in the below-described description, in a case where it is not necessary to distinguish build unit area BSA#1 and the build unit area BSA#2, the build unit area BSA#1 and the build unit area BSA#2 are collectively referred to as the build unit area BSA. However, the build unit area BSA#1 and the build unit area BSA#2 may be at least partially different from each other.

The build unit area BSA#1 represents an area (in other words, a range) in which the build head 21 actually performs the additive manufacturing by using the build light EL#1 in a state where the positional relationship between the irradiation optical systems 211#1 and the build surface MS is fixed (namely, is not changed). Namely, the build head 21 may perform the additive manufacturing in the entire surface of the build unit area BSA#1. The build unit area BSA#1 represents an area (in other words, a range) that is actually scanned by the build head 21 with the build light EL#1 in a state where the positional relationship between the irradiation optical systems 211#1 and the build surface MS is fixed (namely, is not changed). The build unit area BSA#1 represents an area (in other words, a range) in which the target irradiation area EA#1 actually moves in a state where the positional relationship between the irradiation optical systems 211#1 and the build surface MS is fixed (namely, is not changed). This build unit area BSA#1 is coincident with at least a part of the build shot area ESA#1. For example, the build unit area BSA#1 may be coincident with the build shot area ESA#1. Alternatively, the build unit area BSA#1 may be coincident with a part of the build shot area ESA#1. Namely, the build unit area BSA#1 may be smaller than the build shot area ESA#1. In this case, an area that is scanned with the build light EL#1 is smaller and therefore the build unit area BSA#1 is smaller as a rotational amount of the Galvano mirror 2112#1 is smaller (namely, the rotational angle of the Galvano mirror 2112#1 is smaller). Therefore, the irradiation optical system 211#1 may set the build unit area BSA#1 having a desired size in the build shot area ESA#1 by controlling the rotational amount of the Galvano mirror 2112#1 (more specifically, the rotational amounts of the X scanning mirror 2112X#1 and the Y scanning mirror 2112Y#1) under the control of the control apparatus 7.

In an example illustrated in FIG. 3, a shape of the build unit area BSA#1 is a rectangular shape. However, the shape of the build unit area BSA#1 may be different from the rectangular shape (for example, a circular shape, an oval shape, or a polygonal shape). In a case where the rectangle shape is used as the shape of the build unit area BSA#1, a corner of the rectangle may be rounded. A size of the build unit area BSA#1 in the X-axis direction and the Y-axis direction may be several millimeters. However, the size of the build unit area BSA#1 is not limited to the several millimeters. The same may be applied to a shape of the build shot area ESA#1.

In a case where the build surface MS is irradiated with the build light EL#1 in a unit of the build unit area BSA#1, the build unit area BSA#1 is scanned by the Galvano mirror 2112#1 with the build light EL#1. Therefore, compared to a case where the build surface MS is irradiated with the build light EL#1 without using the Galvano mirror 2112#1, there is a lower possibility that an amount of heat transferred from the build light EL#1 to the build unit area BSA#1 varies in the build unit area BSA#1. Namely, it is possible to uniform the amount of the heat transferred from the build light EL#1 to the build unit area BSA#1. As a result, the build system SYS can build the build object on the build surface MS with relatively high build accuracy. The same is true in a case where the build surface MS is irradiated with the build light EL#2 in units of the build unit area BSA#2.

However, the build system SYS may not irradiate the build surface MS with the build light EL#1 in units of the build unit area BSA#1. The build system SYS may irradiate the build surface MS with the build light EL#1 without using the Galvano mirror 2112#1. In this case, the target irradiation area EA#1 may move on the build surface MS due to a movement of at least one of the build head 21 and the stage 31. The same may be applied to the build light EL#2.

The fθ lens 2113 is an optical system for emitting the build light EL#1 from the Galvano mirror 2112#1 toward the build surface MS. Especially, the fθ lens 2113#1 is an optical element configured to condense the build light EL#1 from the Galvano mirror 2112#1 on a condensing plane. Therefore, the fθ lens 2113 may be referred to as a condensing member. The condensing plane of the fθ lens 2113 may be set, for example, on the build surface MS. Note that the irradiation optical system 211#1 may include a condensing member (a condensing optical system) that is different from the fθ lens 2113.

Incidentally, the build head 21 may include a part of the irradiation optical system 211#1 and another part of the irradiation optical system 211#1 may be disposed outside the build head 21. Similarly, while the build head 21 may include a part of the irradiation optical systems 211#2 and another part of the irradiation optical systems 211#2 may be disposed outside of the build head 21.

Again in FIG. 1 and FIG. 2, the material nozzle 212 supplies (for example, injects, jets, blows out or sprays) the build material M. Thus, the material nozzle 212 may be referred to as a material supply member. The material nozzle 212 is physically connected to the material supply source 1, which is a supply source of the build material M, through a supply pipe 11 and a mix apparatus 12. The material nozzle 212 supplies the build material M supplied from the material supply source 1 through the supply pipe 11 and the mix apparatus 12. The material nozzle 212 may pressure-feed the build material M supplied from the material supply source 1 through the supply pipe 11. Namely, the build material M from the material supply source 1 and gas for feeding (namely, pressure-feed gas, and inert gas such as Nitrogen or Argon, for example) may be mixed by the mix apparatus 12 and then pressure-fed to the material nozzle 212 through the supply pipe 11. As a result, the material nozzle 212 supplies the build material M together with the gas for feeding. Purge gas supplied from the gas supply source 5 is used as the gas for feeding, for example. However, gas supplied from a gas supply source that is different from the gas supply source 5 may be used as the gas for feeding. Note that the material nozzle 212 is illustrated to have a tube-like shape in FIG. 1, however, a shape of the material nozzle 212 is not limited to this shape. The material nozzle 212 supplies the build material M in a downward direction (namely, toward the -Z side) from the material nozzle 212. The stage 31 is disposed below the material nozzle 212. In a case where the workpiece W is placed on the stage 31, the material nozzle 212 supplies the build material M toward the workpiece W or a vicinity of the workpiece W. Note that a supply direction of the build material M supplied from the material nozzle 212 is a direction that is inclined with respect to the Z-axis by a predetermined angle (as one example, an acute angle), however, it may be the -Z-axis direction (namely, a direct downward direction). In a case where the condensing optical system (the fθ lens 2113) of the irradiation optical systems 211#1 and the condensing optical system of the irradiation optical systems 211#2 are shared, the material nozzle 212 may be disposed to penetrate a vicinity of the optical axis of the condensing optical system (the fθ lens 2113).

In the present example embodiment, the material nozzle 212 supplies the build material M to the irradiation position of each of the build lights EL#1 and EL#2 (namely, each of the target irradiation areas EA#1 and EA#2). Thus, the material nozzle 212 and the irradiation optical systems 211#1 and 211#2 are aligned so that a target supply area MA, which is set on the workpiece W or in a vicinity of the workpiece W as an area to which the material nozzle 212 supplies the build material M, overlaps with the target irradiation areas EA#1 and EA#2 at least partially. The target supply area MA may be larger than, may be smaller than, or may have same size as at least one of the target irradiation areas EA#1 and EA#2.

As described above, the build unit areas BSA#1 and BSA#2 are irradiated with the build lights EL#1 and EL#2, respectively. Therefore, the material nozzle 212 may supply the build material M to at least a part of the build unit areas BSA#1 and BSA#2. The material nozzles 212 and the irradiation optical systems 211#1 and 211#2 may be aligned so that the target supply area MA overlaps at least partially with the build unit areas BSA#1 and BSA#2. The target supply area MA may be larger than, may be smaller than, or may have same size as at least one of the build unit areas BS #1 and BSA#2.

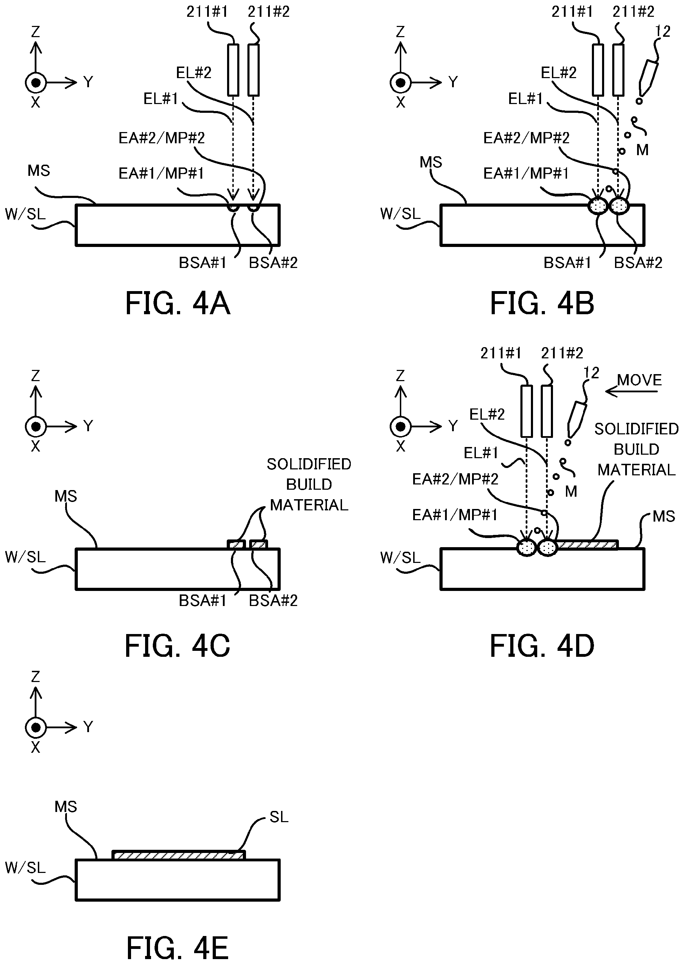

The material nozzle 212 may supply the build material M to a melt pool MP (see FIG. 4 and so on described below) formed by the irradiation of the build light EL. In the below-described description, the melt pool MP formed by the irradiation of the build light EL#1 is referred to as a "melt pool MP#1", and the melt pool MP formed by the irradiation of build light EL#2 is referred to as a "melt pool MP#2". In this case, the material nozzle 212 may supply the build material M to the melt pool MP#1 formed in the build unit area BSA#1 by supplying the build material M to the build unit area BSA#1. Similarly, the material nozzle 212 may supply the build material M to the melt pool MP#2 formed in the build unit area BSA#2 by supplying the build material M to the build unit area BSA#2. However, the material nozzle 212 may not supply the build material M to the melt pool MP. For example, the build system SYS may melt the build material M by the irradiation optical system 211 before the build material M from the material nozzle 212 reaches the workpiece W and may make the molten build material M adhere to the workpiece W.

The head driving system 22 moves the build head 21 under the control of the control apparatus 7. Namely, the head driving system 22 moves the irradiation optical systems 211#1 and 211#2 and the material nozzle 212 under the control of the control apparatus 7. The head driving system 22 moves the build head 21 along at least one of the X-axis direction, the Y-axis direction, the Z-axis direction, the θX direction, the θY direction, and the θZ direction, for example. Incidentally, an operation for moving the build head 21 along at least one of the θX direction, the θY direction, and the θZ direction may be considered to be equivalent to an operation for rotating the build head 21 around at least one of a rotational axis along the X-axis, a rotational axis along the Y-axis, and a rotational axis along the Z-axis.

When the head driving system 22 moves the build head 21, the relative positional relationship between the build head 21 and each of the stage 31 and the workpiece W placed on the stage 31 changes. Namely, the relative positional relationship between the build head 21 and each of the stage 31 and the workpiece W changes in at least one of the X-axis direction, the Y-axis direction, the Z-axis direction, the θX direction, the θY direction, and the θZ direction. As a result, the relative positional relationship between the workpiece W and each of the target irradiation areas EA#1 and EA#2 and the target supply area MA also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS). In this case, the head driving system 22 may be considered to move the build head 21 so that each of the target irradiation areas EA#1 and EA#2 and the target supply area MA moves on the build surface MS. Furthermore, when the build head 21 moves, a relative positional relationship between the workpiece W and each of the build shot areas ESA#1 and ESA#2 and the build unit areas BSA#1 and BSA#2 also changes. Namely, each of the build shot areas ESA#1 and ESA#2 and each of the build unit areas BSA#1 and BSA#2 moves along at least one of the X-axis direction, the Y-axis direction, the Z-axis direction, the θX direction, the θY direction and the θZ direction on the surface of the workpiece W (more specifically, the build surface MS). In this case, the head driving system 22 may be considered to move the build head 21 so that each of the build shot areas ESA#1 and ESA#2 and each of the build unit areas BSA#1 and BSA#2 moves on the build surface MS. Note that the head driving system 22 may be referred to as a position change apparatus.

The stage unit 3 includes the stage 31 and a stage driving system 32.

The workpiece W is placed on the stage 31. Therefore, the stage 31 may be referred to as a placing apparatus. Specifically, the workpiece W is placed on a placement surface 311 that is at least a part of an upper surface of the stage. Usually, the placement surface 311 is a surface along the XY plane. The stage 31 is configured to support the workpiece W placed on the stage 31. The stage 31 may be configured to hold the workpiece W placed on the stage 31. In this case, the stage 31 may include at least one of a mechanical chuck, an electro-static chuck, and a vacuum chuck to hold the workpiece W. Alternatively, the stage 31 may not be configured to hold the workpiece W placed on the stage 31. In this case, the workpiece W may be placed on the stage 31 without a clamp. The above described irradiation optical systems 211#1 and 211#2 emit the build lights EL#1 and EL#2, respectively, in at least a part of a period during which the workpiece W is placed on the stage 31. Furthermore, the above described material nozzle 212 supplies the build material M in at least a part of the period during which the workpiece W is placed on the stage 31.

The stage driving system 32 moves the stage 31. For example, the stage driving system 32 moves the stage 31 along at least one of the X-axis direction, the Y-axis direction, the Z-axis direction, the θX direction, the θY direction and the θZ direction. Incidentally, an operation for moving the stage 31 along at least one of the θX direction, the θY direction, and the θZ direction may be considered to be equivalent to an operation for rotating the stage 31 around at least one of a rotational axis along the X-axis, a rotational axis along the Y-axis, and a rotational axis along the Z-axis.

When the stage driving system 32 moves the stage 31, the relative positional relationship between the build head 21 and each of the stage 31 and the workpiece W placed on the stage 31 changes. Namely, the relative positional relationship between the build head 21 and each of the stage 31 and the workpiece W changes in at least one of the X-axis direction, the Y-axis direction, the Z-axis direction, the θX direction, the θY direction, and the θZ direction. As a result, the relative positional relationship between the workpiece W and each of the target irradiation areas EA#1 and EA#2 and the target supply area MA also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS). In this case, the stage driving system 32 may be considered to move the stage 31 so that each of the target irradiation areas EA#1 and EA#2 and the target supply area MA moves on the build surface MS. Furthermore, when the stage 31 moves, the relative positional relationship between the workpiece W and the build shot areas ESA#1 and ESA#2 and the build unit areas BSA#1 and BSA#2 also changes. Namely, each of the build shot areas ESA#1 and ESA#2 and each of the build unit areas BSA#1 and BSA#2 moves along at least one of the X-axis direction, the Y-axis direction, the Z-axis direction, the θX direction, the θY direction and the θZ direction on the surface of the workpiece W (more specifically, the build surface MS). In this case, the stage driving system 32 may be considered to move the stage 31 so that each of the build shot areas ESA#1 and ESA#2 and each of the build unit areas BSA#1 and BSA#2 moves on the build surface MS. Note that the stage driving system 32 may be referred to as a position change apparatus.

The light source 4 emits at least one of an infrared light, a visible light and an ultraviolet light as the build light EL, for example. However, other type of light may be used as the build light EL. The build light EL may include a plurality of pulsed lights (namely, a plurality of pulsed beams). The build light EL may be a laser light. In this case, the light source 4 may include a semiconductor laser such as a laser light source (for example, a Laser Diode (LD)). At least one of a fiber laser, a CO₂ laser, a YAG laser, an Excimer laser and the like may be used as the laser light source. However, the build light EL may not be the laser light. The light source 4 may include any light source (for example, at least one of a LED (Light Emitting Diode), a discharge lamp and the like).

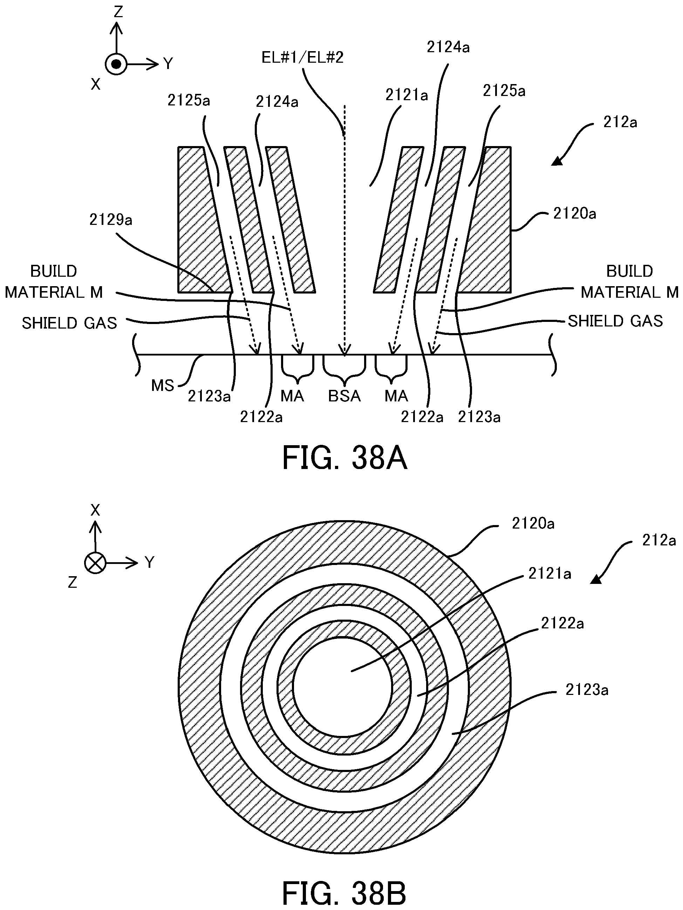

The gas supply source 5 is a source of purge gas for purging the chamber space 63IN in the housing 6. The purge gas includes inert gas. At least one of Nitrogen gas and Argon gas is one example of the inert gas. The gas supply source 5 is connected to the chamber space 63IN through a supply port 62 formed in a wall member 61 of the housing 6 and a supply pipe 51 connecting the gas supply source 5 to the supply port 62. The gas supply source 5 supplies the purge gas to the chamber space 63IN through the supply pipe 51 and the supply port 62. As a result, the chamber space 63IN becomes a space purged by the purge gas. The purge gas supplied to the chamber space 63IN may be discharged from an non-illustrated outlet port formed in the wall member 61. Note that the gas supply source 5 may be a tank that stores the inert gas such as the Nitrogen gas and the Argon gas. In a case where the purge gas is the Nitrogen gas, the gas supply source 5 may be a Nitrogen gas generation apparatus that generates the Nitrogen gas by using air as material. Incidentally, the purge gas from the gas supply source 5 is supplied to the supply port 62 opened in the chamber space 63IN to purge the entire chamber space 63IN in the housing 6, however, may be supplied from a supply port (not illustrated) formed in the build unit 2 to fill only a space near the target supply area MA with purge gas, in addition or instead. In this case, as described below, only the space near the target supply area MA may be filled with the purge gas by the material nozzle 212 that supplies the purge gas in a case where the build material M is pressure-fed by the purge gas, and only the space near the target supply area MA may be filled with the purge gas by disposing a supply port that supplies the purge gas in the nozzle member 212 (See FIG. 38 described below).

Incidentally, in a case where the additive manufacturing is performed in the chamber space 63IN, there is a possibility that fume gas is generated in the chamber space 63IN due to the additive manufacturing. In this case, the fumes gas generated in the chamber space 63IN may be discharged through a filter to the outside of the chamber space 63IN. In this case, the fume gas may be oxidized by jetting high-pressured air into the filter so that the high-pressured air is mixed with the fume gas.

In a case where the material nozzle 212 supplies the build material M together with the purge gas as described above, the gas supply source 5 may supply the purge gas to the mix apparatus 12 to which the build material M is supplied from the material supply source 1. Specifically, the gas supply source 5 may be connected to the mix apparatus 12 through a supply pipe 52 that connects the gas supply source 5 and the mix apparatus 12. As a result, the gas supply source 5 supplies the purge gas to the mix apparatus 12 through the supply pipe 52. In this case, the build material M from the material supply source 1 may be supplied (specifically, pressure-fed) to the material nozzle 212 through the supply pipe 11 by the purge gas supplied from the gas supply source 5 through the supply pipe 52. Namely, the gas supply source 5 may be connected to the material nozzle 212 through the supply pipe 52, the mix apparatus 12 and the supply pipe 11. In this case, the material nozzle 212 supplies the build material M together with the purge gas for pressure-feeding the build material M.

The control apparatus 7 is configured to control an operation of the build system SYS. For example, the control apparatus 7 may control the build unit 2 (for example, at least one of the build head 21 and the head driving system 22) of the build system SYS to perform the additive manufacturing on the workpiece W. For example, the control apparatus 7 may control the stage unit 3 (for example, stage driving system 32) of the build system SYS to perform the additive manufacturing on the workpiece W.

The control apparatus 7 may control the operation of the build system SYS based on build condition information that specifies a build condition of the build object by the build system SYS. The build condition information may be inputted to the control apparatus 7 through an input apparatus (an input unit) 8 of the build system SYS. The input apparatus 8 may include an operating apparatus (for example, at least one of a keyboard, a mouse, and a touch panel) that is operable by an operator of the build system SYS to input the build condition information. The input apparatus 8 may include a communication apparatus that is configured to receive the build condition information transmitted from an apparatus external to the build system SYS. The input apparatus 8 may include a recording medium reading apparatus that is configured to read the build condition information recorded on a recording medium that is attachable to the build system SYS.

The control apparatus 7 may include a calculation apparatus and a storage apparatus. The calculation apparatus may include at least one of a CPU (Central Build unit) and a GPU (Graphic Build unit), for example. The storage apparatus may include a memory. The control apparatus 7 serves as an apparatus for controlling the operation of the build system SYS by means of the calculation apparatus executing a computer program. The computer program is a computer program that allows the calculation apparatus to execute (namely, to perform) a below-described operation that should be executed by the control apparatus 7. Namely, the computer program is a computer program that allows the control apparatus 7 to function so as to make the build system SYS execute the below-described operation. The computer program executed by the calculation apparatus may be recorded in the storage apparatus (namely, a recording medium) of the control apparatus 7, or may be recorded in any recording medium (for example, a hard disk or a semiconductor memory) that is built in the control apparatus 7 or that is attachable to the control apparatus 7. Alternatively, the calculation apparatus may download the computer program that should be executed from an apparatus external to the control apparatus 7 through a network interface.

The control apparatus 7 may control an emitting aspect of the build light EL by the irradiation optical system 211. The emitting aspect may include at least one of the intensity of the build light EL and emitting timing of the build light EL, for example. In a case where the build light EL includes the plurality of pulsed lights, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control apparatus 7 may control a movement aspect of the build head 21 by the head driving system 22. The control apparatus 7 may control a movement aspect of the stage 31 by the stage driving system 32. The movement aspect may include at least one of a movement distance, a movement speed, a movement direction and a movement timing (a moving period), for example. Moreover, the control apparatus 7 may control a supply aspect of the build material M by the material nozzle 212. The supply aspect may include at least one of the supplied amount (especially, the supplied amount per unit time) and a supply timing (a supply period).

Incidentally, the build system SYS may include a Galvano control apparatus for controlling the Galvano mirrors 2112#1 and 2112#2, in addition to the control apparatus 7. The Galvano control apparatus may include a personal computer or the like that is connectable to the build system SYS. In this case, the personal computer or the like may serve as the Galvano control apparatus by executing a computer program installed in the personal computer. The control apparatus 7 for controlling the emission aspect of the build light EL and the Galvano control apparatus for controlling the Galvano mirrors 2112#1 and 2112#2 may control the emission aspect of the build light EL and the Galvano mirrors 2112#1 and 2112#2, respectively, in synchronization with each other.

The control apparatus 7 may control the intensity of the build light EL based on a first table indicating a correspondence relationship between the intensity of the build light EL and the irradiation position of the build light EL. In this case, the control apparatus 7 may synchronize the control of driving the light source 4 with the control of driving the Galvano mirror 2112 so that the irradiation position of the build light EL is coincident with the irradiation position indicated by the first table. The first table may be stored in advance in the storage apparatus.

The control apparatus 7 may control the intensity of the build light EL based on a second table indicating a correspondence relationship between an irradiation period of the build light EL and the irradiation position of the build light EL. In this case, the control apparatus 7 may synchronize the control of driving the light source 4 with the control of driving the Galvano mirror 2112 so that the irradiation period of the build light EL is synchronized with the irradiation period indicated by the second table. The second table may be stored in advance in the storage apparatus.

The first table may indicate a correspondence relationship between a correction amount of the intensity of the build light EL and the irradiation position of the build light EL. The second table may indicate a correspondence relationship between a correction amount of the intensity of the build light EL and the irradiation period of the build light EL. In this case, the control apparatus 7 may correct the intensity of the build light EL based on at least one of the first and second tables.

The control apparatus 7 may not be disposed in the build system SYS. For example, the control apparatus 7 may be disposed at the outside of the build system SYS as a server or the like. In this case, the control apparatus 7 may be connected to the build system SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the build system SYS may be configured to transmit and receive various information through the network. Moreover, the control apparatus 7 may be configured to transmit information such as a command and a control parameter to the build system SYS through the network. The build system SYS may include a reception apparatus that is configured to receive the information such as the command and the control parameter from the control apparatus 7 through the network. The build system SYS may include a transmission apparatus that is configured to transmit the information such as the command and the control parameter to the control apparatus 7 through the network (namely, an output apparatus that is configured to output information to the control apparatus 7). Alternatively, a first control apparatus that is configured to perform a part of the arithmetic processing performed by the control apparatus 7 may be disposed in the build system SYS and a second control apparatus that is configured to perform another part of the arithmetic processing performed by the control apparatus 7 may be disposed at the outside of the build system SYS.

An arithmetic model that is buildable by machine learning may be implemented in the control apparatus 7 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 7 may control the operation of the build system SYS by using the arithmetic model. Namely, the operation for controlling the operation of the build system SYS may include an operation for controlling the operation of the build system SYS by using the arithmetic model. Note that the arithmetic model that has been built by off-line machine learning using training data may be implemented in the control apparatus 7. Moreover, the arithmetic model implemented in the control apparatus 7 may be updated by online machine learning on the control apparatus 7. Alternatively, the control apparatus 7 may control the operation of the build system SYS by using the arithmetic model implemented in an apparatus external to the control apparatus 7 (namely, an apparatus external to the processing unit 1), in addition to or instead of the arithmetic model implemented on the control apparatus 7.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 7. The recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a form in which the logical process block and a partial hardware module that realizes a partial element of the hardware are combined.

### (2) Operation of Build System SYS

Next, the operation of the build system SYS will be described.

### (2-1) Additive Manufacturing Operation

Firstly, the additive manufacturing (an additive manufacturing operation) performed by the build system SYS on the workpiece W will be described. The additive manufacturing performed on the workpiece W corresponds to an operation for building the build object so as to add, to the workpiece W, the build object that is integrated with (alternatively, separable from) the workpiece W. In the below-described description, the additive manufacturing for building the three-dimensional structural object ST that is the build object having a desired shape will be described, for the purpose of simple description. As described above, the build system SYS builds the three-dimensional structural object ST by performing the additive manufacturing based on the Laser Metal Deposition. Therefore, the build system SYS may build the three-dimensional structural object ST by performing the existing additive manufacturing based on the Laser Metal Deposition. Next, one example of the operation for building the three-dimensional structural object ST by using the Laser Metal Deposition will be briefly described.

The build system SYS builds the three-dimensional structural object ST on the workpiece W based on three-dimensional model data (in other words, three-dimensional model information) of the three-dimensional structural object ST that should be built. Measured data of the solid object measured by at least one of a non-illustrated measurement apparatus disposed in the build system SYS and a three-dimensional shape measurement device disposed separately from the build system SYS may be used as the three-dimensional model data. The build system SYS sequentially builds a plurality of layered partial structural objects (it is referred to as a "structural layer" in the below-described description) SL that are arranged along the Z-axis direction in order to build the three-dimensional structural object ST, for example. For example, the build system SYS sequentially builds, one by one in order, the plurality of structural layers SL based on data related to the plurality of layers that are obtained by slicing the model of the three-dimensional structural object ST along the Z-axis direction. As a result, the three-dimensional structural object ST that is a layered structural body in which the plurality of structural layers SL are layered is built. Note that the structural layer SL may be the build object having a layered shape. Next, a flow of an operation for forming the three-dimensional structural object ST by forming the plurality of structural layers SL one by one in order will be described.

Firstly, with reference to FIG. 4A to FIG. 4E, an operation for building each structural layer SL will be described. Incidentally, in FIG. 4A to FIG. 4E, the fθ lens 2113 is omitted for simplifying the drawing. The build system SYS moves at least one of the build head 21 and the stage 31 under the control of the control apparatus 7 so that the build unit areas BSA#1 and BSA#2 are set in a desired area on the build surface MS that corresponds to a surface of the workpiece W or a surface of the already built structural layer SL. Then, the irradiation optical systems 211#1 and 211#2 irradiate the build unit area BSA#1 and BSA#2 with the build lights EL#1 and EL#2, respectively. In this case, the condensed positions on which the build lights EL#1 and EL#2 are condensed may be located on the build surface MS in the Z-axis direction. Alternatively, the condensed positions on which the build lights EL#1#1 and EL#2 are condensed may be away from the build surface MS in the Z-axis direction. As a result, as illustrated in FIG. 4A, the melt pools MP#1 and MP#2 are formed on the build surface MS that is irradiated with the build lights EL#1 and EL#2, respectively. Furthermore, as illustrated in FIG. 4B, the build system SYS supplies the build material M from the material nozzle 212 under the control of the control apparatus 7. As a result, the build material M is supplied to each of the melt pools MP#1 and MP#2. The build material M supplied to the melt pool MP#1 is molten by the build light EL#1 with which the melt pool MP#1 is irradiated. Similarly, the build material M supplied to the melt pool MP#2 is molten by the build light EL#2 with which the melt pool MP#2 is irradiated.

Furthermore, the irradiation optical systems 211#1 and 211#2 move the target irradiation areas EA#1 and EA#2 in the build unit areas BSA#1 and BSA#2, respectively, by using the Galvano mirrors 2112. Namely, the irradiation optical systems 211#1 and 211#2 scan the build unit areas BSA#1 and BSA#2 with the build lights EL#1 and EL#2, respectively, by using the Galvano mirrors 2112. After the melt pool MP#1 is not irradiated with the build light EL#1 due to the movement of the target irradiation area EA#1, the build material M molten in the melt pool MP#1 is cooled and solidified (namely, coagulated). Similarly, after the melt pool MP#2 is not irradiated with the build light EL#2 due to the movement of the target irradiation area EA#2, the build material M molten in the melt pool MP#2 is cooled and solidified (namely, coagulated). Furthermore, the melt pools MP#1 and MP#2 move due to the movement of the target irradiation areas EA#1 and EA#2. As a result, as illustrated in FIG. 4C, the build object including the solidified build material M are deposited on the build surface MS in the build unit areas BSA#1 and BSA#2 in which the melt pools MP#1 and MP#2 move. Note that the melt pools MP1 and MP2 may be formed in almost the entire build unit areas BSA#1 and BSA#2.

In a case where the build unit areas BSA#1 and BSA#2 are coincident with each other, the target irradiation area EA#1 and the target irradiation area EA#2 may be set at different positions in the build unit area BSA at certain timing. In this case, the build unit 2 may perform the additive manufacturing on a first part in the build unit area BSA by irradiating the first part in the build unit area BSA with the build light EL#1. Furthermore, the build head 21 may perform the additive manufacturing on a second part in the build unit area BSA by irradiating the second part of the build unit area BSA different from the first part with the build light EL#2. However, the target irradiation area EA#1 and the target irradiation area EA#2 may be set at the same position in the build unit area BSA at a certain timing. In this case, the build unit 2 may perform the additive manufacturing on a first part in the build unit area BSA by irradiating the first part in the build unit area BSA with the build light EL#1. Furthermore, the build head 21 may perform the additive manufacturing on the first part in the build unit area BSA by irradiating the first part of the build unit area BSA with the build light EL#2.

In a period during which the target irradiation areas EA#1 and EA#2 mov in the build unit areas BSA#1 and BSA#2, respectively, the build system SYS may move at least one of the build head 21 and the stage 31 so that the build unit areas BSA#1 and BSA#2 move on the build surface MS. Namely, the build system SYS may move each of the target irradiation areas EA#1 and EA#2 in the build unit areas BSA#1 and BSA#2 and move the build unit areas BSA#1 and BSA#2 on the build surface MS in parallel.

Alternatively, in the period during which the target irradiation areas EA#1 and EA#2 move in the build unit areas BSA#1 and BSA#2, respectively, the build system SYS may not move the build head 21 and the stage 31 to prevent the build unit areas BSA#1 and BSA#2 from moving on the build surface MS. In this case, after the additive manufacturing (namely, the building) in the build unit areas BSA#1 and BSA#2 is completed, the build system SYS may move at least one of the build head 21 and the stage 31 so that the build unit areas BSA#1 and BSA#2 are set in another area on the build surface MS . Namely, the build system SYS may move at least one of the build head 21 and the stage 31 so that the build unit areas BSA#1 and BSA#2 move on the build surface MS. In this case, the build system SYS may move at least one of the build head 21 and the stage 31 so that an area on which the build unit areas BSA#1 and BSA#2 have already been set (namely, an area in which the additive manufacturing has already been performed) on the build surface MS s adjacent to an area on which the build unit areas BSA#1 and BSA#2 are newly set (namely, an area in which the additive manufacturing is performed next) on the build surface MS. Especially, the build system SYS may move at least one of the build head 21 and the stage 31 so that the area on which the build unit areas BSA#1 and BSA#2 have already been set on the build surface MS does not overlap with the area on which the build unit areas BSA#1 and BSA#2 are newly set on the build surface MS. However, the build system SYS may move at least one of the build head 21 and the stage 31 so that the area on which the build unit areas BSA#1 and BSA#2 have already been set on the build surface MS partially overlaps with the area on which the build unit areas BSA#1 and BSA#2 are newly set on the build surface MS.

The build system SYS repeats a series of build process including the formation of the melt pool MP by the irradiation with the build light EL in the build unit area BSA, the supply of the build material M to the melt pool MP, the melting of the supplied build material M and the solidification of the molten build material M while relatively moving the build head 21 relative to the build surface MS along at least one of the X-axis direction and the Y-axis direction, as illustrated in FIG. 4D. As a result, as illustrated in FIG. 4E, the structural layer SL that corresponding to the build object that is an aggregation of the build material M, which are solidified after being molten, is built on the build surface MS. Namely, the structural layer SL that is an aggregation of the build object built in a pattern based on the movement trajectory of the build unit area BSA on the build surface MS (namely, the structural layer SL having a shape based on the movement trajectory of the build unit area BSA in a planar view) is built.

Incidentally, in a case where the target irradiation area EA#1 is set at the area on which the build object should not be built, the build system SYS may not irradiate the target irradiation areas EA#1 with the build light EL#1. Alternatively, the build system SYS may irradiate the target irradiation areas EA#1 with the build light EL#1 and stop the supply of the build material M. Alternatively, the build system SYS may supply the build material M to the target irradiation areas EA#1 and irradiate the target irradiation areas EA#1 with the build light EL#1 having an intensity by which the melt pool MP is not formed. The same may be applied to a case where the target irradiation area EA#2 is set at the area on which the build object should not be built.

A movement path (in other words, the movement trajectory) of the build unit area BSA may be referred to as a build path (in other words, a tool path). Build path information related to the build path may be included in the above-described build condition information. The build path information may include information (for example, coordinate information) related to a plurality of positions at which at least one of the build unit areas BSA is sequentially set. In this case, each position at which at least one of the build unit areas BSA is set may be referred to as a unit build path. The control apparatus 7 may move at least one of the build head 21 and the stage 31 so that the build unit area BSA moves along the movement path designated by the build path information. Incidentally, since the additive manufacturing (namely, the building) is performed in the build unit area BSA, the build path may mean a path along which the build unit 2 performs the building on the build surface MS.

The build condition information may include build size information related to a size of the build unit area BSA. For example, the build size information may include information related to a size of the build unit area BSA in the X-axis direction. For example, the build size information may include information related to a size of the build unit area BSA in the Y-axis direction. In a case where the build path information includes the information related to each position at which the build unit area BSA is set (namely, the unit build path) as described above, the build size information may include information related to a size (namely, a size per unit build path) of the build unit area BSA at each position at which the build unit area BSA is set. In a case where the build unit area BSA moves due to the movement of at least one of the build head 21 and the stage 31 as described above, the size of the build unit area BSA along a movement direction of the build unit area BSA may be referred to as a length of the build unit area BSA. On the other hand, the size of the build unit area BSA along a direction intersecting the movement direction of the build unit area BSA may be referred to as a width of the build unit area BSA. Since the building is performed in the build unit area BSA, the width of the build unit area BSA may be referred to as a build width. Incidentally, since the build unit area BSA moves due to the movement of at least one of the build head 21 and the stage 31, the movement direction of the build unit area BSA may mean a movement direction of at least one of the build head 21 and the stage 31. The movement direction of the build unit area BSA may be considered to be equivalent to a movement direction by at least one of the head driving system 22 and the stage driving system 32. The control apparatus 7 may control the Galvano mirror 2112#1 of the irradiation optical system 211#1 and the Galvano mirror 2112#2 of the irradiation optical system 211#2 so that the target irradiation areas EA#1 and EA#2 move in the build unit areas BSA#1 and BSA#2 having a size designated by the build size information, respectively. Incidentally, since the additive manufacturing (namely, the building) is performed in the build unit area BSA, the build path may mean a path along which the build unit 2 performs the building on the build surface MS.

Note that a software that allows the build width of one line to be inputted thereto is known as a software that is programmed to create the general build path (the tool path). In this case, the control apparatus 7 may acquire information related to the build width inputted by using this software, and control the Galvano mirrors 2112#1 and 2112#2 based on the acquired information related to the build width. The control apparatus 7 may acquire the information related to the build width inputted by using this software, and control the Galvano mirrors 2112#1 and 2112#2 based on the acquired information related to the build width so that the size(especially, the size in the direction intersecting the movement direction of the build unit area BSA) of each of the build unit areas BSA is equal to the build width. The control apparatus 7 may acquire the information related to the build width inputted by using this software, and control the Galvano mirrors 2112#1 and 2112#2 based on the acquired information related to the build width so that the size(especially, the size in the direction intersecting the movement direction of the build unit area BSA) of each of the build unit areas BSA is equal to a size determined based on the build width.

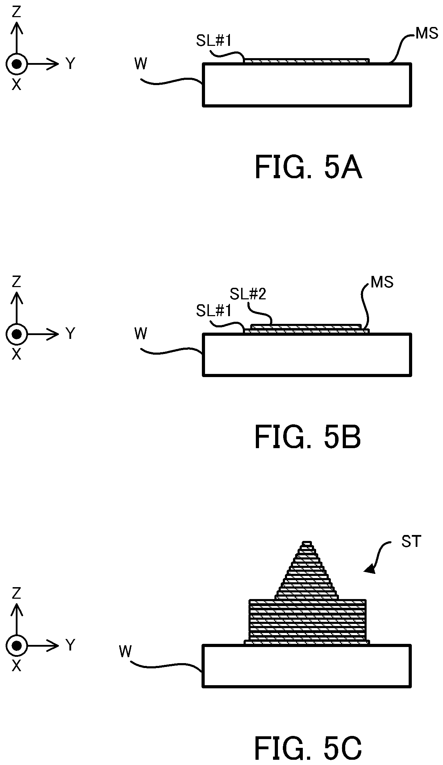

The build system SYS repeats the operation for building the structural layer SL based on the three-dimensional model data under the control of the control apparatus 7. Specifically, the control apparatus 7 firstly generates slice data by performing a slicing process on the three-dimensional model data by a layer pitch before performing the operation for building the structural layer SL. The build system SYS performs an operation for building a first structural layer SL#1 on the build surface MS that corresponds to the surface of the workpiece W based on the slice data corresponding to the structural layer SL#1. Specifically, the control apparatus 7 acquires the build condition information that is for building the first structural layer SL#1 and that is generated based on the slice data corresponding to the structural layer SL#1. Incidentally, the control apparatus 7 may generate the build condition information after or before the build system SYS starts the additive manufacturing. Then, the control apparatus 7 controls the build unit 2 and the stage unit 3 to build the first structural layer SL#1 based on the build condition information. As a result, as illustrated in FIG. 5A, the structural layer SL#1 is built on the build surface MS. Then, the build system SYS sets a surface (namely, an upper surface) of the structural layer SL#1 to be a new build surface MS and builds a second structural layer SL#2 on the new build surface MS. In order to build the structural layer SL#2, firstly, the control apparatus 7 controls at least one of the head driving system 22 and the stage driving system 32 so that the build head 21 moves along the Z-axis direction relative to the stage 31. Specifically, the control apparatus 7 controls at least one of the head driving system 22 and the stage driving system 32 to move the build head 21 toward the +Z-axis side and / or to move the stage 31 toward the -Z-axis direction so that the build unit areas BSA#1 and BSA#2 are set on the surface of the structural layer SL#1 (namely, the new build surface MS). Then, the build system SYS builds the structural layer SL#2 on the structural layer SL#1 based on the slice data corresponding to the structural layer SL#2, by performing an operation that is the same as the operation for building the structural layer SL#1 under the control of the control apparatus 7. As a result, as illustrated in FIG. 5B, the structural layer SL#2 is built. Then, the same operation is repeated until all structural layers SL constituting the three-dimensional structural object ST that should be built on the workpiece W are built. As a result, the three-dimensional structural object ST is built by a layered structural object in which the plurality of structural layers SL are layered, as illustrated in FIG. 5C. Incidentally, the plurality of structural layers SL may be integrated with each other when the three-dimensional structural object ST has been built (in other words, there may be no border between the plurality of structural layers SL in the three-dimensional structural object).

### (2-2) Transferred Heat Amount Control Operation

Next, a transferred heat amount control operation, which may be performed by the build system SYS in parallel with the above-described additive manufacturing operation, will be described. The transferred heat amount control operation is an operation for controlling an amount of heat (specifically, an amount of heat per unit area) transferred from at least one of the build lights EL#1 and EL#2 to the build surface MS. Incidentally, in the below-described description, "the amount of heat transferred to the build surface MS" means "the amount of heat transferred to the build surface MS per unit area" in a case where there is no specific description.

The amount of heat transferred from at least one of the build lights EL#1 and EL#2 to the build surface MS depends on at least one of the build lights EL#1 and EL#2. Therefore, the build system SYS (especially the control apparatus 7) may control the amount of heat transferred from at least one of the build lights EL#1 and EL#2 to the build surface MS by controlling at least one of the build lights EL#1 and EL#2. The control apparatus 7 may control the amount of heat transferred from at least one of the build lights EL#1 and EL#2 to the build surface MS by controlling the build lights EL#1 and EL#2 individually. Incidentally, the control apparatus 7 may control at least one of the build lights EL#1 and EL#2 for a purpose that is different from a purpose of controlling the amount of heat transferred from at least one of the build lights EL#1 and EL#2 to the build surface MS. Next, one example of the operation for controlling at least one of the build lights EL#1 and EL#2 will be described below.

The amount of heat transferred from at least one of the build lights EL#1 and EL#2 to the build surface MS depends on a speed (a scanning speed) at which the Galvano mirror 2112 moves at least one of the build lights EL#1 and EL#2. Specifically, a period during which a certain area on the build surface MS is irradiated with the build light EL#1 is longer, as the scanning speed of the build light EL#1 (namely, a movement speed of the target irradiation area EA#1) is slower. Therefore, the amount of heat transferred from the build light EL#1 to the build surface MS is larger as the scanning speed of the build light EL#1 is slower. The amount of heat transferred from the build light EL#1 to the build surface MS is smaller as the scanning speed of the build light EL#1 is faster. Similarly, the amount of heat transferred from the build light EL#2 to the build surface MS is larger as the scanning speed of the build light EL#2 is slower. The amount of heat transferred from the build light EL#2 to the build surface MS is smaller as the scanning speed of the build light EL#2 is faster. Therefore, the build system SYS (especially, the control apparatus 7) may control the amount of heat transferred from at least one of the build lights EL#1 and EL#2 to the build surface MS by controlling the scanning speed of at least one of the build lights EL#1 and EL#2. Incidentally, the control apparatus 7 may control the scanning speed of at least one of the build lights EL#1 and EL#2 for a purpose that is different from a purpose of controlling the amount of heat transferred from at least one of the build lights EL#1 and EL#2 to the build surface MS.

In a case where at least one of the build lights EL#1 and EL#2 is the pulsed light, the amount of heat transferred from at least one of the build lights EL#1 and EL#2 to the build surface MS depends on at least one of the number of pulses of the pulsed light per unit time and a pulse width of the pulsed light. The pulse width of the pulsed light may be referred to as the ON time of one pulsed light. Specifically, the amount of heat transferred from the build light EL#1 to the build surface MS is larger as the number of pulses of the build light EL#1 per unit time is larger and / or the pulse width of the build light EL#1 is wider. The amount of heat transferred from the build light EL#1 to the build surface MS is smaller as the number of pulses of the build light EL#1 per unit time is smaller and / or the pulse width of the build light EL#1 is narrower. Similarly, the amount of heat transferred from the build light EL#2 to the build surface MS is larger as the number of pulses of the build light EL#2 per unit time is larger and / or the pulse width of the build light EL#2 is wider. The amount of heat transferred from the build light EL#2 to the build surface MS is smaller as the number of pulses of the build light EL#2 per unit time is smaller and / or the pulse width of the build light EL#2 is narrower. Therefore, the build system SYS (especially, the control apparatus 7) may control the amount of heat transferred from at least one of the build lights EL#1 and EL#2 to the build surface MS by controlling at least one of the number of pulses and the pulse width of at least one of the build lights EL#1 and EL#2. Incidentally, the control apparatus 7 may control at least one of the number of pulses and the pulse width of at least one of the build lights EL#1 and EL#2 for a purpose that is different from a purpose of controlling the amount of heat transferred from at least one of the build lights EL#1 and EL#2 to the build surface MS.

The amount of heat transferred from at least one of the build lights EL#1 and EL#2 to the build surface MS depends on the intensity of at least one of the build lights EL#1 and EL#2. Specifically, the amount of heat transferred from the build light EL#1 to the build surface MS is larger as the intensity of the build light EL#1 is higher. The amount of heat transferred from the build light EL#1 to the build surface MS is smaller as the intensity of the build light EL#1 is lower. Similarly, the amount of heat transferred from the build light EL#2 to the build surface MS is larger as the intensity of the build light EL#2 is higher. The amount of heat transferred from the build light EL#2 to the build surface MS is smaller as the intensity of the build light EL#2 is slower. Therefore, the build system SYS (especially, the control apparatus 7) may control the amount of heat transferred from at least one of the build lights EL#1 and EL#2 to the build surface MS by controlling the intensity of at least one of the build lights EL#1 and EL#2. Incidentally, the control apparatus 7 may control the intensity of at least one of the build lights EL#1 and EL#2 for a purpose that is different from a purpose of controlling the amount of heat transferred from at least one of the build lights EL#1 and EL#2 to the build surface MS.

Note that the control apparatus 7 may control the intensity of at least one of the build lights EL#1 and EL#2 by controlling the light source 4. Alternatively, the control apparatus 7 may control the intensity of at least one of the build lights EL#1 and EL#2 by controlling the state control optical system 2111 (especially, the intensity control optical system). For example, in a case where the intensity control optical system includes the shutter, the intensity of at least one of the build lights EL#1 and EL#2 with which the build surface MS is irradiated is lower as a period during which the shutter shields at least one of the build lights EL#1 and EL#2 is longer. Therefore, the control apparatus 7 may control the intensity of at least one of the build lights EL#1 and EL#2 by controlling the period during which the shutter shields at least one of the build lights EL#1 and EL#2. Alternatively, in a case where the intensity control optical system includes an optical element (for example, a variable intensity filter and the like) that is configured to continuously or discretely change the intensity of at least one of the build lights EL#1 and EL#2, the control apparatus 7 may control the intensity of at least one of the build lights EL#1 and EL#2 by controlling this optical element.

The amount of heat transferred from at least one of the build lights EL#1 and EL#2 to the build surface MS depends on the movement trajectory (namely, a locus) of at least one of the build lights EL#1 and EL#2 on the build surface MS. Namely, the amount of heat transferred from at least one of the build lights EL#1 and EL#2 to the build surface MS depends on the movement trajectory (namely, the locus) of at least one of the target irradiation areas EA#1 and EA#2 on the build surface MS. Specifically, when the movement trajectory of the build light EL#1 changes, there is a possibility that the amount of heat transferred from the build light EL#1 to a certain area on the build surface MS changes. For example, since the build light EL#1 is cyclically moved on the build surface MS (specifically, in the build unit area BSA) by the Galvano mirror 2112, when at least one of a cycle and an amplitude of the movement trajectory of the build light EL#1 changes, there is a possibility that one area on the build surface MS is no longer irradiated with the build light EL#1 with which the one area on the build surface MS has been irradiated or one area on the build surface MS is irradiated with the build light EL#1 with which the one area on the build surface MS has not been irradiated. As a result, when at least one of the cycle and the amplitude of the movement trajectory of the build light EL#1 changes, there is a possibility that the amount of heat transferred from the build light EL#1 to a certain area on the build surface MS changes. For the same reason, when at least one of the cycle and the amplitude of the movement trajectory of build light EL#2 changes, there is a possibility that the amount of heat transferred from build light EL#2 to a certain area on the build surface MS changes. The amount of heat transferred from at least one of the build lights EL#1 and EL#2 to the build surface MS may be controlled by controlling the movement trajectory (for example, at least one of the cycle and the amplitude of the movement trajectory) of at least one of the build lights EL#1 and EL#2. Incidentally, the control apparatus 7 may control the movement trajectory (for example, at least one of the cycle and the amplitude of the movement trajectory) of at least one of the build lights EL#1 and EL#2 for a purpose that is different from a purpose of controlling the amount of heat transferred from at least one of the build lights EL#1 and EL#2 to the build surface MS.

Note that the movement trajectory of the build light EL#1 may be considered to be equivalent to the movement trajectory of the target irradiation area EA#1 that is irradiated with the build light EL#1. The cycle of the movement trajectory of the build light EL#1 may be considered to be equivalent to the cycle of the movement trajectory of the target irradiation area EA#1. The amplitude of the movement trajectory of the build light EL#1 may be considered to be equivalent to the amplitude of the movement trajectory of the target irradiation area EA#1. The cycle of the movement trajectory of the target irradiation area EA#1 may be considered to be equivalent to a cycle of an oscillation of the target irradiation area EA#1 under a situation where the movement of the target irradiation area EA#1 is considered to be an oscillatory motion. The amplitude of the movement trajectory of the target irradiation area EA#1 may be considered to be equivalent to an amplitude of the oscillation of the target irradiation area EA#1 under the situation where the movement of the target irradiation area EA#1 is considered to be the oscillatory motion. The same may be applied to the movement trajectory of the build light EL#2.

The amount of heat transferred from at least one of the build lights EL#1 and EL#2 to the build surface MS depends on the irradiation period during which the build surface MS is irradiated with at least one of the build lights EL#1 and EL#2. Specifically, the amount of heat transferred from the build light EL#1 to a certain area on the build surface MS is larger as the irradiation period of the build light EL#1 to a certain area on the build surface MS is longer. The amount of heat transferred from the build light EL#1 to a certain area on the build surface MS is smaller as the irradiation period of the build light EL#1 to a certain area on the build surface MS is shorter. Similarly, the amount of heat transferred from the build light EL#2 to a certain area on the build surface MS is larger as the irradiation period of the build light EL#2 to a certain area on the build surface MS is longer. The amount of heat transferred from the build light EL#2 to a certain area on the build surface MS is smaller as the irradiation period of the build light EL#2 to a certain area on the build surface MS is shorter. Therefore, the build system SYS (especially, the control apparatus 7) may control the amount of heat transferred from at least one of the build lights EL#1 and EL#2 to the build surface MS by controlling the irradiation period of at least one of the build lights EL#1 and EL#2. Note that the above-described operation for controlling the scanning speed may be considered to be equivalent to the operation for controlling the irradiation period of at least one of the build lights EL#1 and EL#2. Moreover, in a case where at least one of the build lights EL#1 and EL#2 is the pulsed light, the above-described operation for controlling at least one of the number of pulses and the pulse width may be considered to be equivalent to the operation for controlling the irradiation period of at least one of the build lights EL#1 and EL#2. Incidentally, the control apparatus 7 may control the irradiation period of at least one of the build lights EL#1 and EL#2 for a purpose that is different from a purpose of controlling the amount of heat transferred from at least one of the build lights EL#1 and EL#2 to the build surface MS.

The control apparatus 7 may control at least one of the build lights EL#1 and EL#2 so that the amount of heat transferred from at least one of the build lights EL#1 and EL#2 to a first area on the build surface MS and the amount of heat transferred from at least one of the build lights EL#1 and EL#2 to a second area on the build surface MS that is different from the first are satisfy a predetermined heat condition. The heat conditions will be described in detail later.

As described above, the build unit areas BSA#1 and BSA#2, which move on the build surface MS, are irradiated with the build lights EL#1 and EL#2, respectively. Therefore, there is a possibility that the heat conditions that should be satisfied by the amount of heat transferred from at least one of the build lights EL#1 and EL#2 to the build surface MS changes according to a positions at which the build unit areas BSA#1 and BSA#2 are set on the build surface MS. Therefore, the control apparatus 7 may control the amount of heat transferred from at least one of the build lights EL#1 and EL#2 to the build surface MS based on the positions at which the build unit areas BSA#1 and BSA#2 are set on the build surface MS. Information related to the positions at which the build unit areas BSA#1 and BSA#2 are set on the build surface MS is included in the above-described build path information. Therefore, the control apparatus 7 may control the amount of heat transferred from at least one of the build lights EL#1 and EL#2 to the build surface MS based on the build path information.

The amount of heat transferred from at least one of the build lights EL#1 and EL#2 to the build surface MS depends on a movement speed of the build unit areas BSA#1 and BSA#2 on the build surface MS. Specifically, when the movement speed of the build unit area BSA#1 changes, there is a possibility that the amount of heat transferred from the build light EL#1 to a certain area on the build surface MS changes. The amount of heat transferred from at least one of the build lights EL#1 and EL#2 to the build surface MS may be controlled by controlling the movement speed of at least one of the build unit areas BSA#1 and BSA#2. Incidentally, the control apparatus 7 may control the movement speed of at least one of the build unit areas BSA#1 and BSA#2 for a purpose that is different from a purpose of controlling the amount of heat transferred from at least one of the build lights EL#1 and EL#2 to the build surface MS.

In the present example embodiment, the control apparatus 7 may perform at least one of a first to fourth transferred heat amount control operations. Therefore, next, the first transferred heat amount control operation to the fourth transferred heat amount control operation will be described in order.

### (2-2-1) First Transferred Heat Amount Control Operation

The first transferred heat amount control operation is an operation for controlling the amount of heat transferred from at least one of the build lights EL#1 and EL#2 to the build surface MS in a case where the movement trajectory MT0 of the build unit areas BSA#1 and BSA#2 on the build surface MS is a curved movement trajectory. Incidentally, in a case where the first transferred heat amount control operation is performed, the build unit areas BSA#1 and BSA#2 may be typically coincident with each other. For this reason, in the below-described description, the build unit area BSA#1 and BSA#2 are collectively referred to as the build unit area BSA.

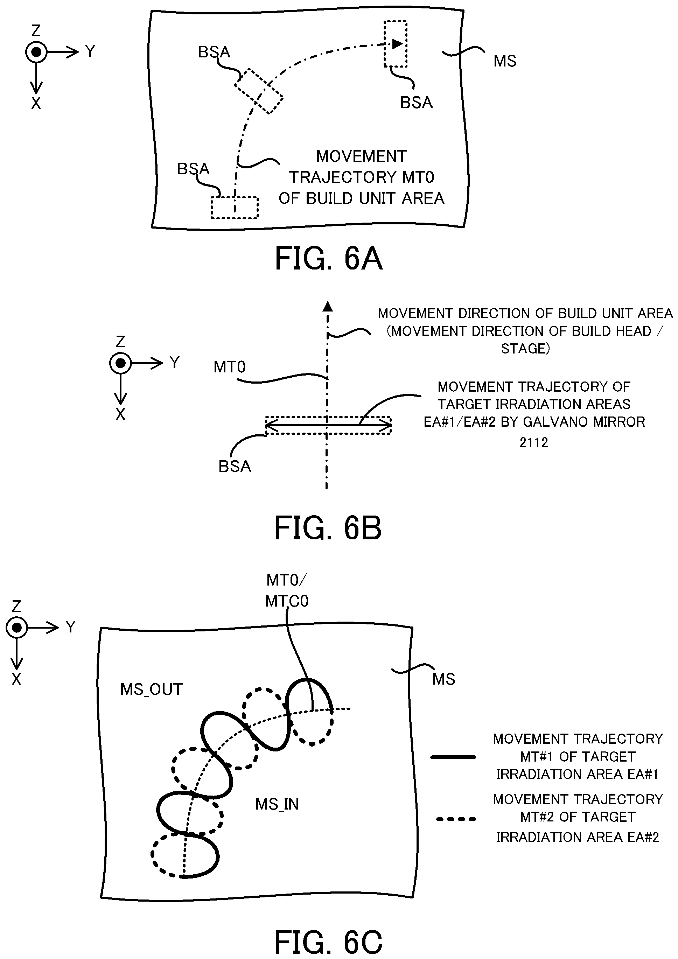

Specifically, in a case where the first transferred heat amount control operation is performed, the control apparatus 7 moves at least one of the build head 21 and the stage 31 so that the movement trajectory MT0 of the build unit area BSA on the build surface MS is the curved movement trajectory along the build surface MS as illustrated in FIG. 6A, that illustrates the movement trajectory MT0 of the build unit area BSA on the build surface MS. In this case, the control apparatus 7 control the Galvano mirror 2112 of the irradiation optical system 211#1 and the Galvano mirror 2112 of the irradiation optical system 211#2 so that each of the target irradiation areas EA#1 and EA#2 moves in the build unit area BSA at least along a direction intersecting the movement direction of the build unit area BSA, as illustrated in FIG. 6B that illustrates the movement trajectory of the target irradiation areas EA#1 and EA#2 in the build unit area BSA. In other words, the control apparatus 7 may control the Galvano mirror 2112 of the irradiation optical system 211#1 and the Galvano mirror 2112 of the irradiation optical system 211#2 so that each of the target irradiation areas EA#1 and EA#2 moves in the build unit area BSA at least along a direction intersecting the movement trajectory MT0 of the build unit area BSA. In this case, the shape of the build unit area BSA may be the rectangular shape whose longitudinal direction is the movement direction of the target irradiation areas EA#1 and EA#2 (namely, the direction intersecting the movement trajectory MT0). Incidentally, FIG. 6B illustrates an example in which the build unit area BSA is a rectangular area. In this case, the size of the build unit area BSA in the X-axis direction (namely, in the movement direction of the build unit area BSA) may be equal to a spot width of the build light EL, and the size of the build unit area BSA in the movement direction of may be regarded as substantially zero.

The control apparatus 7 may move at least one of the build head 21 and the stage 31 so that the build unit area BSA moves on the build surface MS in a period during which the target irradiation areas EA#1 and EA#2 are moved in the build unit area BSA by using the Galvano mirrors 2112#1 and 2112#2, respectively. As a result, the target irradiation areas EA#1 and EA#2 move along movement trajectories MT #1 and MT #2 illustrated in FIG. 6C on the build surface MS, respectively, due to the movement of the target irradiation areas EA#1 and EA#2 in the build unit area BSA and the movement of the build unit area BSA itself. Specifically, the target irradiation area EA#1 moves along the direction intersecting the movement trajectory MT0 while moving along the movement trajectory MT0 of the build unit area BSA. Namely, the target irradiation area EA#1 moves along the wave-shaped movement trajectory MT#1 that oscillates around the movement trajectory MT0. Similarly, the target irradiation area EA#2 moves along the direction intersecting the movement trajectory MT0 while moving along the movement trajectory MT0 of the build unit area BSA. Namely, the target irradiation area EA#1 moves along the wave-shaped movement trajectory MT#2 that oscillates around the movement trajectory MT0.

Furthermore, in a case where the movement direction of the target irradiation area EA#1 in the build unit area BSA is opposite to the movement direction of the target irradiation area EA#2 in the build unit area BSA, the target irradiation areas EA#1 and EA#2 are located opposite areas a border of which is a movement center that corresponds to a line connecting a center of the build unit area BSA in the direction intersecting the movement trajectory MT0. Namely, in a case where the target irradiation area EA#1 is located in an outer area MS_OUT of the build surface MS that is located at an outer side from the movement center MTCO, the target irradiation area EA#2 is located in an inner area MS_IN of the build surface MS that is located at an inner side from the movement center MT0. In a case where the target irradiation area EA#1 is located in the inner area MS_IN, the target irradiation area EA#2 is located in the outer area MS_OUT. However, the target irradiation areas EA#1 and EA#2 may overlap at least partially on the movement center MTC0.

Incidentally, the outer area MS_OUT may mean one area in which a tangent line of the movement center MTC0 extends in a curved line exists, among two adjacent areas whose border is the movement center MTC0. The inner area MS_IN may mean the other area in which a tangent line of the movement center MTC0 extends in a curved line does not exists, among the two adjacent areas whose border is the movement center MTC0.

Here, in a case where the characteristic (for example, at least one of the scanning speed, the number of pulses, the pulse width, the intensity, and the movement trajectory described above) of the build lights EL#1 and EL#2 with which the outer area MS_OUT is irradiated is the same as the characteristic of the build lights EL#1 and EL#2 with which the outer area MS_OUT is irradiated, there is a possibility that the amount of heat transferred from the build lights EL#1 and EL#2 to the outer area MS_OUT is different from the amount of heat transferred from the build lights EL#1 and EL#2 to the inner area MS_IN. Typically, the amount of heat transferred from the build lights EL#1 and EL#2 to the outer area MS_OUT is smaller than the amount of heat transferred from the build lights EL#1 and EL#2 to the inner area MS_IN. This is because the movement speed of the build unit area BSA in the outer area MS_OUT is faster than the movement speed of the build unit area BSA in the inner area MS_IN. In the case, such a technical problem occurs that a build amount in the outer area MS_OUT is different from a build amount in the inner area MS_IN due to the difference of the amount of heat. Namely, such a technical problem occurs that the build accuracy deteriorates.

Therefore, in the present example embodiment, the control apparatus 7 solves this technical problem by performing the first transferred heat amount control operation. Specifically, the control apparatus 7 may perform, as the first transferred heat amount control operation, a transferred heat amount control operation for controlling at least one of the build lights EL#1 and EL#2 so that the amount of heat transferred from the build lights EL#1 and EL#2 to the outer area MS_OUT is equal to the amount of heat transferred from the build lights EL#1 and EL#2 to the inner area MS_IN. Specifically, in a case where the characteristic of the build lights EL#1 and EL#2 with which the outer area MS_OUT is irradiated is the same as the characteristic of the build lights EL#1 and EL#2 with which the inner area MS_IN is irradiated, there is a possibility that the heat amount transferred to the outer area MS_OUT is different from the heat amount transferred to the inner area MS_IN as described above. Considering this, in order to make the amount of heat transferred to the outer area MS_OUT be equal to the amount of heat transferred to the inner area MS_IN, the control apparatus 7 may control the characteristic of at least one of the build lights EL#1 and EL#2 so that the characteristic of the build lights EL#1 and EL#2 with which the outer area MS_OUT is irradiated is the different from the characteristic of the build lights EL#1 and EL#2 with which the inner area MS_IN is irradiated. As a result, the build system SYS can build object on the build surface MS with relatively high build accuracy even in a case where the movement trajectory of the build unit area BSA is the curved movement trajectory.

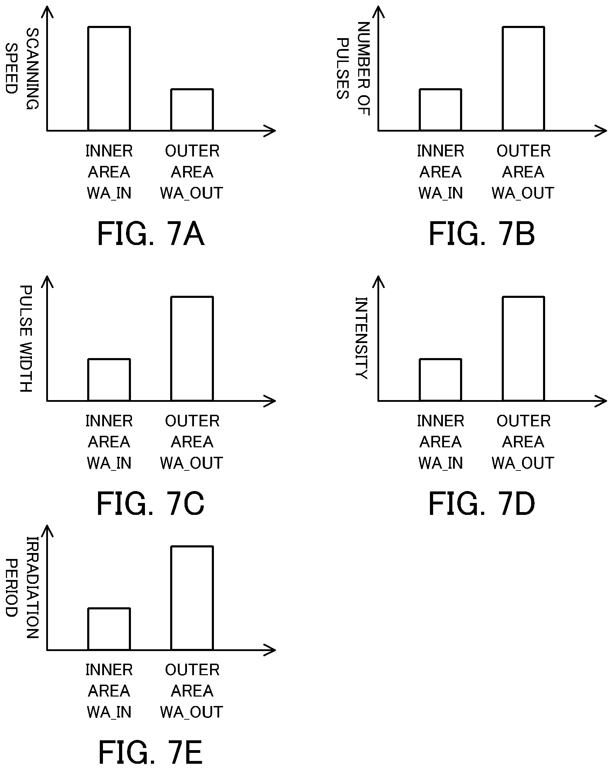

As one example, in order to make the amount of heat transferred to the outer area MS_OUT be equal to the amount of heat transferred to the inner area MS_IN, the control apparatus 7 may control at least one of the build lights EL#1 and EL#2 so that the scanning speed of at least one of the build lights EL#1 and EL#2 in the outer area MS_OUT is slower than the scanning speed of at least one of the build lights EL#1 and EL#2 in the inner area MS_IN as illustrated in FIG. 7A. As a result, the amount of heat transferred from the build lights EL#1 and EL#2 to the outer area MS_OUT is increased and / or the amount of heat transferred from the build lights EL#1 and EL#2 to the inner area MS_IN is decreased, compared to a case where the scanning speed in the outer area MS_OUT is equal to the scanning speed in the inner area MS_IN. As a result, the amount of heat transferred from build lights EL#1 and EL#2 to the outer area MS_OUT is equal to the amount of heat transferred from build lights EL#1 and EL#2 to the inner area MS_IN.

As another example, in order to make the amount of heat transferred to the outer area MS_OUT be equal to the amount of heat transferred to the inner area MS_IN, the control apparatus 7 may control at least one of the build lights EL#1 and EL#2 so that the number of pulses of at least one of the build lights EL#1 and EL#2 in the outer area MS_OUT is larger than the number of pulses of at least one of the build lights EL#1 and EL#2 in the inner area MS_IN as illustrated in FIG. 7B. As a result, the amount of heat transferred from the build lights EL#1 and EL#2 to the outer area MS_OUT is increased and / or the amount of heat transferred from the build lights EL#1 and EL#2 to the inner area MS_IN is decreased, compared to a case where the number of pulses in the outer area MS_OUT is equal to the number of pulses in the inner area MS_IN. As a result, the amount of heat transferred from build lights EL#1 and EL#2 to the outer area MS_OUT is equal to the amount of heat transferred from build lights EL#1 and EL#2 to the inner area MS_IN.

As another example, in order to make the amount of heat transferred to the outer area MS_OUT be equal to the amount of heat transferred to the inner area MS_IN, the control apparatus 7 may control at least one of the build lights EL#1 and EL#2 so that the pulse width of at least one of the build lights EL#1 and EL#2 in the outer area MS_OUT is longer than the pulse width of at least one of the build lights EL#1 and EL#2 in the inner area MS_IN as illustrated in FIG. 7C. As a result, the amount of heat transferred from the build lights EL#1 and EL#2 to the outer area MS_OUT is increased and / or the amount of heat transferred from the build lights EL#1 and EL#2 to the inner area MS_IN is decreased, compared to a case where the pulse width in the outer area MS_OUT is equal to the pulse width in the inner area MS_IN. As a result, the amount of heat transferred from build lights EL#1 and EL#2 to the outer area MS_OUT is equal to the amount of heat transferred from build lights EL#1 and EL#2 to the inner area MS_IN.

As another example, in order to make the amount of heat transferred to the outer area MS_OUT be equal to the amount of heat transferred to the inner area MS_IN, the control apparatus 7 may control at least one of the build lights EL#1 and EL#2 so that the intensity of at least one of the build lights EL#1 and EL#2 in the outer area MS_OUT is higher than the intensity of at least one of the build lights EL#1 and EL#2 in the inner area MS_IN as illustrated in FIG. 7D. As a result, the amount of heat transferred from the build lights EL#1 and EL#2 to the outer area MS_OUT is increased and / or the amount of heat transferred from the build lights EL#1 and EL#2 to the inner area MS_IN is decreased, compared to a case where the intensity in the outer area MS_OUT is equal to the intensity in the inner area MS_IN. As a result, the amount of heat transferred from build lights EL#1 and EL#2 to the outer area MS_OUT is equal to the amount of heat transferred from build lights EL#1 and EL#2 to the inner area MS_IN.

As another example, in order to make the amount of heat transferred to the outer area MS_OUT be equal to the amount of heat transferred to the inner area MS_IN, the control apparatus 7 may control at least one of the build lights EL#1 and EL#2 so that the irradiation period of at least one of the build lights EL#1 and EL#2 in the outer area MS_OUT is longer than the irradiation period of at least one of the build lights EL#1 and EL#2 in the inner area MS_IN as illustrated in FIG. 7E. As a result, the amount of heat transferred from the build lights EL#1 and EL#2 to the outer area MS_OUT is increased and / or the amount of heat transferred from the build lights EL#1 and EL#2 to the inner area MS_IN is decreased, compared to a case where the irradiation period in the outer area MS_OUT is equal to the irradiation period in the inner area MS_IN. As a result, the amount of heat transferred from build lights EL#1 and EL#2 to the outer area MS_OUT is equal to the amount of heat transferred from build lights EL#1 and EL#2 to the inner area MS_IN.

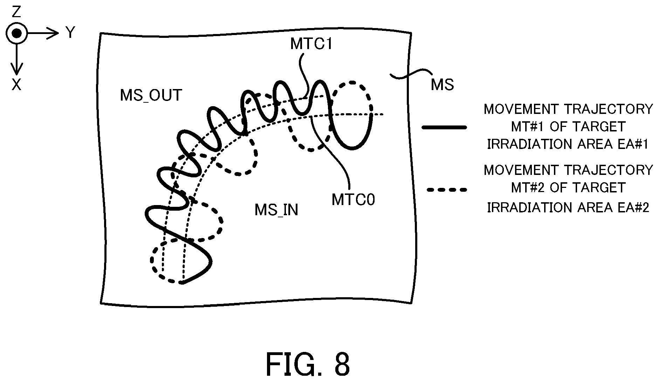

As another example, in order to make the amount of heat transferred to the outer area MS_OUT be equal to the amount of heat transferred to the inner area MS_IN, the control apparatus 7 may control at least one of the build lights EL#1 and EL#2 so that the movement trajectory of at least one of the build lights EL#1 and EL#2 in the outer area MS_OUT is different from the movement trajectory of at least one of the build lights EL#1 and EL#2 in the inner area MS_IN as illustrated in FIG. 7E. For example, the control apparatus 8 may control at least one of the build lights EL#1 and EL#2 so that at least one of a movement center MTC1 of the target irradiation area EA#1 that is irradiated with the build light EL#1 on the build surface MS and a movement center MTC2 of the target irradiation area EA#2 that is irradiated with the build light EL#2 on the build surface MS is outwardly away from the movement center MTC0 of the build unit area BSA (namely, is located in the outer area MS_OUT). Incidentally, FIG. 8 illustrates an example in which the movement center MTC1 of the target irradiation area EA#1 i outwardly s away from the movement center MTC0 of the build unit area BSA. As a result, the amount of heat transferred from the build lights EL#1 and EL#2 to the outer area MS_OUT is increased and / or the amount of heat transferred from the build lights EL#1 and EL#2 to the inner area MS_IN is decreased, compared to a case where the movement center MTC1 of the target irradiation area EA#1 and the movement center MTC2 of the target irradiation area EA#2 are coincident with the movement center MTC0 of the build unit area BSA. As a result, the amount of heat transferred from build lights EL#1 and EL#2 to the outer area MS_OUT is equal to the amount of heat transferred from build lights EL#1 and EL#2 to the inner area MS_IN.

Note that the movement center MTC1 of the target irradiation area EA#1 may mean a center of an amplitude of the wave-shaped movement trajectory MT#1 of the target irradiation area EA#1 on the build surface MS. Namely, the movement center MTC1 of the target irradiation area EA#1 may mean a center of the oscillation in a case where the movement trajectory MT#1 of the target irradiation area EA#1 on the build surface MS is assumed to be the oscillation. The same may be applied to the movement center MTC2 of the target irradiation area EA#2.

In a case where at least one of the movement centers MTC1 and MTC2 is outwardly away from the movement center MTCO, the control apparatus 7 may shorten the cycle of the movement trajectory of at least one of the build lights EL#1 and EL#2 corresponding to at least one of the movement centers MTC1 and MTC2 that is outwardly away from the movement center MTCO, compared to a case where the movement centers MTC1 and MTC2 are coincident with the movement center MTC0. Namely, the control apparatus 7 may shorten the cycle of at least one of the movement trajectory MT#1 of the target irradiation area EA#1 and the movement trajectory MT#2 of the target irradiation area EA#2 corresponding to at least one of the movement centers MTC1 and MTC2 that is outwardly away from the movement center MTC0. Incidentally, in a case where the build light EL#1 periodically reciprocates in the build unit area BSA (namely, the target irradiation area EA#1 periodically reciprocates), the cycle of the movement trajectory of the build light EL#1 (namely, the cycle of the movement trajectory MT#1 of the target irradiation area EA#1) may be considered to be equivalent to a time required for the build light EL#1 to reciprocate one time ( namely, a time required for the target irradiation area EA#1 to reciprocate one time). Similarly, the cycle of the movement trajectory of the build light EL#2 (namely, the cycle of the movement trajectory MT#2 of the target irradiation area EA#2) may be considered to be equivalent to a time required for the build light EL#2 to reciprocate one time (namely, a time required for the target irradiation area EA#2 to reciprocate one time). FIG. 8 illustrates an example in which the cycle of the movement trajectory of the build light EL#1 is shortened. As a result, the amount of heat transferred from build lights EL#1 and EL#2 to the outer area MS_OUT is increased, compared to a case where the cycle of the movement trajectory of at least one of the build lights EL#1 and EL#2 corresponding to at least one of the movement centers MTC1 and MTC2 that is outwardly away from the movement center MTC0 is not shortened . As a result, the amount of heat transferred from build lights EL#1 and EL#2 to the outer area MS_OUT is equal to the amount of heat transferred from build lights EL#1 and EL#2 to the inner area MS_IN.

In a case where at least one of the movement centers MTC1 and MTC2 is outwardly away from the movement center MTCO, the control apparatus 7 may decrease the amplitude of the movement trajectory of at least one of the build lights EL#1 and EL#2 corresponding to at least one of the movement centers MTC1 and MTC2 that is outwardly away from the movement center MTCO, compared to a case where the movement centers MTC1 and MTC2 are coincident with the movement center MTC0. Namely, the control apparatus 7 may decrease the amplitude of at least one of the movement trajectory MT#1 of the target irradiation area EA#1 and the movement trajectory MT#2 of the target irradiation area EA#2 corresponding to at least one of the movement centers MTC1 and MTC2 that is outwardly away from the movement center MTC0. Incidentally, in a case where the build light EL#1 periodically reciprocates in the build unit area BSA (namely, the target irradiation area EA#1 periodically reciprocates), the amplitude of the movement trajectory of the build light EL#1 (namely, the amplitude of the movement trajectory MT#1 of the target irradiation area EA#1) may be considered to be equivalent to a half of a moving distance of the reciprocation by which the build light EL#1 moves to reciprocate one time (namely, a half of a moving distance of the reciprocation by which the target irradiation area EA#1 moves to reciprocate one time). Similarly, the amplitude of the movement trajectory of the build light EL#2 (namely, the amplitude of the movement trajectory MT#2 of the target irradiation area EA#2) may be considered to be equivalent to a half of a moving distance of the reciprocation by which the build light EL#2 moves to reciprocate one time (namely, a half of a moving distance of the reciprocation by which the target irradiation area EA#2 moves to reciprocate one time). FIG. 8 illustrates an example in which the amplitude of the movement trajectory of the build light EL#1 is decreased. As a result, an area of the inner area MS_IN that is irradiated with the build lights EL#1 and EL#2 is smaller, compared to a case where the amplitude of the movement trajectory of at least one of the build lights EL#1 and EL#2 corresponding to at least one of the movement centers MTC1 and MTC2 that is outwardly away from the movement center MTC0 is not decreased. Therefore, the amount of heat transferred from build lights EL#1 and EL#2 to the inner area MS_IN is decreased. As a result, the amount of heat transferred from build lights EL#1 and EL#2 to the outer area MS_OUT is equal to the amount of heat transferred from build lights EL#1 and EL#2 to the inner area MS_IN.

The control apparatus 7 may decrease the amplitude of the movement trajectory of at least one of the build lights EL#1 and EL#2 so that the inner area MS_IN is not irradiated with at least one of the build lights EL#1 and EL#2 corresponding to at least one of the movement centers MTC1 and MTC2 that is outwardly away from the movement center MTC0. FIG. 8 illustrates an example in which the amplitude of the movement trajectory of the build light EL#1 is decreased so that the inner area MS_IN is not irradiated with the build light EL#1. As a result, at least a part of the outer area MS_OUT is irradiated with both of the build lights EL#1 and EL#2 and at least a part of the inner area MS_IN is irradiated with the build light EL#2 but is not irradiated with the build light EL#1. Therefore, the amount of heat transferred from the build lights EL#1 and EL#2 to the inner area MS_IN is decreased, compared to a case where the amplitude of the movement trajectory of at least one of the build lights EL#1 and EL#2 corresponding to at least one of the movement centers MTC1 and MTC2 that is outwardly away from the movement center MTC0 is not decreased. As a result, the amount of heat transferred from build lights EL#1 and EL#2 to the outer area MS_OUT is equal to the amount of heat transferred from build lights EL#1 and EL#2 to the inner area MS_IN.

Incidentally, the control apparatus 7 may controls the build system SYS to perform a test building on a test workpiece, and determine the emitting aspects (irradiation conditions) of the build lights EL#1 and EL#2 that allows a shape of the build object built by the test building to be a desired shape and / or that allows a quality (for example, at least one of a strength, a composition and an amount of generated void) of the build object built by the test building is a desired quality. The test building may be performed a plurality of times while changing the irradiation conditions of the build lights EL#1 and EL#2. The control apparatus 7 may control the build lights EL#1 and EL#2 based on the determined irradiation conditions in actually building the build object on the workpiece W. As one example, the control apparatus 7 may control the build lights EL#1 and EL#2 based on the determined irradiation conditions so that the characteristic (for example, at least one of the scanning speed, the movement trajectory, the number of pulses, the pulse width, the intensity, and the irradiation period described above) of at least one of the build lights EL#1 and EL#2 in the outer area MS_OUT is different from the characteristic of at least one of the build lights EL#1 and EL#2 in the inner area MS_IN. Even in the second to fourth transferred heat amount control operations described below, the control apparatus 7 may determine the emitting aspects (the irradiation conditions) of the build lights EL#1 and EL#2 that allows the shape of the build obj ect built by the test building to be the desired shape and / or that allows the quality of the build object built by the test building is the desired quality, and control the build lights EL#1 and EL#2 based on the determined irradiation conditions in actually building the build object on the workpiece W.

### (2-2-2) Second Transferred Heat Amount Control Operation

Next, the second transferred heat amount control operation will be described. The second transferred heat amount control operation is an operation for controlling the amount of heat transferred from at least one of the build lights EL#1 and EL#2 to the build surface MS in a case where the build surface MS is an inclined surface that is inclined with respect to the optical axis AX of at least one of the irradiation optical systems 211#1 and 211#2. Incidentally, in the below-described description, the optical axis AX of the irradiation optical system 211#1 is referred to as an "optical axis AX#1" and the optical axis AX of the irradiation optical system 211#2 is referred to as an "optical axis AX#2" as necessary. Here, the optical axis AX#1 of the irradiation optical system 211#1 may be an optical axis of an optical member (typically, the fθ lens 2113), which is located to be closest to the build surface MS, among the optical members of the irradiation optical system 211#1, and the optical axis AX#2 of the irradiation optical system 211#2 may be an optical axis of an optical member (typically, the fθ lens 2113), which is located to be closest to the build surface MS, among the optical members of the irradiation optical system 211#2.

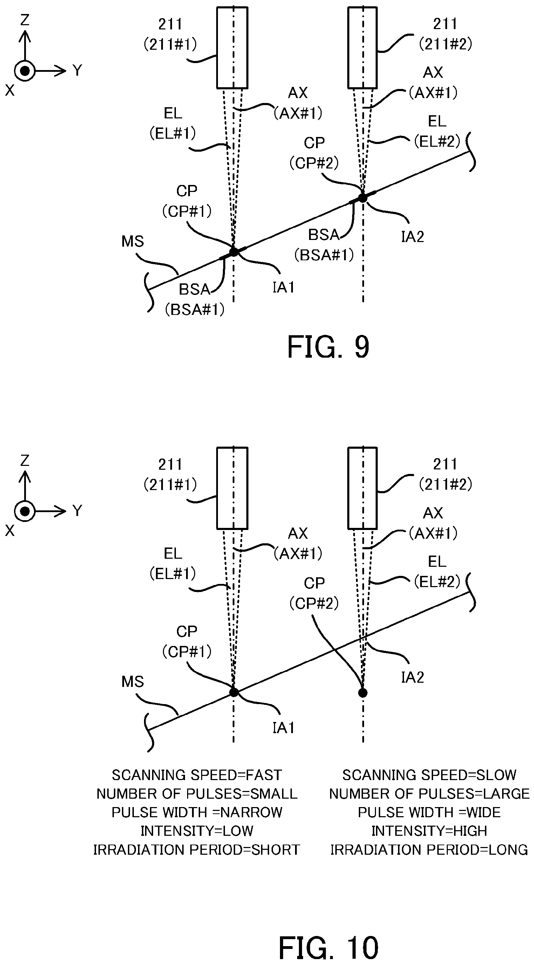

In this case, as illustrated in FIG. 9 that illustrates the build lights EL#1 and EL#2 with which the build surface MS that is the inclined surface is irradiated, the build unit 2 may irradiate a first inclined area IA1 of the build surface MS with the build light EL#1 by using the irradiation optical system 211#1, and irradiate a second inclined area IA2 of the build surface MS with the build light EL#2 by using the irradiation optical system 211#2. Namely, the build unit 2 sets the build unit area BSA#1 in an area on the build surface MS including the first inclined area IA1 and set the build unit area BSA#2 in an area on the build surface MS including the second inclined area IA2.

The second inclined area IA2 is located at a position that is different from a position that of the first inclined area IA1 along a direction intersecting at least one of the optical axes AX#1 and AX#2. In an example illustrated in FIG. 9, the second inclined area IA2 is located at a position that is different from that of the first inclined area IA1 along a direction intersecting the Z-axis (for example, a direction along the XY plane), because the optical axes AX#1 and AX#2 are axes extending along the Z-axis.

In this case, the control apparatus 7 may perform, as the second transferred heat amount control operation, the transferred heat amount control operation for controlling at least one of the build lights EL#1 and EL#2 so that the amount of heat transferred from the build light EL#1 to the build surface MS in the first inclined area IA1 is equal to the amount of heat transferred from the build light EL#2 to the build surface MS in the second inclined area IA2. Even in a case where any position on the build surface MS is irradiated with build lights EL#1 and EL#2, the control apparatus 7 may perform the transferred heat amount control operation for controlling at least one of the build lights EL#1 and EL#2 so that the amount of heat transferred from the build light EL#1 to the build surface MS in an area that is irradiated with the build light EL#1 is equal to the amount of heat transferred from the build light EL#2 to the build surface MS in in an area that is irradiated with the build light EL#2 in a same manner. As a result, even in a case where the build surface MS is the inclined surface, the build system SYS can build the build object on the build surface MS with relatively high build accuracy.

As one example, the amount of heat transferred to the build surface MS depends on a positional relationship between the build surface MS and the condensed position CP of the build light EL. Specifically, the amount of heat transferred from the build light EL to the build surface MS is larger as the condensed position CP of the build light EL is closer to the build surface MS. Incidentally, "the amount of heat transferred from the build light EL to the build surface MS" here is "the amount of heat transferred from the build light EL to the build surface MS per unit area" as described above. The amount of heat transferred from the build light EL to the build surface MS is smaller as the condensed position CP of the build light EL is more away from the build surface MS. Therefore, the control apparatus 7 may control at least one of the build lights EL#1 and EL#2 so that the positional relationship between the build surface MS and the condensed position CP of the build light EL#1 (in the below-described description, it is referred to as a "condensed position CP#1") in a direction along at least one of the optical axes AX#1 and AX#2 is the same as the positional relationship between the build surface MS and the condensed position CP of the build light EL#2 (in the below-described description, it is referred to as a "condensed position CP#2") in a direction along at least one of the optical axes AX#1 and AX#2. Specifically, the control apparatus 7 may control at least one of the condensed positions CP#1 and CP#2 so that the positional relationship (for example, a distance) between the build surface MS and the condensed position CP#1 is the same as the positional relationship (for example, a distance) between the build surface MS and the condensed position CP#2 by using the focus control optical system of the state control optical system 2111 described above. In the example illustrated in FIG. 9, each of the condensed positions CP#1 and CP#2 is located on the build surface MS. In this case, typically, the condensed positions CP#1 and CP#2 are located at positions that are different from each other in the direction along at least one of the optical axes AX#1 and AX#2. As a result, the amount of heat transferred from build light EL#1 to the build surface MS in the first inclined area IA1 is equal to the amount of heat transferred from build light EL#2 to the build surface MS in the second inclined area IA2. Namely, the amount of heat transferred from build light EL#1 to the build surface MS in the area that is irradiated with the build light EL#1 is equal to the amount of heat transferred from build light EL#2 to the build surface MS in the area that is irradiated with the build light EL#2.

As another example, as described above, the amount of heat transferred to the build surface MS depends on the characteristic(for example, at least one of the scanning speed, the number of pulses, the pulse width, the intensity, and the movement trajectory described above) of the build light EL. Therefore, the control apparatus 7 may control the characteristic of at least one of the build lights EL#1 and EL#2 so that the amount of heat transferred from the build light EL#1 to the build surface MS in the area that is irradiated with the build light EL#1 is equal to the amount of heat transferred from the build light EL#2 to the build surface MS in the area that is irradiated with the build light EL#2. In this case, as illustrated in FIG. 10, the positional relationship (for example, distance) between the build surface MS the condensed position CP#1 may not necessarily be the same as the positional relationship (for example, distance) between the build surface MS and the condensed position CP#2. For example, in the example illustrated in FIG. 10, the condensed position CP#1 is located on the build surface MS but the condensed position CP#2 is located at a position that is away from the build surface MS along the optical axis AX#2. In this case, he build surface MS is irradiated with the build light EL#2 in a defocused state, and therefore, the amount of heat transferred from the build light EL#2 to the build surface MS is smaller than that transferred from the build light EL#1 to the build surface MS in a case where the characteristic of the build light EL#1 is the same as the characteristic of the build light EL#2. Therefore, in the example illustrated in FIG. 10, the control apparatus 7 may control the characteristic of at least one of the build lights EL#1 and EL#2 so that the amount of heat transferred from the build light EL#2 to the build surface MS is increased and / or the amount of heat transferred from the build light EL#1 to the build surface MS is decreased. For example, the control apparatus 7 may control the characteristic of at least one of the build lights EL#1 and EL#2 so that the scanning speed of the build light EL#2 is slower than the scanning speed of the build light EL#1. For example, the control apparatus 7 may control the characteristic of at least one of the build lights EL#1 and EL#2 so that the number of pulses of the build light EL#2 is larger than the number of pulses of the build light EL#1. For example, the control apparatus 7 may control the characteristic of at least one of the build lights EL#1 and EL#2 so that the pulse width of the build light EL#2 is wider than the pulse width of the build light EL#1. For example, the control apparatus 7 may control the characteristic of at least one of the build lights EL#1 and EL#2 so that the intensity of the build light EL#2 is higher than the intensity of the build light EL#1. For example, the control apparatus 7 may control the characteristic of at least one of the build lights EL#1 and EL#2 so that the irradiation period of the build light EL#2 is longer than the irradiation period of the build light EL#1.

In a case where the build surface MS is the inclined surface, the control apparatus 7 may control the shape of the build unit areas BSA#1 and BSA#2 that are irradiated with the build lights EL#1 and EL#2 on the build surface MS, respectively , in addition to or instead of the second transferred heat amount control operation. Specifically, in a case where a driving aspect of the Galvano mirror 2112#1 does not change regardless of the build surface MS being inclined with respect to the optical axis AX#1 or not, there is a possibility that the shape of the build unit area BSA#1 that is irradiated with the build light EL#1 on the build surface MS that is the inclined surface inclined with respect to the optical axis AX#1 is different from the shape of the build unit area BSA#1 that is irradiated with the build light EL#1 on the build surface MS that is the horizontal surface orthogonal to the optical axis AX#1. Similarly, in a case where a driving aspect of the Galvano mirror 2112#2 does not change regardless of the build surface MS being inclined with respect to the optical axis AX#2 or not, there is a possibility that the shape of the build unit area BSA#2 that is irradiated with the build light EL#2 on the build surface MS that is the inclined surface inclined with respect to the optical axis AX#2 is different from the shape of the build unit area BSA#2 that is irradiated with the build light EL#2 on the build surface MS that is the horizontal surface orthogonal to the optical axis AX#2. As one example, in a case where the Galvano mirror 2112#1 is driven so that the build unit area BSA#1 that is irradiated with the build light EL#1 is circular, there is a possibility that the shape of the build unit area BSA#1 that is irradiated with the build light EL#1 on build surface MS that is the inclined surface is an oval shape different from the circular shape. When the shape of the build unit area BSA changes, there is a possibility that the build accuracy changes. Therefore, the control apparatus 7 may control the Galvano mirror 2112 so that the shape of the build unit area BSA that is irradiated with the build light EL on the build surface MS is a desired shape. For example, the control apparatus 7 may control the Galvano mirror 2112#1 so that both of the shape of the build unit area BSA#1 that is irradiated with the build light EL#1 on the build surface MS that is the inclined surface and the shape of the build unit area BSA#1 that is irradiated with the build light EL#1 on the build surface MS that is the horizontal surface are the same desired shape. For example, the control apparatus 7 may control the Galvano mirror 2112#2 so that both of the shape of the build unit area BSA#2 that is irradiated with the build light EL#2 on the build surface MS that is the inclined surface and the shape of the build unit area BSA#2 that is irradiated with the build light EL#2 on the build surface MS that is the horizontal surface are the same desired shape. As a result, even in a case where the build surface MS is the inclined surface, the build system SYS can build the build object on the build surface MS with relatively high build accuracy.

### (2-2-3) Third Transferred Heat Amount Control Operation

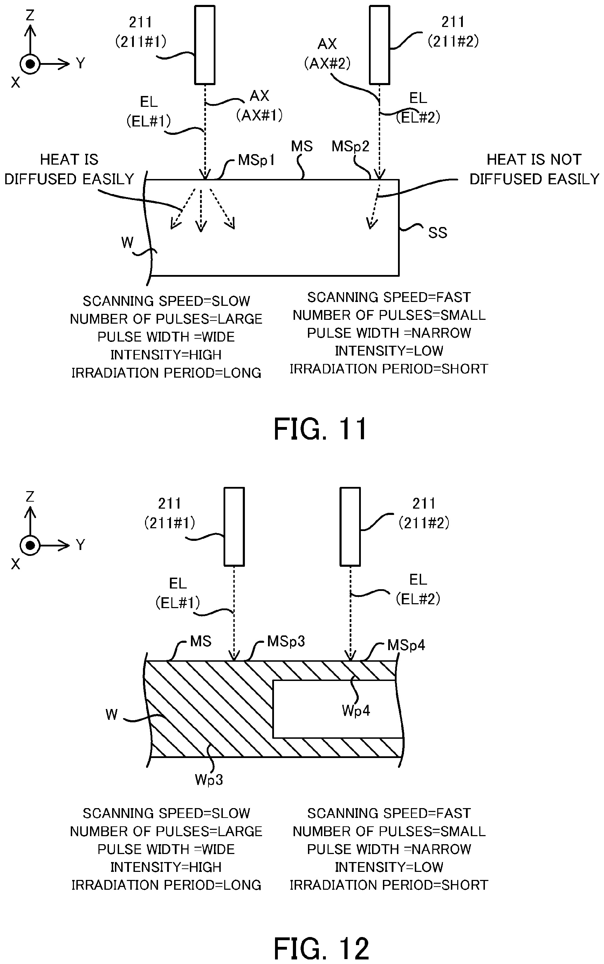

Next, the third transferred heat amount control operation will be described. The third transferred heat amount control operation is an operation for controlling the amount of heat transferred to the build surface MS that is set at an edge of an object or near the edge. One example of the build surface MS that is set at the edge of the object or near the edge is illustrated in FIG. 11. FIG. 11 illustrates an example in which the build surface MS is set on the surface of the workpiece W that is one example of the object. As illustrated in FIG. 11, the build surface MS includes a first area MSp1 and a second area MSp2 located at positions, respectively, that are different from each other in a direction along which the build surface MS spreads (namely, in a direction intersecting the optical axes AX#1 and AX#2). The second area MSp2 is located at a position that is closer to the edge of the workpiece W than the first area MSp1 is. Incidentally, the "edge of the workpiece W" here may mean a part of the workpiece W that includes an outer surface different from the build surface MS. In the example illustrated in FIG. 11, an upper surface of the workpiece W is set to be the build surface MS, and therefore, the edge of the workpiece W may mean a part of the workpiece W that includes a side surface SS of the workpiece W.

Here, in a case where the first area MSp1 and the second area MSp2 are irradiated with the build lights EL#1 and EL#2, respectively, there is a possibility that the build accuracy in the first area MSp1 is different from the build accuracy in the second area MSp2. Specifically, since the second area MSp2 is relatively close to the edge of the workpiece W, a diffusion path (namely, the diffusion path in the workpiece W) of heat that has been transferred to the second area Msp2 is smaller or less than a diffusion path of heat that has been transferred to the first area Msp1. As a result, the heat is accumulated in the second area Msp2, in which the heat is not diffused relatively easily, for a relatively longer time than in the first area Msp1, in which the heat is diffused relatively easily. As a result, there is a possibility that more build material M is molten in the second area Msp2 than in the first area Msp1 because the heat is accumulated for the relatively long time. Therefore, in a case where a series of build process is performed without considering a difference in a degree of the diffusion of the heat in a situation where the build object having a certain height should be built on the build surface MS, there is a possibility that the build object whose height varies according to the difference in the degree of the diffusion of the heat is built. Namely, there is a possibility that the build accuracy deteriorates.

Therefore, the control apparatus 7 may perform, as the third transferred heat amount control operation, the transferred heat amount control operation for controlling at least one of the build lights EL#1 and EL#2 so that the amount of heat transferred from the build light EL#2 to the build surface MS in the second area Msp2 in which the heat is not diffused relatively easily is smaller than the amount of heat transferred from the build light EL#1 to the build surface MS in the first area Msp1 in which the heat is diffused relatively easily. For example, the control apparatus 7 may control the characteristic of at least one of the build lights EL#1 and EL#2 so that the scanning speed of the build light EL#2 with which the second area MSp2 is irradiated is faster than the scanning speed of the build light EL#1 with which the first area MSp1 is irradiated. For example, the control apparatus 7 may control the characteristic of at least one of the build lights EL#1 and EL#2 so that the number of pulses of the build light EL#2 with which the second area MSp2 is irradiated is smaller than the number of pulses of the build light EL#1 with which the first area MSp1 is irradiated. For example, the control apparatus 7 may control the characteristic of at least one of the build lights EL#1 and EL#2 so that the pulse width of the build light EL#2 with which the second area MSp2 is irradiated is narrower than the pulse width of the build light EL#1 with which the first area MSp1 is irradiated. For example, the control apparatus 7 may control the characteristic of at least one of the build lights EL#1 and EL#2 so that the intensity of the build light EL#2 with which the second area MSp2 is irradiated is lower than the intensity of the build light EL#1 with which the first area MSp1 is irradiated. For example, the control apparatus 7 may control the characteristic of at least one of the build lights EL#1 and EL#2 so that the irradiation period of the build light EL#2 with which the second area MSp2 is irradiated is shorter than the irradiation period of the build light EL#1 with which the first area MSp1 is irradiated. As a result, the amount of heat transferred from the build light EL#2 to the build surface MS in the second area Msp2 is smaller than the amount of heat transferred from the build light EL#1 to the build surface MS in the first area Msp1. Therefore, even in a case where the build surface MS is set at the edge of the object, the build system SYS can build the build object on the build surface MS with relatively high build accuracy.

### (2-2-4) Fourth Transferred Heat Amount Control Operation

Next, the fourth transferred heat amount control operation will be described. The fourth transferred heat amount control operation is an operation for controlling the amount of heat transferred to the build surface MS that is set on a surface of an object including two parts whose sizes (so-called thicknesses) in a direction along at least one of the optical axes AX#1 and AX#2 are different from each other. One example of the build surface MS that is set on the surface of the object including the two parts whose thicknesses are different from each other is illustrated in FIG. 12. FIG. 12 illustrates an example in which the build surface MS set on the surface of the workpiece W that is one example of the object. As illustrated in FIG. 12, the workpiece W includes a first part Wp3 and a second part Wp4. The thickness of the first part Wp3 is thicker than the thickness of the second part Wp4. In this case, the build surface MS includes a first area MSp3 corresponding to a surface of the relatively thick first part Wp3 and a second area MSp4 corresponding to a surface of the relatively thin second part Wp4.

Here, in a case where the first area MSp3 and the second area MSp4 are irradiated with the build lights EL#1 and EL#2, respectively, there is a possibility that the build accuracy in the first area MSp3 is different from the build accuracy in the second area MSp4. Specifically, since the second area MSp4 is set on the relatively thin second part Wp4, there is a possibility the second area MSp4 is molten melt more than necessary in a case where the characteristic of the build light EL#1 is the same as the characteristic of the build light EL#2. Therefore, in a case where a series of build process is performed without considering a difference in the thickness of the workpiece W in a situation where the build object having a certain height should be built on the build surface MS, there is a possibility that the build object whose height varies according to the difference in the thickness of the workpiece W is built. Namely, there is a possibility that the build accuracy deteriorates.

Therefore, the control apparatus 7 may perform, as the fourth transferred heat amount control operation, the transferred heat amount control operation for controlling at least one of the build lights EL#1 and EL#2 so that the amount of heat transferred from the build light EL#2 to the build surface MS in the second area Msp4 that is set on the relatively thin second part Wp4 is smaller than the amount of heat transferred from the build light EL#1 to the build surface MS in the first area Msp3 that is set on the relatively thick first part Wp3. For example, the control apparatus 7 may control the characteristic of at least one of the build lights EL#1 and EL#2 so that the scanning speed of the build light EL#2 with which the second area MSp4 is irradiated is faster than the scanning speed of the build light EL#1 with which the first area MSp3 is irradiated. For example, the control apparatus 7 may control the characteristic of at least one of the build lights EL#1 and EL#2 so that the number of pulses of the build light EL#2 with which the second area MSp4 is irradiated is smaller than the number of pulses of the build light EL#1 with which the first area MSp3 is irradiated. For example, the control apparatus 7 may control the characteristic of at least one of the build lights EL#1 and EL#2 so that the pulse width of the build light EL#2 with which the second area MSp4 is irradiated is narrower than the pulse width of the build light EL#1 with which the first area MSp3 is irradiated. For example, the control apparatus 7 may control the characteristic of at least one of the build lights EL#1 and EL#2 so that the intensity of the build light EL#2 with which the second area MSp4 is irradiated is lower than the intensity of the build light EL#1 with which the first area MSp3 is irradiated. For example, the control apparatus 7 may control the characteristic of at least one of the build lights EL#1 and EL#2 so that the irradiation period of the build light EL#2 with which the second area MSp4 is irradiated is shorter than the irradiation period of the build light EL#1 with which the first area MSp3 is irradiated. As a result, the amount of heat transferred from the build light EL#2 to the build surface MS in the second area MSp4 is smaller than the amount of heat transferred from the build light EL#1 to the build surface MS in the first area MSp3. Therefore, even in a case where the build surface MS is set on the object whose thickness varies, the build system SYS can build the build object on the build surface MS with relatively high build accuracy.

### (2-3) Scanning Control Operation

Next, a scanning speed control operation, which may be performed by the build system SYS in parallel with the above-described additive manufacturing operation, will be described. The scanning control operation is an operation for controlling a scanning aspect (a movement aspect) of the target irradiation area EA1 in the build unit area BSA#1 and a scanning aspect (a movement aspect) of the target irradiation area EA2 in the build unit area BSA#2. As described above, the target irradiation area EA#1 is moved in the build unit area BSA#1 by the Galvano mirror 2112#1. Similarly, the target irradiation area EA#2 is moved in the build unit area BSA#2 by the Galvano mirror 2112#2. Therefore, the scanning control operation is an operation for controlling the scanning aspect (the movement aspect) of the target irradiation area EA1 in the build unit area BSA#1 and the scanning aspect (the movement aspect) of the target irradiation area EA2 in the build unit area BSA#2 by using the Galvano mirrors 2112#1 and 2112#2. Incidentally, in the below-described description, an example in which the build unit area BSA#1 is coincident with the build unit area BSA#2 will be described for convenience of description. For this reason, in the below-described description, the build unit area BSA#1 and BSA#2 are collectively referred to as the build unit area BSA.

In the present example embodiment, the build system SYS may perform at least one of a first scanning control operation to a second scanning control operation. Therefore, next, the first scanning control operation to the second scanning control operation will be described in order.

### (2-3-1) First Scanning Control Operation

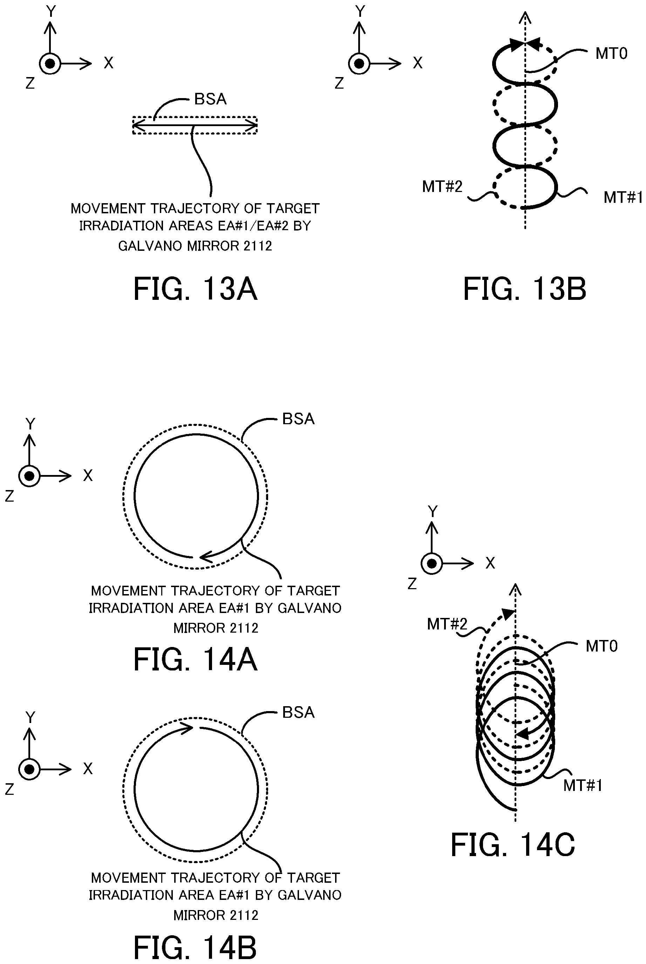

The first scanning control operation is an operation for moving each of the target irradiation areas EA#1 and EA#2 along a single direction in the build unit area BSA. Specifically, as illustrated in FIG. 13A, the control apparatus 7 may control the Galvano mirrors 2112#1 and 2112#2 so that each of the target irradiation areas EA#1 and EA#2 moves along the single direction in the build unit area BSA. Especially, the control apparatus 7 may control the Galvano mirrors 2112#1 and 2112#2 so that each of the target irradiation areas EA#1 and EA#2 reciprocates at least one time (in some cases, repeatedly) along the single direction in the build unit area BSA. In this case, the shape of the build unit area BSA in which each of the target irradiation areas EA#1 and EA#2 moves may be a rectangular shape whose longitudinal direction is the movement direction of each of the target irradiation areas EA#1 and EA#2. In the example illustrated in FIG. 13, each of the target irradiation areas EA#1 and EA#2 repeatedly reciprocates along the X-axis direction. In this case, the shape of the build unit area BSA may be a rectangular shape whose longitudinal direction is the X-axis direction. In this case, a size of the build unit area BSA in the Y-axis direction (namely, in the movement direction of the build unit area BSA) may be equal to the spot width of the build light EL, or the size of the build unit area BSA in the movement direction may be considered to be substantially zero.

The control apparatus 7 may control the Galvano mirrors 2112#1 and 2112#2 so that the number of times by which the target irradiation area EA#1 reciprocates in the build unit area BSA per unit time (in the below-described description, it is referred to simply as a "reciprocation number of times") is equal to the number of times by which the target irradiation area EA#2 reciprocates in the build unit area BSA However, the control apparatus 7 may control the Galvano mirrors 2112#1 and 2112#2 so that the reciprocation number of times of the target irradiation area EA#1 is different from the reciprocation number of times of the target irradiation area EA#2 in at least a part of a period. Furthermore, the control apparatus 7 may control the Galvano mirrors 2112#1 and 2112#2 so that the movement direction of the target irradiation area EA#1 in the build unit area BSA is opposite to the movement direction of the target irradiation area EA#2 in the build unit area BSA. However, the control apparatus 7 may control the Galvano mirrors 2112#1 and 2112#2 so that the movement direction of the target irradiation area EA#1 is the same as the movement direction of the target irradiation area EA#2 in at least a part of the period. As one example, the control apparatus 7 may control the Galvano mirrors 2112#1 and 2112#2 so that an X coordinate X#1 of the target irradiation area EA#1 at a time t is expressed by a formula 1 "X#1 = A × sin (2π × f × t + α)" and an X coordinate X#2 of the target irradiation area EA#2 at the time t is expressed by a formula 2 "X#2 = -A × sin (2π × f × t + α)" in a coordinate system whose origin point is a center of the build unit area BSA. Note that "f" in the above-described formulas 1 and 2 represents the reciprocation number of times (namely, a frequency) of the target irradiation areas EA#1 and EA#2, "A" represents the amplitude corresponding to a half of the moving distance of the reciprocation of the target irradiation areas EA#1 and EA#2, and "α" represents a phase amount representing an initial position of the target irradiation areas EA#1 and EA#2. At least one of f, A and α may be designated by the operator of the build system SYS.

The control apparatus 7 may move at least one of the build head 21 and the stage 31 so that the build unit area BSA moves on the build surface MS even in a period during which each of the target irradiation areas EA#1 and EA#2 is moved in the build unit area BSA by using the Galvano mirrors 2112#1 and 2112#2. Namely, the control apparatus 7 may change the relative positional relationship between the build head 21 and the stage 31 in parallel with the movement of each of the target irradiation areas EA#1 and EA#2 in the build unit area BSA. Especially, the control apparatus 7 may move each of the target irradiation areas EA#1 and EA#2 in the build unit area BSA and move the build unit area BSA so that the movement direction of the build unit area BSA intersects (in some cases, is orthogonal to) the movement direction of the target irradiation areas EA#1 and EA#2 in the build unit area BSA. In the example illustrated in FIG. 13A, each of the target irradiation areas EA#1 and EA#2 moves along the X-axis direction in the build unit area BSA, therefore, the control apparatus 7 may move the build unit area BSA along the Y-axis direction.

As a result, due to the movement of the target irradiation areas EA#1 and EA#2 in the build unit area BSA and the movement of the build unit area BSA, the target irradiation areas EA#1 and EA#2 move along the movement trajectories MT#1 and MT#2 illustrated in FIG. 13B on the build surface MS, respectively. Specifically, the target irradiation area EA#1 moves along a direction intersecting the movement trajectory MT0 while moving along the movement trajectory MT0 of the build unit area BSA. Namely, the target irradiation area EA#1 moves along the wave-shaped movement trajectory MT#1 that oscillates around the movement trajectory MT0. Similarly, the target irradiation area EA#2 moves along a direction intersecting the movement trajectory MT0 while moving along the movement trajectory MT0 of the build unit area BSA. Namely, the target irradiation area EA#2 moves along the wave-shaped movement trajectory MT#2 that oscillates around the movement trajectory MT0.

However, the control apparatus 7 may move each of the target irradiation areas EA#1 and EA#2 in the build unit area BSA and move the build unit area BSA so that the movement direction of the build unit area BSA is parallel to the movement direction of the target irradiation areas EA#1 and EA#2 in the build unit area BSA. In the example illustrated in FIG. 13A, each of the target irradiation areas EA#1 and EA#2 moves along the X-axis direction in the build unit area BSA, therefore, the control apparatus 7 may move the build unit area BSA along the X-axis direction. In this case, the fact remains that the build system SYS can build the build obj ect.

### (2-3-2) Second Scanning Control Operation

Next, the second scanning control operation will be described. The second scanning control operation is different from the first scanning control operation in that it is an operation for moving each of the target irradiation areas EA#1 and EA#2 along a plurality of directions in the build unit area BSA. Another feature of the second scanning control operation may be the same as another feature of the first scanning control operation.

Specifically, the control apparatus 7 may control the Galvano mirrors 2112#1 and 2112#2 so that each of the target irradiation areas EA#1 and EA#2 moves along the plurality of directions in the build unit area BSA. For example, the control apparatus 7 may control the Galvano mirrors 2112#1 and 2112#2 so that each of the target irradiation areas EA#1 and EA#2 moves along each of a first direction that is along the build surface MS and a second direction that is along the build surface MS and that intersects the first direction in the build unit area BSA. For example, the control apparatus 7 may control the Galvano mirrors 2112#1 and 2112#2 so that each of the target irradiation areas EA#1 and EA#2 moves along each of a third direction that is along the movement direction of the build unit area BSA and a fourth direction that intersects the movement direction of the build unit area BSA in the build unit area BSA. For example, the control apparatus 7 may control the Galvano mirrors 2112#1 and 2112#2 so that each of the target irradiation areas EA#1 and EA#2 moves along each of the X-axis direction and the Y-axis direction in the build unit area BSA.

Especially, the control apparatus 7 may control the Galvano mirrors 2112#1 and 2112#2 so that each of the target irradiation areas EA#1 and EA#2 reciprocates at least one time (alternatively, reciprocates repeatedly in some cases) along the X-axis direction (alternatively, in any one direction), and reciprocates at least one time (alternatively, reciprocates repeatedly in some cases) along the Y-axis direction (alternatively, in another direction intersecting the one direction) in the build unit area BSA. The control apparatus 7 may control the Galvano mirrors 2112#1 and 2112#2 so that each of the target irradiation areas EA#1 and EA#2 reciprocates regularly along the X-axis direction (alternatively, in any one direction), and reciprocates regularly along the Y-axis direction (alternatively, in another direction intersecting the one direction) in the build unit area BSA.

As one example, as illustrated in FIG. 14A and FIG. 14B, the control apparatus 7 may move each of the target irradiation areas EA#1 and EA#2 along the plurality of directions so that the movement trajectory of each of the target irradiation areas EA#1 and EA#2 in the build unit area BSA is a circular movement trajectory. In this case, the control apparatus 7 may control the Galvano mirrors 2112#1 and 2112#2 so that the X coordinate X#1 of the target irradiation area EA#1 at the time t is expressed by a formula 3 "X#1 = A × sin (2π × f × t + α)", an Y coordinate Y#1 of the target irradiation area EA#1 at the time t is expressed by a formula 4 "Y#1 = A × cos (2π × f × t + α)", the X coordinate X#2 of the target irradiation area EA#2 at the time t is expressed by a formula 5 "X#2 = -A × sin (2π × f × t + α)", and an Y coordinate Y#2 of the target irradiation area EA#2 at the time t is expressed by a formula 4 "Y#2 = -A × cos (2π × f × t + α)" in the coordinate system whose origin point is the center of the build unit area BSA. Note that "f" in the above-described formulas 3 to 6 represents the reciprocation number of times (namely, a frequency) of the target irradiation areas EA#1 and EA#2, "A" represents the amplitude corresponding to a half of the moving distance of the reciprocation of the target irradiation areas EA#1 and EA#2, and "α" represents a phase amount representing an initial position of the target irradiation areas EA#1 and EA#2 in each of the X-axis direction and the Y-axis direction. At least one of f, A and α may be designated by the operator of the build system SYS. According to the formulas 3 to 6, the target irradiation areas EA#1 and EA#2 move so that (i) the reciprocation number of times of the target irradiation area EA#1 in the X-axis direction, the reciprocation number of times of the target irradiation area EA#1 in the Y-axis direction, the reciprocation number of times of the target irradiation area EA#2 in the X-axis direction, and the reciprocation number of times of the target irradiation area EA#2 in the Y-axis direction are all equal to one another, and (ii) a rotational direction of the target irradiation area EA#1 is opposite to a rotational direction of the target irradiation area EA#2.

The control apparatus 7 may move each of the target irradiation areas EA#1 and EA#2 along the plurality of directions so that the initial position of the target irradiation area EA#1 is different from the initial position of the target irradiation area EA#2. For example, each of the target irradiation areas EA#1 and EA#2 may be moved along the plurality of directions so that the initial position of the target irradiation area EA#1 is different from the initial position of the target irradiation area EA#2 in at least one of the X-axis direction and the Y-axis direction. In this case, the control apparatus 7 may modify at least one of the formulas 3 and 5 so that the phase amount α in the above-described formula 3 representing the initial position of the target irradiation area EA#1 in the X-axis direction is different from the phase amount α in the above-described formula 5 representing the initial position of the target irradiation area EA#2 in the X-axis direction. As a result, the initial position of the target irradiation area EA#1 is different from the initial position of the target irradiation area EA#2 in the X-axis direction. Moreover, the control apparatus 7 may modify at least one of the formulas 4 and 6 so that the phase amount α in the above-described formula 4 representing the initial position of the target irradiation area EA#1 in the Y-axis direction is different from the phase amount α in the above-described formula 6 representing the initial position of the target irradiation area EA#2 in the Y-axis direction. As a result, the initial position of the target irradiation area EA#1 is different from the initial position of the target irradiation area EA#2 in the Y-axis direction. Incidentally, FIG. 14A and FIG. 14B illustrates an example in which the initial position of the target irradiation area EA#1 is different from the initial position of the target irradiation area EA#2 in the Y-axis direction.

Here, in a case where the initial position of the target irradiation area EA#1 is different from the initial position of the target irradiation area EA#2 in at least one of the X-axis direction and the Y-axis direction, there is a higher possibility that the target irradiation areas EA#1 and EA#2 move so that the target irradiation areas EA#1 and EA#2 are not located at the same position at the same time. In a case where the target irradiation areas EA#1 and EA#2 are located at the same position at the same time, the amount of heat transferred to the build surface MS at that timing increases, compared to a case where the target irradiation areas EA#1 and EA#2 are not located at the same position at the same time. As a result, there is a higher possibility that a magnitude of the amount of heat transferred from the build lights EL#1 and EL#2 to the build unit area BSA varies in the build unit area BSA. Therefore, the control apparatus 7 may move the target irradiation areas EA#1 and EA#2 so that the target irradiation areas EA#1 and EA#2 are not located at the same position at the same time by controlling the initial positions of the target irradiation areas EA#1 and EA#2. Specifically, since the initial positions of the target irradiation areas EA#1 and EA#2 depend on the phase amounts α in the above-described formulas 3 to 6, the control apparatus 7 may move the target irradiation areas EA#1 and EA#2 so that the target irradiation areas EA#1 and EA#2 are not located at the same position at the same time by controlling the phase amounts α representing the initial positions of the target irradiation areas EA#1 and EA#2. As a result, there is a lower possibility that the magnitude of the amount of heat transferred from the build lights EL#1 and EL#2 to the build unit area BSA varies in the build unit area BSA. As a result, the build system SYS can build the build object on the build surface MS with relatively high build accuracy in a case where each of the target irradiation areas EA#1 and EA#2 is moved along the plurality of directions in the build unit area BSA,.

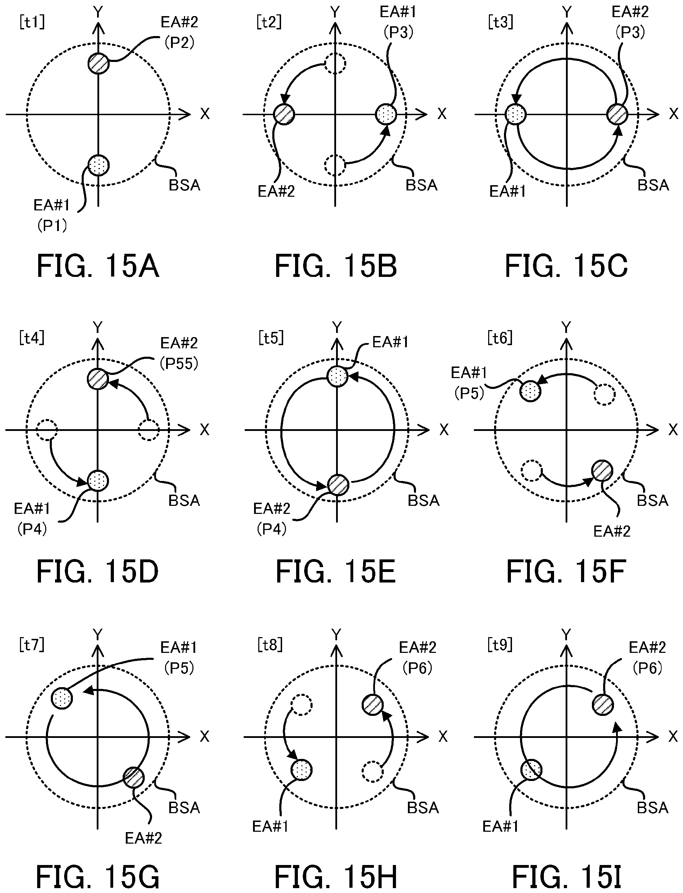

Here, an example of the movement of the target irradiation areas EA#1 and EA#2 in the build unit area BSA in a case where the initial position of the target irradiation area EA#1 is different from the initial position of the target irradiation area EA#2 in at least one of the X-axis direction and the Y-axis direction will be described with reference to FIG. 15A to FIG. 15i. Incidentally, FIG. 15(a) to FIG. 15(i) illustrate an example in which the formulas 4 and 6 are modified so that a difference between the phase amount α in the formula 4 and the phase amount α in the formula 6 described above is 180 degrees. In this case, as illustrated in FIG. 15A, at a time 11, the build head 21 may irradiate the target irradiation area EA#1 that is located at a position P1 with the build light EL#1 and irradiate the target irradiation area EA#2 that is located at a position P2 different from the position P1 with the build light EL#2. FIG. 15A illustrates that the position P1 that is the initial position of the target irradiation area EA#1 is different from the position P2 that is the initial position of target irradiation area EA#2 in the Y-axis direction. Then, as illustrated in FIG. 15B, at a time t2 that is different from the time 11, the build head 2 may irradiate the target irradiation area EA#1 that is located at a position P3 different from the positions P1 to P2 with the build light EL#1 by using the Galvano mirrors 2112#1 and #2 to move the target irradiation areas EA#1 and EA#2. Then, as illustrated in FIG. 15C, at a time t3 that is different from the time t2, the build head 2 may irradiate the target irradiation area EA#2 that is located at the position P3 with the build light EL#2 by using the Galvano mirrors 2112#1 and #2 to move the target irradiation areas EA#1 and EA#2. Then, as illustrated in FIG. 15D, at a time t4 that is different from the time t1 to the time t3, the build head 2 may irradiate the target irradiation area EA#1 that is located at a position P4 with the build light EL#1 by using the Galvano mirrors 2112#1 and #2 to move the target irradiation areas EA#1 and EA#2. Moreover, at the time t4, the build head 2 may irradiate the target irradiation area EA#2 that is located at a position P55 different from the position P4 with the build light EL#2. Here, the control apparatus 7 may move the build unit area BSA by moving at least one of the build head 21 and the stage 31 in parallel with the movement of the target irradiation areas EA#1 and EA#2. As one example, the positions P1 to P3 that are irradiated with the build light EL#1 or EL#2 at the time t1 to the time t3 may be included in a first area on the build surface MS on which the build unit area BSA is set. On the other hand, the positions P4 and P55 that are irradiated with the build lights EL#1 and EL#2 at time t4, respectively, may be included in a second area on the build surface MS on which the build unit area BSA, which has moved from the first area on the build surface MS, is set. In this case, the positions P4 and P55 may be different from the positions P1 to P3. Then, as illustrated in FIG. 15E, at a time t5 that is different from the time t1 to the time t4, the build head 2 may irradiate the target irradiation area EA#2 that is located at the position P4 with the build light EL#2 by using the Galvano mirrors 2112#1 and #2 to move the target irradiation areas EA#1 and EA#2. Then, as illustrated in FIG. 15F, at a time t6 that is different from the time t1 to the time t5, the build head 2 may irradiate the target irradiation area EA#1 that is located at a position P5 different from the positions P1 to P4 with the build light EL#1 by using the Galvano mirrors 2112#1 and #2 to move the target irradiation areas EA#1 and EA#2. Then, as illustrated in FIG. 15G, at a time t7 that is different from the time t1 to the time t6, the build head 2 may irradiate the target irradiation area EA#1 that is located again at the position P5 with the build light EL#1 by using the Galvano mirrors 2112#1 and #2 to move the target irradiation areas EA#1 and EA#2. Then, as illustrated in FIG. 15H, at a time t8 that is different from the time t1 to the time t7, the build head 2 may irradiate the target irradiation area EA#2 that is located at a position P6 different from the position P5 with the build light EL#2 by using the Galvano mirrors 2112#1 and #2 to move the target irradiation areas EA#1 and EA#2. Then, as illustrated in FIG. 15I, at a time t9 that is different from the time t1 to the time t8, the build head 2 may irradiated the target irradiation area EA#2 that is located again at the position P6 with the build light EL#2 by using the Galvano mirrors 2112#1 and #2 to move the target irradiation areas EA#1 and EA#2. In this manner, it can be seen that there is a higher possibility that the target irradiation areas EA#1 and EA#2 are not located at the same position at the same time, in a case where the initial position of the target irradiation area EA#1 is different from the initial position of the target irradiation area EA#2 in at least one of the X-axis direction and the Y-axis direction.

Incidentally, in the above-described example, the difference between the phase amount α in the formula 4 and the phase amount α in the formula 6 is 180 degrees, however, the difference may not be 180 degrees. Moreover, the rotational direction of the target irradiation area EA#1 may be the same as the rotational direction of the target irradiation area EA#2, and angular velocities (angular frequencies) of the target irradiation areas EA#1 and EA#2 may be equal to or may be different from each other.

Incidentally, as can be seen from the movement trajectory MT#1 of the target irradiation area EA#1 and the movement trajectory MT#2 of the target irradiation area EA#2 on the build surface MS illustrated in FIG. 14C, the movement trajectory MT#1 intersects the movement trajectory MT#2. In this case, the target irradiation areas EA#1 and EA#2 are not located at the same position at the same time as described above, and therefore, a position at which the movement trajectory MT#1 intersects the movement trajectory MT#2 is not basically irradiated with the build lights EL#1 and EL#2 at the same time. However, the control apparatus 7 may allow the position at which the movement trajectory MT#1 intersects the movement trajectory MT#2 to be irradiated with the build lights EL#1 and EL#2 at the same time. In this case, the build head 21 may irradiate the position at which the movement trajectory MT#1 intersects the movement trajectory MT#2 with the build lights EL#1 and EL#2 at the same time. Namely, the build head 21 may irradiate the same position on the build surface MS with the build lights EL#1 and EL#2 at a certain time.

Even in a case where each of the target irradiation areas EA#1 and EA#2 is moved along the plurality of directions in the build unit area BSA, the build unit area BSA may be moved on the build surface MS in parallel with the movement of the target irradiation areas EA#1 and EA#2 in the build unit area BSA. For example, FIG. 14C illustrates the movement trajectories MT#1 and MT#2 of the target irradiation areas EA#1 and EA#2 on the build surface MS in a case where the build unit area BSA is moved along the Y-axis direction while moving the target irradiation areas EA#1 and EA#2 along the movement trajectories illustrated in FIG. 14A and FIG. 14B in the build unit area BSA, respectively.

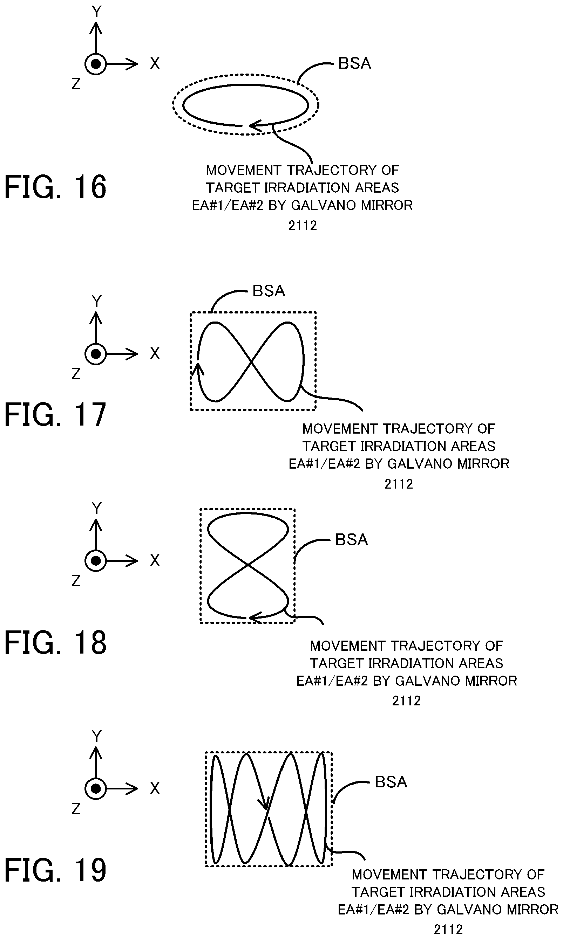

As another example, as illustrated in FIG. 16, the control apparatus 7 may move each of the target irradiation areas EA#1 and EA#2 along the plurality of directions so that the movement trajectory of each of the target irradiation areas EA#1 and EA#2 in the build unit area BSA is an oval movement trajectory. In this case, the control apparatus 7 may control the Galvano mirrors 2112#1 and 2112#2 so that the X coordinate X#1 of the target irradiation area EA#1 at the time t is expressed by a formula 7 "X#1 = A × sin (2π × f × t + α)", the Y coordinate Y#1 of the target irradiation area EA#1 at the time t is expressed by a formula 8 "Y#1 = B × cos (2π × f × t + α)", the X coordinate X#2 of the target irradiation area EA#2 at the time t is expressed by a formula 9 "X#2 = -A × sin (2π × f × t + α)", and the Y coordinate Y#2 of the target irradiation area EA#2 at the time t is expressed by a formula 10 "Y#2 = -B × cos (2π × f × t + α)" in the coordinate system whose origin point is the center of the build unit area BSA. Note that "B" represents an amplitude corresponding to a half of the moving distance of the reciprocation of the target irradiation areas EA#1 and EA#2 in the Y-axis direction (an amplitude that is different from the amplitude A). At least one of f, A and α may be designated by the operator of the build system SYS. According to the formulas 7 to 10, the target irradiation areas EA#1 and EA#2 move so that (i) the reciprocation number of times of the target irradiation area EA#1 in the X-axis direction, the reciprocation number of times of the target irradiation area EA#1 in the Y-axis direction, the reciprocation number of times of the target irradiation area EA#2 in the X-axis direction, and the reciprocation number of times of the target irradiation area EA#2 in the Y-axis direction are all equal to one another, (ii) a rotational direction of the target irradiation area EA#1 is opposite to a rotational direction of the target irradiation area EA#2, and (iii) the moving distance of the reciprocation of the target irradiation areas EA#1 and EA#2 in the Y-axis direction is different from the moving distance of the reciprocation of the target irradiation areas EA#1 and EA#2 in the X-axis direction.

As another example, as illustrated in FIG. 17 to FIG. 19, the control apparatus 7 may move the target irradiation areas EA#1 and EA#2 along the plurality of directions so that the reciprocation number of times of each of the target irradiation areas EA#1 and EA#2 in the X-axis direction is different from the reciprocation number of times of each of the target irradiation areas EA#1 and EA#2 in the Y-axis direction. FIG. 17 illustrates an example in which the reciprocation number of times of each of the target irradiation areas EA#1 and EA#2 in the X-axis direction is half the reciprocation number of times of each of the target irradiation areas EA#1 and EA#2 in the Y-axis direction. In this case, the movement trajectory of each of the target irradiation areas EA#1 and EA#2 in the build unit area BSA may be a movement trajectory that draws the figure of eight. FIG. 18 illustrates an example in which the reciprocation number of times of each of the target irradiation areas EA#1 and EA#2 in the X-axis direction is twice the reciprocation number of times of each of the target irradiation areas EA#1 and EA#2 in the Y-axis direction. In this case, the movement trajectory of each of the target irradiation areas EA#1 and EA#2 in the build unit area BSA may be a movement trajectory that draws an infinity symbol (∞). FIG. 19 illustrates an example in which the reciprocation number of times of each of the target irradiation areas EA#1 and EA#2 in the X-axis direction is 1/4 times the reciprocation number of times of each of the target irradiation areas EA#1 and EA#2 in the Y-axis direction.

In a case where the reciprocation number of times of each of the target irradiation areas EA#1 and EA#2 in the X-axis direction is different from the reciprocation number of times of each of the target irradiation areas EA#1 and EA#2 in the Y-axis direction, the control apparatus 7 may move each of the target irradiation areas EA#1 and EA#2 in the plurality of directions based on below-described formulas 11 to 14. Specifically, the control apparatus 7 may control the Galvano mirrors 2112#1 and 2112#2 so that the X coordinate X#1 of the target irradiation area EA#1 at the time t is expressed by a formula 11 "X#1 = A × sin (2π × f1 × t + α1)", the Y coordinate Y#1 of the target irradiation area EA#1 at the time t is expressed by a formula 12 "Y#1 = A × cos (2π × f2 × t + α2)", the X coordinate X#2 of the target irradiation area EA#2 at the time t is expressed by a formula 13 "X#2 = A × sin (2π × f3 × t + α3)", and the Y coordinate Y#2 of the target irradiation area EA#2 at the time t is expressed by a formula 14 "Y#2 = A × cos (2π × f4 × t + α4)" in the coordinate system whose origin point is the center of the build unit area BSA. Note that, in the above-described formula 11, "f1" represents an angular frequency corresponding to the reciprocation number of times of the target irradiation area EA#1 in the X-axis direction and "α1" represents a phase amount representing the initial position of the target irradiation area EA#1 in the X-axis direction. In the above-described formula 12, "f2" represents an angular frequency corresponding to the reciprocation number of times of the target irradiation area EA#1 in the Y-axis direction and "α2" represents a phase amount representing the initial position of the target irradiation area EA#1 in the Y-axis direction. In the above-described formula 13, "f3" represents an angular frequency corresponding to the reciprocation number of times of the target irradiation area EA#2 in the X-axis direction and "α3" represents a phase amount representing the initial position of the target irradiation area EA#2 in the X-axis direction. In the above-described formula 14, "f4" represents an angular frequency corresponding to the reciprocation number of times of the target irradiation area EA#2 in the Y-axis direction and "α4" represents a phase amount representing the initial position of the target irradiation area EA#2 in the Y-axis direction. In this case, in a case where a condition "f1 ≠ f2" is satisfied, the above-described condition "the reciprocation number of times of the target irradiation area EA#1 in the X-axis direction is different from the reciprocation number of times of the target irradiation area EA#1 in the Y-axis direction" is satisfied. In a case where a condition "f3 ≠ f4" is satisfied, the above-described condition "the reciprocation number of times of the target irradiation area EA#2 in the X-axis direction is different from the reciprocation number of times of the target irradiation area EA#2 in the Y-axis direction" is satisfied.

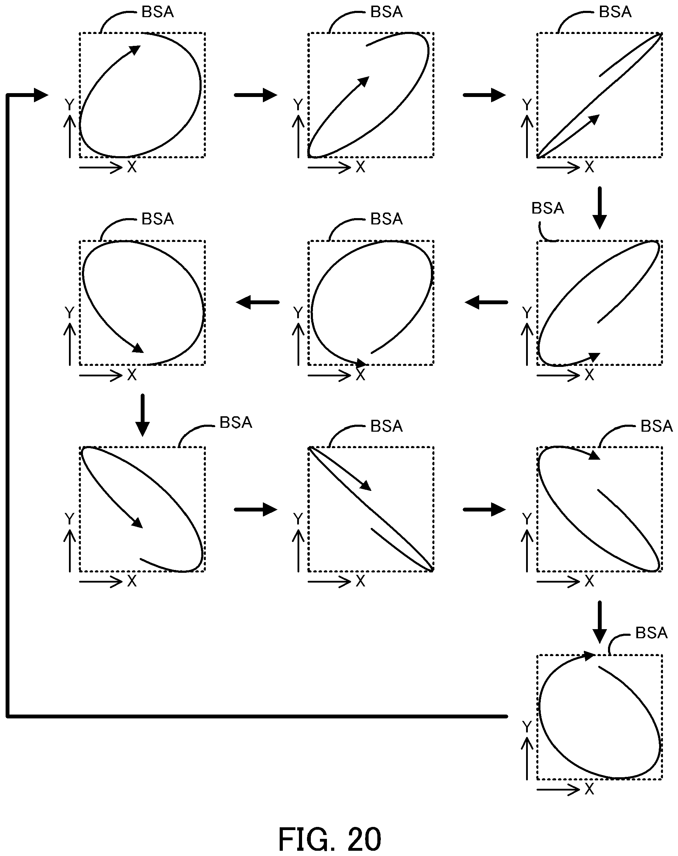

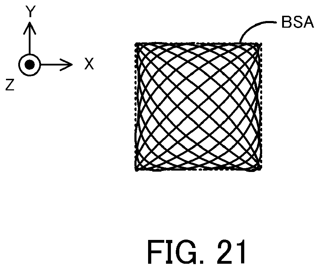

In a case where these conditions are satisfied, the shape of the build unit area BSA, in which the target irradiation areas EA#1 and EA#2 move according to the above-described formulas 11 to 14, may be regarded as a substantially rectangular shape. Specifically, the target irradiation areas EA#1 and EA#2 that move according to the formulas 11 to 14 satisfying such conditions that f1 = f3, f2 = f4 = 0.9 × f1 = 0.9 × f3, α1 = α2 = 0, and α3 = α4 = 180 degrees as an example of the above-described formulas, will be described with reference to FIG. 20 and FIG. 21. The below-described is a description of the target irradiation areas EA#1 and EA#2. In this case, the control apparatus 7 move the target irradiation area EA#1 and EA#2 based on the formula 11 of "X#1 = A × sin (2π × f1 × t)", the formula 12 of "Y#1 = A × cos (2π × (0.9 × f1) × t)", the formula 13 of "X#2 = A × sin (2π × f1 × t + π)", and the formula 14 "Y#2 = A × cos (2π × (0.9 × f1) × t + π)". Here, FIG. 20 illustrates the movement trajectory of the target irradiation area EA#1 in the build unit area BSA by dividing the this movement trajectory for each period during which the target irradiation area EA#1 reciprocates one time along the X-axis direction. As illustrated in FIG. 20, the control apparatus 7 repeats an operation, which is for reciprocating the target irradiation area EA#1 along the X-axis direction one time, 10 times while gradually changing the movement trajectory of the target irradiation area EA#1. As a result, the shape of the build unit area BSA in which the target irradiation area EA#1 moves may be considered to be the same as the rectangle shape by the 10 times reciprocation of the target irradiation area EA#1 along the X-axis direction as illustrated in FIG. 21. The same is true for the target irradiation area EA#2. In this manner, the control apparatus 7 may make the shape of the build unit area BSA be the desired shape by adjusting the movement trajectories of the target irradiation areas EA#1 and EA#2. Note that FIG. 21 illustrates the movement trajectory obtained by superimposing the 10 movement trajectories illustrated in FIG. 20.

The phase amount α1 to the phase amount α4 may satisfy below-described four conditions. Specifically, the phase amount α1 to the phase amount α4 may satisfy such a first condition that the phase amount α1 is different from the phase amount α2 by a multiple of 45 degrees or the phase amount α1 is equal to the phase amount α2. Namely, the phase amount α1 to the phase amount α4 may satisfy such a first condition that |α1-α2| = 45 degrees × N1 (note that N1 is an integer that is equal to or larger than 1) or α1 = α2. Furthermore, the phase amount α1 to the phase amount α4 may satisfy such a second condition that the phase amount α3 is different from the phase amount α4 by a multiple of 45 degrees or the phase amount α3 is equal to the phase amount α4. Namely, the phase amount α1 to the phase amount α4 may satisfy such a second condition that |α3-α4| = 45 degrees × N2 (note that N2 is an integer that is equal to or larger than 1) or α3 = α4. Furthermore, the phase amount α1 to the phase amount α4 may satisfy such a third condition that the phase amount α1 is different from the phase amount α3 by a multiple of 90 degrees or the phase amount α1 is equal to the phase amount α3. Namely, the phase amount α1 to the phase amount α4 may satisfy such a third condition that |α1-α3| = 90 degrees × N3 (note that N3 is an integer that is equal to or larger than 1) or α1 = α3. Furthermore, the phase amount α1 to the phase amount α4 may satisfy such a fourth condition that the phase amount α2 is different from the phase amount α4 by a multiple of 45 degrees or the phase amount α2 is equal to the phase amount α4. Namely, the phase amount α1 to the phase amount α4 may satisfy such a fourth condition that |α2-α4| = 45 degrees × N4 (note that N4 is an integer that is equal to or larger than 1) or α2 = α4.

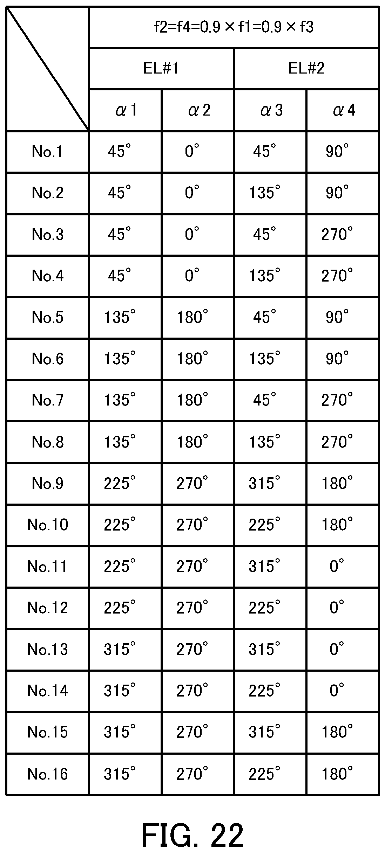

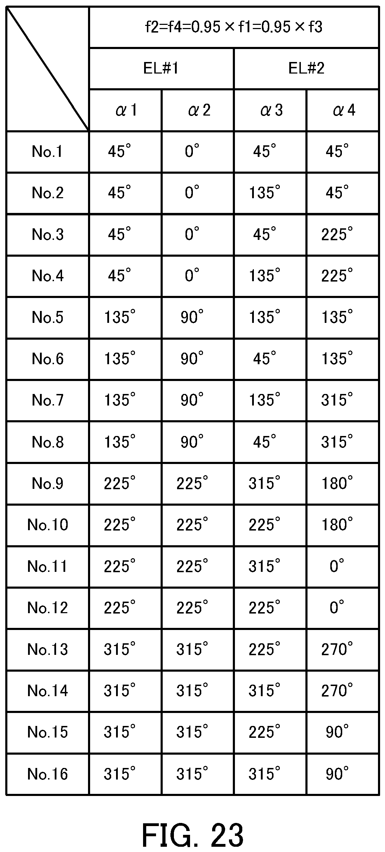

One example of the phase amount α1 to the phase amount α4 satisfying the first condition to the fourth condition described above is illustrated in FIG. 22 and FIG. 23. Specifically, FIG. 22 illustrates one example of the phase amount α1 to the phase amount α4 satisfying the first condition to the fourth condition described above in the above-described formulas satisfying the condition that f2 = f4 = 0.9 × f1 = 0.9 × f3. FIG. 22 illustrates 16 combinations as examples of the phase amount α1 to the phase amount α4 that satisfy the first condition to the fourth condition. On the other hand, FIG. 23 illustrates one example of the phase amount α1 to the phase amount α4 satisfying the first condition to the fourth condition described above in the above-described formulas satisfying the condition that f2 = f4 = 0.95 × f1 = 0.95 × f3. FIG. 23 illustrates 16 combinations as examples of the phase amount α1 to the phase amount α4 that satisfy the first condition to the fourth condition. Patten

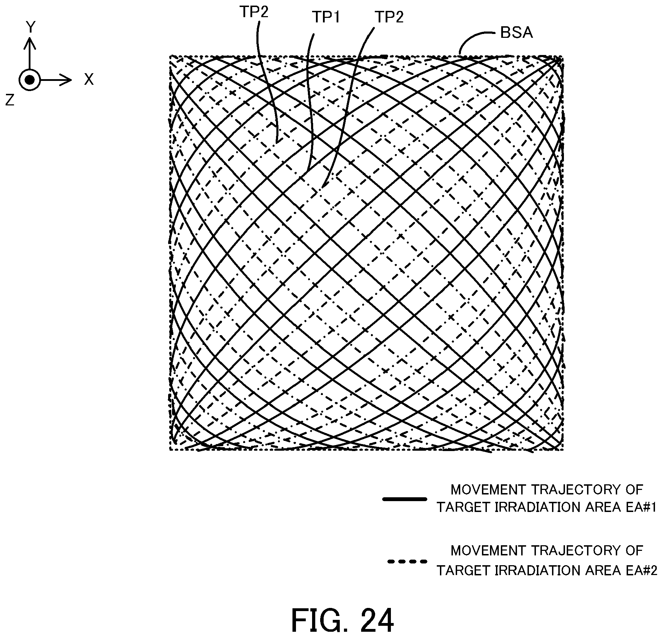

In a case where the phase amount α1 to the phase amount α4 satisfy the first condition to the fourth condition described above, at least a part of the movement trajectory of the target irradiation area EA#1 in the build unit area BSA is located between two adjacent partial trajectories included in the movement trajectory of the target irradiation area EA#1 in the build unit area BSA, as illustrated in FIG. 24 that illustrates the movement trajectories of the target irradiation areas A#1 and EA#2 in the build unit area BSA. For example, in an example illustrated in FIG. 22, a partial trajectory TP1 of the movement trajectory of the target irradiation area EA#1 is located between two adjacent partial trajectories TP2 of the movement trajectory of the target irradiation area EA#2. In this case, there is a higher possibility that the target irradiation areas EA#1 and EA#2 move so that the target irradiation areas EA#1 and EA#2 are not located at the same position at the same time. As a result, the build system SYS can build the build object on the build surface MS with relatively high build accuracy as described above.

As described above, a wide variety of scanning aspects, one example of which is illustrated in each of FIG. 13 to FIG. 20, may be selected as the scanning aspect (the movement aspect) of the target irradiation area EA1 and the scanning aspect (the movement aspect) of the target irradiation area EA2 in the build unit area BSA#2. In this case, the control apparatus 7 may select a pattern (a mode) of the scanning aspect of the target irradiation areas EA1 and EA2. The operator of the build system SYS may select the pattern (the mode) of the scanning aspect of the target irradiation areas EA1 and EA2.

### (2-4) Spot Control Operation in Build Unit Area BSA

Next, a spot control operation, which may be performed by the build system SYS in parallel with the above-described additive manufacturing operation, will be described. The spot control operation is an operation for controlling a diameter of a beam spot (in the below-described description, it is referred to as a "spot diameter") formed by the build light EL#1 in the build unit area BSA#1 and a diameter of a beam spot (the spot diameter) formed by the build light EL#2 in the build unit area BSA#2.

Incidentally, an intensity distribution of the build light EL#1 in the build unit area BSA#1 is such that the intensity of the build light EL#1 at a certain position in the build unit area BSA#1 is lower as this position is more away from the center of the build light EL#1. In this case, the spot diameter may mean a diameter of an area in which the intensity of the build light EL is higher than a predetermined intensity in the build unit area BSA#1. The spot diameter may mean a half width at half maximum of the intensity distribution of the build light EL#1.

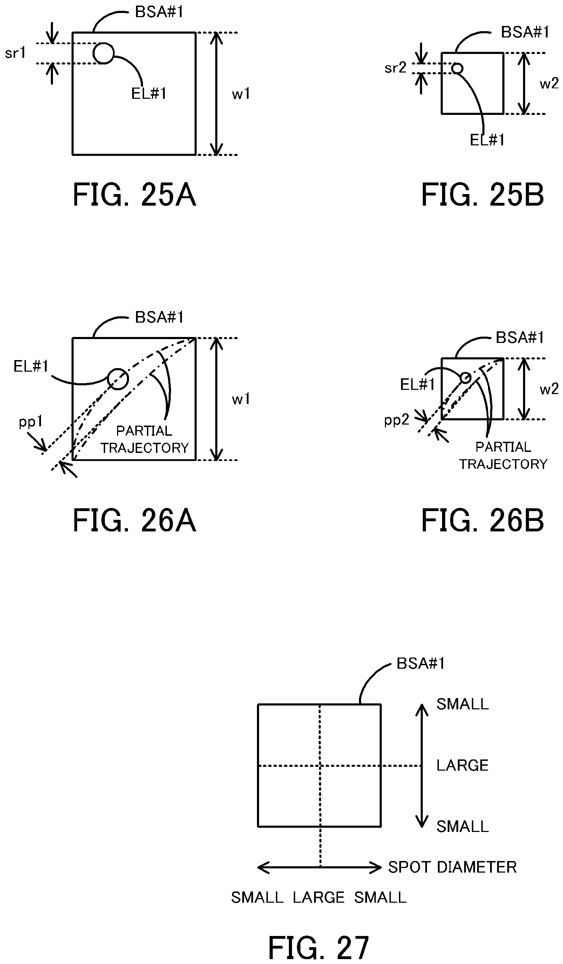

The control apparatus 7 may control the spot diameter of the build light EL#1 based on the size of the build unit area BSA#1. Specifically, since the build unit area BSA#1 is the area in which the target irradiation area EA#1 is moved by the Galvano mirror 2112#1, the size of the build unit area BSA#1 depends on a driven amount of the Galvano mirror 2112#1. Specifically, as described above, the build unit area BSA#1 is smaller as the rotational amount of the Galvano mirror 2112#1 is smaller (namely, the rotational angle of the Galvano mirror 2112#1 is smaller). In this case, the control apparatus 7 may control the spot diameter of the build light EL#1 so that the spot diameter of the build light EL#1 is smaller as the size of the build unit area BSA#1 is smaller. For example, as illustrated in FIG. 25A, the control apparatus 7 may control the spot diameter of the build light EL#1 so that the spot diameter of the build light EL#1 is a first diameter sr1 in a case where the size of the build unit area BSA#1 is a first size w1. On the other hand, as illustrated in FIG. 25B, for example, the control apparatus 7 may control the spot diameter of the build light EL#1 so that the spot diameter of the build light EL#1 is a second diameter sr2 that is smaller than the first diameter sr1 in a case where the size of the build unit area BSA#1 is a second size w2 that is smaller than the first size w1. Incidentally, each of FIG. 25A and FIG. 25B merely illustrates the size of the spot diameter schematically and does not necessarily illustrate the exact size relationship between the spot diameter and the build unit area BSA#1. Typically, in a case where the size of the build unit area BSA#1 is a few millimeters, the spot diameter may be much smaller than the size of the build unit area BSA#1.

Here, a time required to scan a certain area on the build surface MS with the build light EL#1 is shorter as the spot diameter of the build light EL#1 is larger, although the build accuracy is lower. On the other hand, the build accuracy is higher as the spot diameter of the build light EL#1 is smaller, although the time required to scan a certain area on the build surface MS with the build light EL#1 is longer. As described above, since the spot diameter of the build light EL#1 is relatively large in a case where the build unit area BSA#1 is relatively large, the time required to scan the relatively large build unit area BSA#1 with the build light EL#1 is not excessively long. Namely, in a case where the build unit area BSA#1 is relatively large, the build system SYS may prioritize a reduction of the time required to scan the build surface MS with the build light EL#1 over an improvement of the build accuracy. On the other hand, in a case where the build unit area BSA#1 is relatively small, the time required to scan the build unit area BSA#1 with the build light EL#1 is not excessively long intrinsically, and therefore, the build system SYS may prioritize the improvement of the build accuracy by making the spot diameter of the build light EL#1 be relatively small. Namely, in a case where the build unit area BSA#1 is relatively small, the build system SYS may prioritize the improvement of the build accuracy over the reduction of the time required to scan the build surface MS with the build light EL#1.

Incidentally, although a detailed description is omitted because it is redundant, the control apparatus 7 may control the spot diameter of the build light EL#2 based on the size of the build unit area BSA#2 in the same manner as case where the spot diameter of the build light EL#1 is controlled based on the size of the build unit area BSA#1.

The control apparatus 7 may control a pitch of the movement trajectory of the target irradiation area EA#1 that is irradiated with the build light EL#1 based on the size of the build unit area BSA#1, in addition to controlling the spot diameter of the build light EL#1. Note that the pitch of the movement trajectory may mean an interval (for example, a maximum value, a minimum value or an average value of the interval) between two adjacent partial trajectories included in the movement trajectory. Specifically, in a case where the build unit area BSA#1 is relatively large, since the spot diameter of the build light EL#1 is relatively large as described above, there is a relatively low possibility that an area that is not unintentionally irradiated with the build light EL#1 remains between two adjacent partial trajectories even in a case where the pitch of the movement trajectory of the target irradiation area EA#1 is relatively large. On the other hand, in a case where the build unit area BSA#1 is relatively small, the spot diameter of the build light EL#1 is relatively small, there is a relatively high possibility that the area that is not unintentionally irradiated with the build light EL#1 remains between two adjacent partial trajectories in a case where the pitch of the movement trajectory of the target irradiation area EA#1 is relatively large. Therefore, the control apparatus 7 may control the pitch of the movement trajectory of the target irradiation area EA#1 so that the pitch of the movement trajectory of the target irradiation area EA#1 is smaller as the size of the build unit area BSA#1 is smaller. For example, as illustrated in FIG. 26A, the control apparatus 7 may control the pitch of the movement trajectory of the target irradiation area EA#1 so that the pitch of the movement trajectory of the target irradiation area EA#1 is a first pitch pp1 in a case where the size of the build unit area BSA#1 is the first size w1. On the other hand, as illustrated in FIG. 26B, for example, the control apparatus 7 may control the pitch of the movement trajectory of the target irradiation area EA#1 so that the pitch of the movement trajectory of the target irradiation area EA#1 is a second pitch pp2 that is smaller than the first pitch pp1 in a case where the size of the build unit area BSA#1 is the second size w2 that is smaller than the first size w1.

Incidentally, although a detailed description is omitted because it is redundant, the control apparatus 7 may control the pitch of the movement trajectory of the target irradiation area EA#2 that is irradiated with the build light EL#2 based on the size of the build unit area BSA#2 in the same manner as case where the pitch of the movement trajectory of the target irradiation area EA#1 is controlled based on the size of the build unit area BSA#1.

The control apparatus 7 may control the spot diameter of the build light EL#1 based on a position in the build unit area BSA#1. The control apparatus 7 may change the spot diameter of the build light EL#1 in the build unit area BSA#1 based on a position that is irradiated with the build light EL#1 in the build unit area BSA#1. Specifically, as illustrated in FIG. 27, the control apparatus 7 may control the spot diameter of the build light EL#1 so that the spot diameter of the build light EL#1 is larger as the position that is irradiated with the build light EL#1 in the build unit area BSA#1 is closer to the center of the build unit area BSA#1. The control apparatus 7 may control the spot diameter of the build light EL#1 so that the spot diameter of the build light EL#1 is smaller as the position that is irradiated with the build light EL#1 in the build unit area BSA#1 is farther from the center of the build unit area BSA#1. The control apparatus 7 may control the spot diameter of the build light EL#1 so that the spot diameter of the build light EL#1 is smaller as the position that is irradiated with the build light EL#1 in the build unit area BSA#1 is closer to an edge part of the build unit area BSA#1. The control apparatus 7 may control the spot diameter of the build light EL#1 so that the spot diameter of the build light EL#1 is larger as the position that is irradiated with the build light EL#1 in the build unit area BSA#1 is farther from the edge part of the build unit area BSA#1. Here, the control apparatus 7 can control the amount of heat transferred from the build light EL#1 to the build surface MS more finely as the spot diameter is smaller. Therefore, in a case where the spot diameter is controlled as described above, the control apparatus 7 can control the amount of heat transferred from the build light EL#1 to the build surface MS more finely by the above-described transferred heat amount control operation and son on at the edge part of the build unit area BSA at which the amount of heat transferred from the build light EL#1 generally tends to be larger. As one example, the control apparatus 7 may reduce a variation of the heat amount transferred from the build light EL#1 in the build unit area BSA#1 by controlling the characteristic of the build light EL#1 as with the above-described transferred heat amount control operation. Therefore, the build system SYS can build the build object on the build surface MS with relatively high build accuracy.

Incidentally, although a detailed description is omitted because it is redundant, the control apparatus 7 may control the spot diameter of the build light EL#2 based on a position in the build unit area BSA#2 in the same manner as case where the spot diameter of the build light EL#1 is controlled based on the position in the build unit area BSA#1.

### (2-5) Intensity Control Operation in Build Unit Area BSA

Next, an intensity control operation, which may be performed by the build system SYS in parallel with the above-described additive manufacturing operation, will be described. The intensity control operation is an operation for controlling the intensity of the build light EL#1 in the build unit area BSA#1 and the intensity of the build light EL#2 in the build unit area BSA#2. In the below-described description, an operation for controlling the intensity of the build light EL#1 in the build unit area BSA#1 will be described in order to omit a redundant description. However, the control apparatus 7 may control the intensity of the build light EL#2 in the build unit area BSA#2 in the same manner as a case where the intensity of the build light EL#1 in the build unit area BSA#1 is controlled.

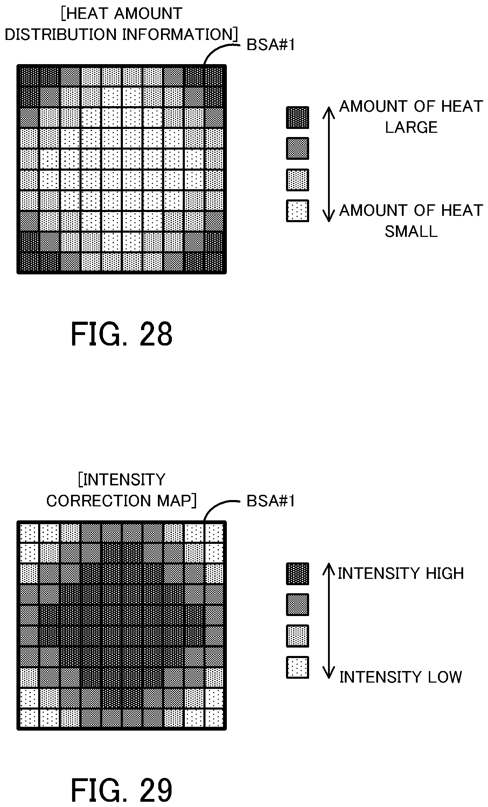

In order to perform the intensity control operation, the control apparatus 7 acquires heat amount distribution information indicating a distribution of the amount t of heat transferred from the build light EL#1 to the build surface MS in a case where the build unit area BSA#1 is scanned with the build light EL#1 having a reference intensity. One example of the heat amount distribution information is illustrated in FIG. 28. As illustrated in FIG. 28, the heat amount distribution information may be map information indicating a magnitude of the amount of heat transferred from the build light EL#1 to the build surface MS in each part of the build unit area BSA in a case where the build unit area BSA#1 is scanned with the build light EL#1 having the reference intensity.

The control apparatus 7 controls the intensity of the build light EL#1 in the build unit area BSA#1 based on the heat amount distribution information. Here, it can be said that the heat amount distribution information substantially indicates a variation of the amount of heat transferred from the build light EL#1 to the build surface MS in the build unit area BSA#1. Therefore, the control apparatus 7 may control the intensity of the build light EL#1 in the build unit area BSA#1 based on the heat amount distribution information so that the variation of the amount of heat transferred from the build light EL#1 to the build surface MS in the build unit area BSA#1 is reduced (typically, eliminated). Specifically, a case where the heat amount distribution information indicates that the amount of heat transferred to a first part in the build unit area BSA#1 is larger than the amount of heat transferred to a second part in the build unit area BSA#1 will be described. In this case, in a case where the intensity of the build light EL#1 with which the first part in the build unit area BSA#1 is irradiated is equal to the intensity of the build light EL#1 with which the second part in the build unit area BSA#1 is irradiated, the amount of heat transferred to the first part in the build unit area BSA#1 is larger than the amount of heat transferred to the second part in the build unit area BSA#1. Namely, the amount of heat transferred from the build light EL#1 to the build surface MS varies in the build unit area BSA#1. Therefore, the control apparatus 7 may control (namely, change) the intensity of the build light EL#1 so that the intensity of the build light EL#1 with which the first part in the build unit area BSA#1 is irradiated is lower than the intensity of the build light EL#1 with which the second part in the build unit area BSA#1 is irradiated. As a result, the variation of the amount of heat transferred from the build light EL#1 to the build surface MS in the build unit area BSA#1 is reduced.

In order to reduce the variation of the heat amount transferred from the build light EL#1 to the build surface MS in the build unit area BSA#1, the control apparatus 7 may calculate an intensity correction amount that has a negative correlation with the amount of heat indicated by the heat amount distribution information (specifically, the amount of heat transferred to one part in the build unit area BSA#1). Typically, the control apparatus 7 may calculate the intensity correction amount that is inversely proportional to the amount of heat indicated by the heat amount distribution information (specifically, the amount of heat transferred to one part in the build unit area BSA#1). Then, the control apparatus 7 may control, by using the calculated intensity correction amount, the intensity of the build light EL#1 with which the one part in the build unit area BSA#1 is irradiated. Specifically, as described above, the heat amount distribution information indicates the distribution of the amount of heat transferred from the build light EL#1 to the build surface MS in a case where the build unit area BSA#1 is scanned with the build light EL#1 having the reference intensity. Therefore, the control apparatus 7 may control the intensity of the build light EL#1 so that the build unit area BSA#1 is scanned with the build light EL#1 having the intensity obtained by adding the intensity correction amount to the reference intensity.

The control apparatus 7 may generate, based on the heat amount distribution information, an intensity correction map indicating a distribution of the intensity correction amount that has a negative correlation with (typically, that is inversely proportional to) the amount of heat indicated by the heat amount distribution information, and control the intensity of the build light EL#1 with which the build unit area BSA#1 is irradiated based on the intensity correction map. One example of the intensity correction map is illustrated in FIG. 29. FIG. 29 illustrates one example of the intensity correction map generated from the heat amount distribution information illustrated in FIG. 28. The intensity correction map indicates that the intensity correction amount that is added to the reference intensity in each part of the build unit area BSA#1 is smaller as the amount of heat indicated by the heat amount distribution information in each part of the build unit area BSA#1 is larger. In other words, the intensity correction map indicates that the intensity correction amount that is added to the reference intensity is larger as the amount of heat indicated by the heat amount distribution information is smaller.

Incidentally, in an example illustrated in FIG. 29, the intensity correction map indicates the intensity correction amount in each of a plurality of divided areas in a case where the build unit area BSA#1 is divided into the plurality of divided areas that are arranged in a two-dimensional matrix. In this case, the control apparatus 7 may correct the intensity of the build light EL with which one divided area is irradiated by using the intensity correction amount in the one divided area. Alternatively, the control apparatus 7 may correct the intensity of the build light EL with which one divided area is irradiated by using the intensity correction amount in the one divided area and the intensity correction amount in another divided areas different from the one divided area. For example, the control apparatus 7 may correct the intensity of the build light EL with which one divided area is irradiated by using the intensity correction amount in the one divided area and the intensity correction amount in at least one adjacent area that is at least one divided area adjacent to the one divided area. The at least one adjacent area may include the divided area that is adjacent to the one divided area in the up-down direction. The at least one adjacent area may include the divided area that is adjacent to the one divided area in the left-right direction. The at least one adjacent area may include the divided area that is adjacent to the one divided area in a diagonal direction. The at least one adjacent area may include the divided area that is adjacent to the one divided area along the movement direction of the build light EL#1 in the build unit area BSA#1. Moreover, the control apparatus 7 may correct the intensity of the build light EL with which the one divided area is irradiated by combining the intensity correction amount in the one divided area with the intensity correction amount in another divided area different from the one divided area at a predetermined combination ratio. As a result, an amount of variation of the intensity of the build light EL#1 between adjacent divided areas is smaller.

Alternatively, the control apparatus 7 may control the intensity of the build light EL#1 so that the build unit area BSA#1 is scanned with the build light EL#1 having the reference intensity and the build unit area BSA#1 is scanned with the build light EL#1 having an intensity that is equal to the intensity correction amount, instead of controlling the intensity of the build light EL#1 so that the build unit area BSA is scanned with the build light EL#1 having the intensity obtained by adding the intensity correction amount to the reference intensity. Namely, the control apparatus 7 may control the intensity of the build light EL#1 so that the build unit area BSA#1 is scanned with the build light EL#1 having the reference intensity and the build unit area BSA#1 is scanned with the build light EL#1 having an intensity equal to the intensity correction amount that may be considered to be equivalent to an intensity obtained by changing or correcting the reference intensity. Even in this case, the variation of the amount of heat transferred from the build light EL#1 to the build surface MS in the build unit area BSA#1 is also reduced, as with a case where the build unit area BSA#1 is scanned with the build light EL#1 having the intensity obtained by adding the intensity correction amount to the reference intensity.

Incidentally, in a case where the build lights EL#1 and EL#2 are pulsed lights, the number of pulses of the build lights EL#1 and EL#2 per unit time may be changed, based on the intensity correction map, according to the positions in the build unit area BSA#1 and BSA#2. In this case, the intensity correction map may be referred to as a pulse number correction map. Moreover, the movement speed of the build lights EL#1 and EL#2 per unit time may be changed, based on the intensity correction map, according to the positions in the build unit area BSA#1 and BSA#2. In this case, the intensity correction map may be referred to as an irradiation area movement speed correction map. Moreover, the distribution of the amount of heat may be corrected by combining these. Therefore, the intensity correction map may be referred to as a heat amount distribution correction map.

### (2-6) Irradiation Position Control Operation

Next, an irradiation position control operation, which may be performed by the build system SYS in parallel with the above-described additive manufacturing operation, will be described. The irradiation position control operation is an operation for controlling the irradiation positions of the build lights EL#1 and EL#2 (namely, the positions of the target irradiation areas EA#1 and EA#2) in a situation where at least one of the build head 21 and the stage 31 is moving. Especially, the irradiation position control operation is an operation for controlling the irradiation positions of the build lights EL#1 and EL#2 (namely, the positions of the target irradiation areas EA#1 and EA#2) in a situation where at least one of the build head 21 and the stage 31 is moving and the positions at which the build unit areas BSA#1 and BSA#2 are set are changed on the build surface MS (for example, changed from a first area to a second area on the build surface MS). In the below-described description, an operation for controlling the position of the build light EL#1 (namely, the position of the target irradiation area EA#1) will be described in order to omit a redundant description. However, the control apparatus 7 may control the build light EL#2 (namely, the position of the target irradiation area EA#2) in the same manner as a case where the build light EL#1 (namely, the position of the target irradiation area EA#1) is controlled.

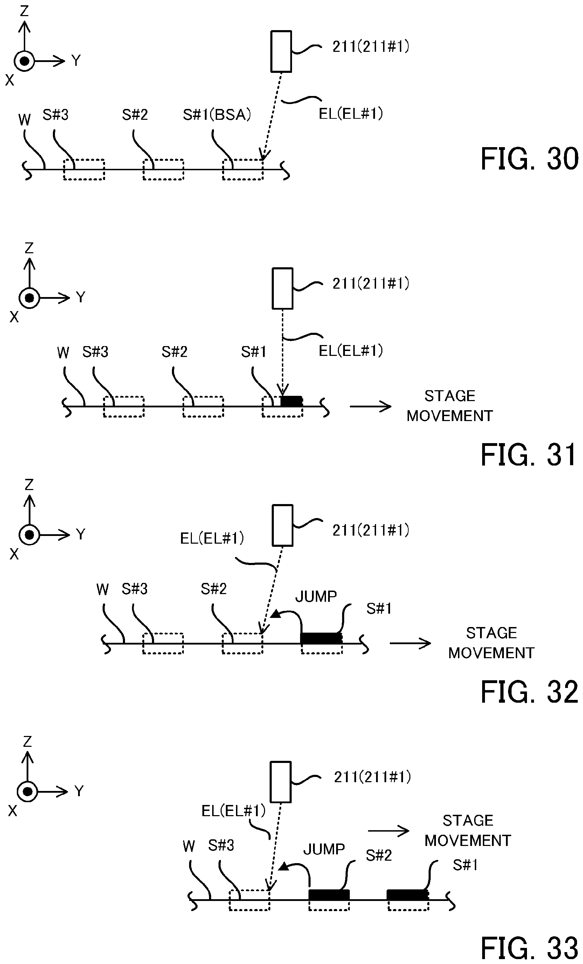

In the below-describe description, the irradiation position control operation will be described by using an example in which the position at which the build unit area BSA#1 is set is changed from a first area S#1 to a second area S#2 on the build surface MS, and then changed from the second area S#2 to a third area S#3 as illustrated in FIG. 30.

In this case, as illustrated in FIG. 31, the Galvano mirror 2112#1 sets the build unit area BSA#1 in the first area S#1 and scans the build unit area BSA#1 with the build light EL#1 under the control of the control apparatus 7. Namely, the Galvano mirror 2112#1 scans the first area S#1 of the build surface MS with the build light EL#1. Furthermore, at least one of the build head 21 and the stage 31 moves in a first period during which the first area S#1 is being scanned with the build light EL#1. In the below-described description, for the simplicity of description, an example in which the stage 31 moves will be described. In this case, the control apparatus 7 controls the Galvano mirror 2112#1 so that the build unit area BSA#1 continues to be set in the first area S#1 (namely, so that the first area S#1 continues to be scanned with the build light EL#1). Namely, the control apparatus 7 controls the Galvano mirror 2112#1 so that the target irradiation area EA#1 follows the first area S#1 that moves due to the movement of the stage 31. Incidentally, in a case where the first area S#1 is scanned with the build light EL#1, the Galvano mirror 2112#1 may reciprocate the target irradiation position EA#1 in the direction intersecting the movement direction of the stage 31 in the build unit area BSA#1 (namely, in the first area S#1 or in a first section in which the build unit area BSA#1 is set in the first period) as described above.

Then, as illustrated in FIG. 32, after completing scanning the first area S#1 with the build light EL#1, the Galvano mirror 2112#1 newly sets the build unit area BSA#1 in the second area S#2 under the control of the control apparatus 7. Specifically, the Galvano mirror 2112#1 moves the target irradiation area EA#1 from an end point (namely, a position at which the scanning with the build light EL is completed) of the first area S#1 to a start point (namely, a position at which the scanning with the build light EL starts) of the second area S#2. Then, the Galvano mirror 2112#1 scans the build unit area BSA#1 with the build light EL#1. Namely, the Galvano mirror 2112#1 scans the second area S#2 of the build surface MS with the build light EL#1. Furthermore, the stage 31 moves in a second period during which the second area S#2 is being scanned with the build light EL#1. In this case, the control apparatus 7 controls the Galvano mirror 2112#1 so that the build unit area BSA#1 continues to be set in the second area S#2 (namely, so that the second area S#2 continues to be scanned with the build light EL#1). Namely, the control apparatus 7 controls the Galvano mirror 2112#1 so that the target irradiation area EA#1 follows the second area S#2 that moves due to the movement of the stage 31. Incidentally, in a case where the second area S#2 is scanned with the build light EL#1, the Galvano mirror 2112#1 may reciprocate the target irradiation position EA#1 in the direction intersecting the movement direction of the stage 31 in the build unit area BSA#1 (namely, in the second area S#2 or in a second section in which the build unit area BSA#1 is set in the second period) as described above.

Then, as illustrated in FIG. 33, after completing scanning the second area S#2 with the build light EL#1, the Galvano mirror 2112#1 newly sets the build unit area BSA#1 in the third area S#3 under the control of the control apparatus 7. Specifically, the Galvano mirror 2112#1 moves the target irradiation area EA#1 from an end point (namely, a position at which the scanning with the build light EL is completed) of the second area S#2 to a start point (namely, a position at which the scanning with the build light EL starts) of the third area S#3. Then, the Galvano mirror 2112#1 scans the build unit area BSA#1 with the build light EL#1. Namely, the Galvano mirror 2112#1 scans the third area S#3 of the build surface MS with the build light EL#1. Furthermore, the stage 31 moves in a third period during which the third area S#3 is being scanned with the build light EL#1. In this case, the control apparatus 7 controls the Galvano mirror 2112#1 so that the build unit area BSA#1 continues to be set in the third area S#3 (namely, so that the third area S#3 continues to be scanned with the build light EL#1). Namely, the control apparatus 7 controls the Galvano mirror 2112#1 so that the target irradiation area EA#1 follows the third area S#3 that moves due to the movement of the stage 31. Incidentally, in a case where the third area S#3 is scanned with the build light EL#1, the Galvano mirror 2112#1 may reciprocate the target irradiation position EA#1 in the direction intersecting the movement direction of the stage 31 in the build unit area BSA#1 (namely, in the third area S#3 or in a third section in which the build unit area BSA#1 is set in the third period) as described above.

Then, the build system SYS may repeat the same operation, as necessary.

Incidentally, in at least part of a period during which the irradiation position control operation is performed, the stage 31 may move at a constant speed. In at least part of the period during which the irradiation position control operation is performed, the stage 31 may accelerate. In at least part of a period during which the irradiation position control operation is performed, the stage 31 may decelerate. The movement speed of the stage 31 may be set based on a speed at a timing when the scanning of the build unit area BSA#1 with the build light EL#1 is completed. The scanning speed at which the build unit area BSA#1 is scanned with the build light EL#1 (alternatively, in addition to or instead of the scanning speed, the movement trajectory of the build light EL#1) may be set based on the movement speed of the stage 31.

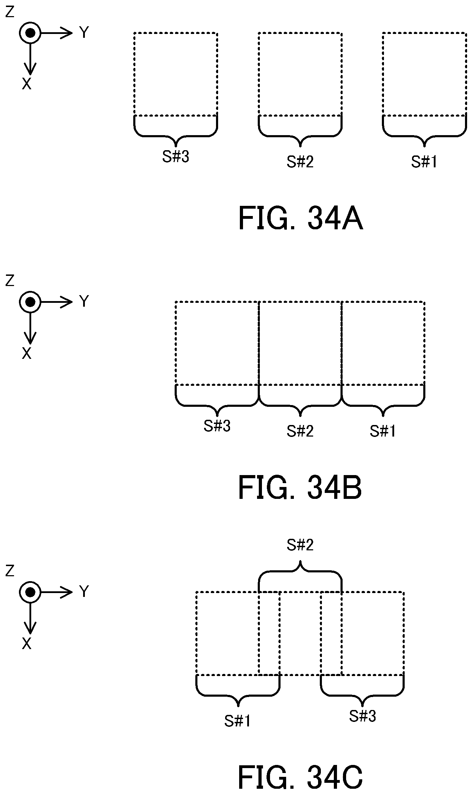

As illustrated in FIG. 34A, at least two of a plurality of areas in which the build unit area BSA is set on the build surface MS may be separated from each other in the direction along the build surface MS. FIG. 34A illustrates an example in which the first area S#1, the second area S#2, and the third area S#3 are separated from one another in the direction along the build surface MS (in the example illustrated in FIG. 34A, in the Y-axis direction). As illustrated in FIG. 34B, at least two of the plurality of areas in which the build unit area BSA is set on the build surface MS may be in contact with each other in the direction along the build surface MS. FIG. 34B illustrates an example in which the first area S#1 and the second area S#2 are in contact with each other and the second area S#2 and the third area S#3 are in contact with each other. As illustrated in FIG. 34C, at least two of the plurality of areas in which the build unit area BSA is set on the build surface MS may partially overlap with each other. FIG. 34C illustrates an example in which the first area S#1 and the second area S#2 partially overlap with each other, and the second area S#2 and the third area S#3 partially overlap with each other. In a case where at least two of the plurality of areas in which the build unit area BSA is set on the build surface MS partially overlap with each other, the control apparatus 7 may control the amount of heat transferred to the build surface MS by controlling an amount of overlap. For example, the control apparatus 7 may increase the amount of heat transferred to the build surface MS by increasing the amount of overlap. For example, the control apparatus 7 may decrease the amount of heat transferred to the build surface MS by decreasing the amount of overlap.

Incidentally, in any of FIG. 34A to FIG. 34C, the fact remains that the first area S#1 to the third area S#3 are at least partially different from one another. In other words, the fact remains that the first area S#1 to the third area S#3 are at least partially distant from one another.

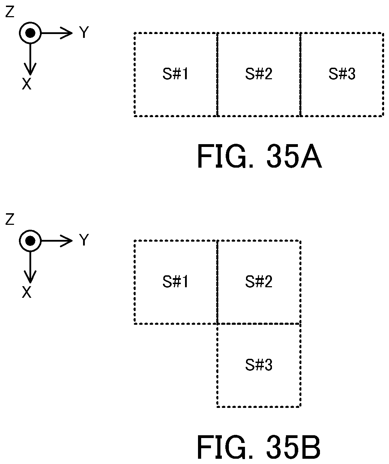

As illustrated in FIG. 35A, all of the plurality of areas in which the build unit area BSA is set on the build surface MS may be aligned along the same direction. FIG. 35A illustrates an example in which all of the first area S#1 to the third area SA#3 are aligned along the Y-axis direction. Alternatively, as illustrated in FIG. 35B, the first area S#1 and the second area S#2 may be aligned along one direction, and at least one of the first area S#1 and the second area S#2 and the third area S#3 may be aligned along another direction intersecting the one direction. FIG. 35B illustrates an example in which the first area S#1 and the second area S#2 are aligned along the Y-axis direction and at least one of the first area S#1 and the second area S#2 and the third area S#3 are aligned along the X-axis direction.

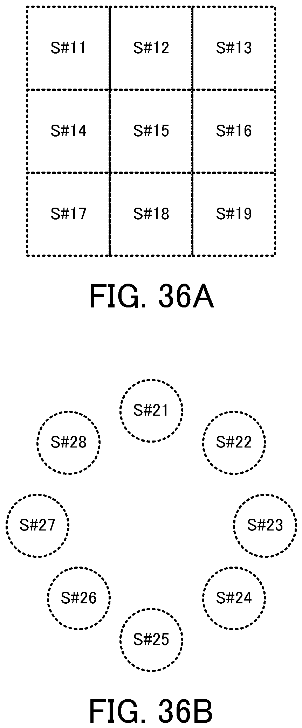

The plurality of areas in which the build unit area BSA is set on the build surface MS may be distributed on the build surface MS in a desired two-dimensional pattern. For example, in FIG. 36A, the plurality of areas (in the example illustrated in FIG. 36A, the areas S#1 to S) in which the build unit area BSA having the rectangular shape is set may be distributed on the build surface MS in the desired two-dimensional pattern. For example, in FIG. 36B, the plurality of areas (in the example illustrated in FIG. 36A, the areas S#1 to S) in which the build unit area BSA having the rectangular shape is set may be distributed on the build surface MS in the desired two-dimensional pattern. As a result, the build system SYS can build the desired build object at the desired position on the build surface MS.

Shapes of at least two of the plurality of areas in which the build unit area BSA is set may be different from each other. In this case, the shapes of at least two build unit areas BSA set in at least two areas may be different from each other. Sizes of at least two of the plurality of areas in which the build unit areas BSA are set may be different from each other. In this case, the sizes of at least two build unit areas BSA set in the at least two areas may be different from each other. At least one of the shape and the size of the build unit areas BSA may be set based on at least one of the build accuracy and a quality of the build object. For example, in a case where the build system SYS operates in a first mode in which at least one of the build accuracy and the quality of the build object is relatively high, the size of the build unit area BSA may be smaller, compared to a case where the build system SYS operates in a second mode in which at least one of the build accuracy and the quality of the build object is relatively low.

The Galvano mirror 2112#1 may move the target irradiation area EA#1 along the same movement trajectory in the plurality of areas in which the build unit area BSA is set on the build surface MS. For example, the Galvano mirror 2112#1 may move the target irradiation area EA#1 in the first area S#1 along the desired movement trajectory, move the target irradiation area EA#1 in the second area S#2 along the same desired movement trajectory, and move the target irradiation area EA#1 in the third area S#3 along the same desired movement trajectory. Incidentally, a state where the movement trajectory in one area is the same as the movement trajectory in another area may mean a state where the movement trajectory in the one area is coincident with the movement trajectory in the another area in a case where they are overlapped with each other.

Incidentally, the above-described irradiation position control operation may be referred to as a synchronization control operation between a position change apparatus configured to change a relative positional relationship between the build head and the object and a first (second) deflection member, because the Galvano mirror 2112#1 is driven in synchronization with the movement of the stage 31.

### (3) Positional Relationship between Build Unit Area BSA and Target Supply Area MA

Next, a positional relationship between the build unit area BSA#1 and BSA#2, which are irradiated with the build lights EL#1 and EL#2, respectively, and the target supply area MA, to which the build material M is supplied, will be described. In the below-described description, the positional relationship between the build unit area BSA#1 and the target supply area MA will be described in order to omit a redundant description. However, the below-described description may be diverted as an description of the positional relationship between the build unit area BSA#2 and the target supply area MA by replacing the reference sign "#1" with the reference sign "#2".

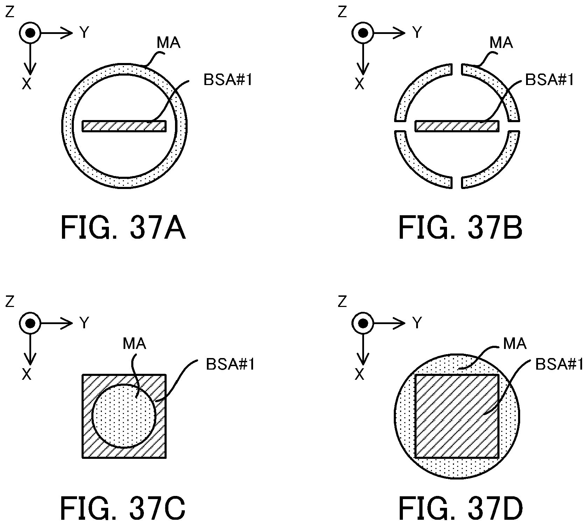

As illustrated in FIG. 37A, the target supply area MA may surround the build unit area BSA#1. In this case, the material nozzle 212 may supply the build material M to the target supply area MA surrounding the build unit area BSA#1. The Galvano mirror 2112#1 may set the build unit area BSA#1 surrounded by the target supply area MA on the build surface MS.

As illustrated in FIG. 37B, a plurality of target supply areas MA surrounding the build unit area BSA#1 may be set. In this case, a single material nozzle 212 may supply the build material M to at least one of the plurality of target supply areas MA. A plurality of material nozzles 212 may supply the build material M to the plurality of target supply areas MA, respectively. The Galvano mirror 2112#1 may set the build unit area BSA#1 surrounded by the plurality of target supply areas MA on the build surface MS.

As illustrated in FIG. 37C, the target supply area MA may be included in the build unit area BSA#1. In this case, the material nozzle 212 may supply the build material M to the target supply area MA included in the build unit area BSA#1. The Galvano mirror 2112#1 may set the build unit area BSA#1 including the target supply area MA on the build surface MS.

As illustrated in FIG. 37D, the target supply area MA may include the build unit area BSA#1. In this case, the material nozzle 212 may supply the build material M to the target supply area MA including the build unit area BSA#1. The Galvano mirror 2112#1 may set the build unit area BSA#1 included in the target supply area MA on the build surface MS.

One example of the material nozzle 212 (in the below-described description, it is referred to as a "material nozzle 212a") that supplies the build material M to the target supply area MA surrounding the build unit area BSA#1 as illustrated in FIG. 37(a) is illustrated in FIG. 38. As illustrated in FIG. 38, the material nozzle 212a includes a nozzle member 2120a including a nozzle surface 2129a that is a surface allowed to face the build surface MS. A through hole 2121a that penetrates the nozzle member 2120a along the Z-axis direction is formed in the nozzle member 2120a. The through hole 2121a is used as a space through which the build lights EL#1 and EL#2 emitted from the irradiation optical systems 211#1 and 211#2, respectively, pass. An annular material supply port 2122a surrounding the through hole 2121a is formed on the nozzle surface 2129a. The build material M is supplied to the material supply port 2122a from the material supply source 1 through a material supply pipe 2124a formed in the nozzle member 2120a. As a result, the build material M is supplied to the target supply area MA surrounding the build unit area BSA#1 through the annular material supply port 2122a.

An annular gas supply port 2123a surrounding the material supply port 2122a may be formed on nozzle surface 2129a. The purge gas may be supplied to the gas supply port 2123a from the gas supply source 5 through a gas supply tube 2125a formed in the nozzle member 2120a. The purge gas may be supplied from the annular gas supply port 2122a to the outside of the material nozzle 212a (for example, a space between the material nozzle 212a and the build surface MS) as a shielding gas for preventing the build material M from being scattered to the surroundings.

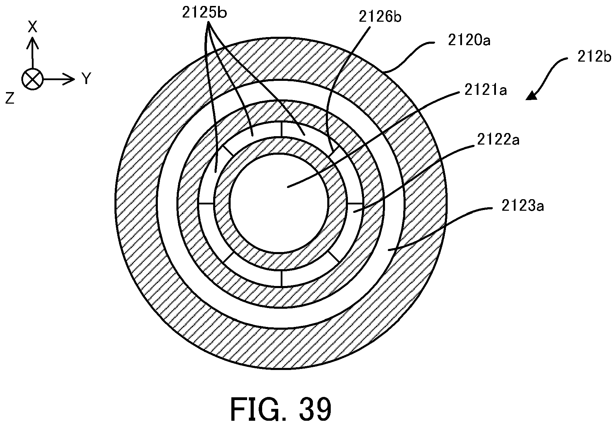

One example of the material nozzle 212 (in the below-described description, it is referred to as a "material nozzle 212b") that supplies the build material M to the plurality of target supply areas MA surrounding the build unit area BSA#1 as illustrated in FIG. 37B is illustrated in FIG. 39. As illustrated in FIG. 39, the material nozzle 212b is different from the material nozzle 212a in that the annular material supply port 2122a is divided into a plurality of material supply ports 2125b by a wall member 2126b. Another feature of the material nozzle 212b may be the same as another feature of material nozzle 212a. As a result, the build material M is supplied to the plurality of target supply areas MA through the plurality of material supply ports 2125b, respectively.

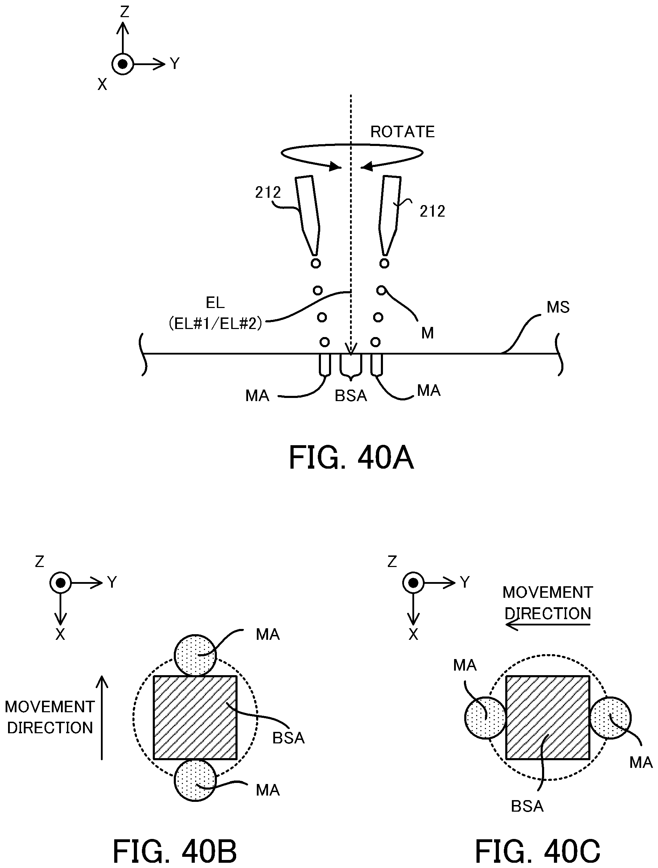

Alternatively, as described above, the plurality of material nozzles 212 may be used to supply the build material M to the plurality of target supply areas MA. In this case, as illustrated in FIG. 40, the plurality of material nozzles 212 may be rotatable around a rotational axis along the propagating direction of the build lights EL#1 and EL#2. Deu to the rotation of the plurality of material nozzles 212, the plurality of target supply areas MA to which the plurality of material nozzles 212 supply the build material M, respectively, rotate around the rotational axis along the propagating direction of the build lights EL#1 and EL#2, as illustrated in FIG. 40A and FIG. 40B. Namely, the plurality of target supply areas MA move on the build surface MS. In this case, the control apparatus 7 may rotate the plurality of material nozzles 212 so that the plurality of target supply areas MA are aligned along the movement direction of the build unit area BSA.

### (4) Modified Example

Next, a modified example of the build system SYS will be described.

### (4-1) First Modified Example

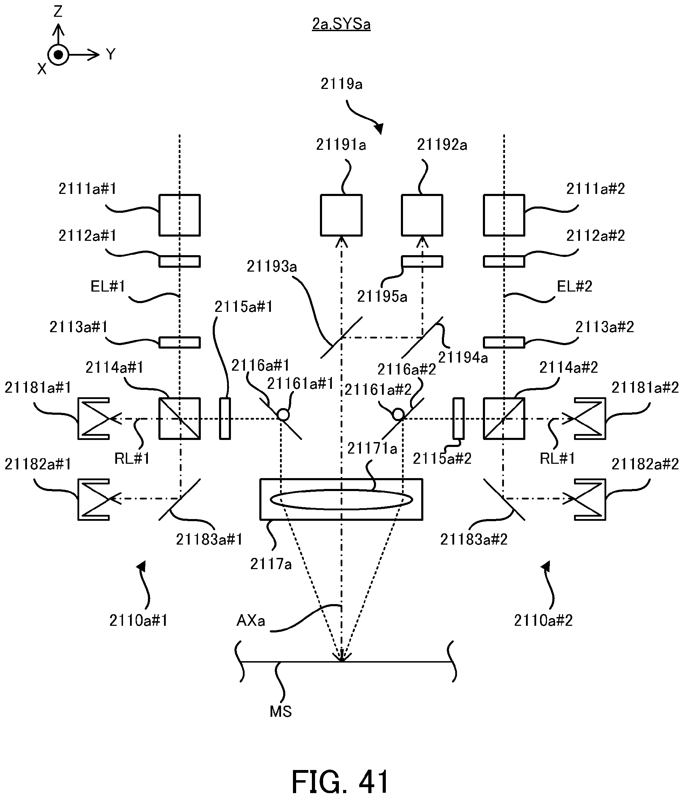

Firstly, a first modified example of the build system SYS will be described. In the below-described description, the build system SYS in the first modified example is referred to as a "build system SYSa". The build system SYSa is different from the above-described build system SYS in that it includes a build unit 2a instead of the build unit 2. Another feature of the build system SYSa may be the same as another feature of the build system SYS. The build unit 2a is different from the build unit 2 in that it includes irradiation optical systems 2110a#1 and 2110a#2 and an irradiation optical system 2117a instead of the plurality of irradiation optical systems 211#1 and 211#1. Another feature of the build unit 2a may be the same as another feature of the build unit 2. Next, with reference to FIG. 41, a configuration of the irradiation optical systems 2110a#1 and 2110a#2 and the irradiation optical system 2117a will be described. FIG. 41 is a cross-sectional view that illustrates the configuration of the irradiation optical systems 2110a#1 and 2110a#2 and the irradiation optical system 2117a.

As illustrated in FIG. 41, the irradiation optical system 2110a#1 includes a beam expander 2111a#1, a shutter 2112a#1, a 1/2 wavelength plate 2113a#1, a polarization beam splitter 2114a#1, a 1/4 wavelength plate 2115a#1, a Galvano mirror 2116a#1, a return light damper 21181a#1, a primary damper 21182a#1, and mirror 21183a#1. The irradiation optical system 2110a#2 includes a beam expander 2111a#2, a shutter 2112a#2, a 1/2 wavelength plate 2113a#2, a polarization beam splitter 2114a#2, a 1/4 wavelength plate 2115a#2, a Galvano mirror 2116a#2, a return light damper 21181a#2, a primary damper 21182a#2, and mirror 21183a#2.

The build light EL#1 from the light source 4#1 enters the beam expander 2111a#1. The beam expander 2111a#1 controls a beam diameter of the build light EL#1. The build light EL#1 from the beam expander 2111a#1 enters the polarization beam splitter 2114a#1 through the shutter 2112a#1 and the 1/2 wave plate 2113a#1. Incidentally, the shutter 2112a#1 may be the same as the shutter of the above-described state control optical system 2111. The 1/2 waveplate 2113a#1 changes a polarization direction of the build light EL#1, which is from the shutter 2112a#1, to a direction that allows the polarization beam splitter 2114a#1 to reflect it (typically, a direction of a s polarized light relative to a polarization split surface of the polarization beam splitter 2114a#1). The polarization beam splitter 2114a#1 reflects the build light EL#1 from the 1/2 waveplate 2113a#1 toward the Galvano mirror 2116a#1 through the 1/4 waveplate 2115a#1. Incidentally, a part of the build light EL#1 from the 1/2 wave plate 2113a#1 may pass through the polarization beam splitter 2114a#1. The built light EL#1 that has passed through the polarization beam splitter 2114a#1 (light leaking from the polarization beam splitter 2114a#1) enters the primary damper 21182a#1 through the mirror 21183a#1. The primary damper 21182a#1 shields the build light EL#1 entering the primary damper 21182a#1. The Galvano mirror 2116a#1 may be the same as the above-described Galvano mirror 2112#1. Therefore, the Galvano mirror 2116a#1 deflects the build light EL#1 so as to change the irradiation position of the build light EL#1 on the build surface MS. The Galvano mirror 2116a#1 is driven by an actuator 21161a#1. Namely, a position or an orientation of the Galvano mirror 2116a#1 is changed by the actuator 21161a#1. Since the Galvano mirror 2116a#1 is rotatable, the actuator 21161a#1 may support the Galvano mirror 2116a#1 in a rotatable manner. The actuator 2116a#1 may include a motor (for example, an electromagnetic motor or a piezo motor). Incidentally, since the Galvano mirror 2116a#1 includes two scanning mirrors (specifically, the X scanning mirror 2112X and the Y scanning mirror 2112Y, two Galvano mirrors) as described above, the irradiation optical system 2110a#1 may include two actuators 21161a#1 for driving the two scanning mirrors, respectively. The build surface MS is irradiated with the build light EL#1 emitted from the Galvano mirror 2116a#1 through the irradiation optical system 2117a (for example, an optical system including an fθ lens 21171a or another condensing member).

When the build surface MS is irradiated with the build light EL#1, return light RL#1, which is the build light EL#1 reflected or scattered by the build surface MS, may be generated from the build surface MS. At least a part of the returning light RL#1 enters the polarization beam splitter 2114a#1 through the fθ lens 21171a, the Galvano mirror 2116a#1 and the 1/4 wavelength plate 2115a#1 in some cases. Here, the return light RL#1 entering the polarization beam splitter 2114a#1 is the build light EL#1 that has passed through the 1/4 wavelength plate 2115a#1, then has been reflected by the build surface MS, and then has passed through the 1/4 wavelength plate 2115a#1 again. Therefore, the polarization direction of the returning light RL#1 is a direction that allows it to pass through the polarization beam splitter 2114a#1. As a result, the return light RL#1 passes through the polarization beam splitter 2114a#1 and enters the return light damper 21181a#1. The return light damper 21181a#1 shields the build light EL#1 that enters the return light damper 21181a#1.

Similarly, the build light EL#2 from the light source 4#2 enters the beam expander 2111a#2. The beam expander 2111a#2 controls a beam diameter of the build light EL#2. The build light EL#2 from the beam expander 2111a#2 enters the polarization beam splitter 2114a#2 through the shutter 2112a#2 and the 1/2 wave plate 2113a#2. Incidentally, the shutter 2112a#2 may be the same as the shutter of the above-described state control optical system 2111. The 1/2 waveplate 2113a#2 changes a polarization direction of the build light EL#2, which is from the shutter 2112a#2, to a direction that allows the polarization beam splitter 2114a#2 to reflect it (typically, a direction of a s polarized light relative to a polarization split surface of the polarization beam splitter 2114a#2). The polarization beam splitter 2114a#2 reflects the build light EL#2 from the 1/2 waveplate 2113a#2 toward the Galvano mirror 2116a#2 through the 1/4 waveplate 2115a#2. Incidentally, a part of the build light EL#2 from the 1/2 wave plate 2113a#2 may pass through the polarization beam splitter 2114a#2. The built light EL#2 that has passed through the polarization beam splitter 2114a#2 enters the primary damper 21182a#2 through the mirror 21183a#2. The primary damper 21182a#2 shields the build light EL#2 entering the primary damper 21182a#2. The Galvano mirror 2116a#2 may be the same as the above-described Galvano mirror 2112#2. Therefore, the Galvano mirror 2116a#2 deflects the build light EL#2 so as to change the irradiation position of the build light EL#2 on the build surface MS. The Galvano mirror 2116a#2 is driven by an actuator 21161a#2. Namely, a position or an orientation of the Galvano mirror 2116a#2 is changed by the actuator 21161a#2. Since the Galvano mirror 2116a#2 is rotatable, the actuator 21161a#2 may support the Galvano mirror 2116a#2 in a rotatable manner. The actuator 2116a#2 may include a motor (for example, an electromagnetic motor or a piezo motor). Incidentally, since the Galvano mirror 2116a#2 includes two scanning mirrors (specifically, the X scanning mirror 2112X and the Y scanning mirror 2112Y, two Galvano mirrors) as described above, the irradiation optical system 2110a#2 may include two actuators 21161a#2 for driving the two scanning mirrors, respectively. The build surface MS is irradiated with the build light EL#2 emitted from the Galvano mirror 2116a#2 through the irradiation optical system 2117a.

When the build surface MS is irradiated with the build light EL#2, return light RL#2, which is the build light EL#2 reflected or scattered by the build surface MS, may be generated from the build surface MS. At least a part of the returning light RL#2 enters the polarization beam splitter 2114a#2 through the fθ lens 21171a, the Galvano mirror 2116a#2 and the 1/4 wavelength plate 2115a#2 in some cases. Here, the return light RL#2 entering the polarization beam splitter 2114a#2 is the build light EL#2 that has passed through the 1/4 wavelength plate 2115a#2, then has been reflected by the build surface MS, and then has passed through the 1/4 wavelength plate 2115a#2 again. Therefore, the polarization direction of the returning light RL#2 is a direction that allows it to pass through the polarization beam splitter 2114a#2. As a result, the return light RL#2 passes through the polarization beam splitter 2114a#2 and enters the return light damper 21181a#2. The return light damper 21181a#2 shields the build light EL#2 that enters the return light damper 21181a#2.

Moreover, at least a part of the return light RL#2 may enter the irradiation optical system 2110#2 through the fθ lens 21171a in some cases. In this case, the return light RL#2 enters the polarization beam splitter 2114a#1 through the fθ lens 21171a, the Galvano mirror 2116a#1 and the 1/4 wavelength plate 2115a#1. Here, the polarization direction of the return light RL#2 entering the polarization beam splitter 2114a#1 is p-polarized light relative to the polarization split surface of the polarization beam splitter 2114a#1, and therefore, it passes through the polarization beam splitter 2114a#1 and enters the return light damper 21181a#1, and does not propagate toward the light source 4#1

Similarly, at least a part of the return light RL#1 may enter the irradiation optical system 2110#1 through the fθ lens 21171a in some cases. In this case, the return light RL#1 enters the polarization beam splitter 2114a#2 through the fθ lens 21171a, the Galvano mirror 2116a#2 and the 1/4 wavelength plate 2115a#2. Here, the polarization direction of the return light RL#1 entering the polarization beam splitter 2114a#2 is p-polarized light relative to the polarization split surface of the polarization beam splitter 2114a#2, and therefore, it passes through the polarization beam splitter 2114a#1 and enters the return light damper 21181a#2, and does not propagate toward the light source 4#2

In this manner, Since the irradiation optical systems 2110a#1 and 2110a#2 include the polarization beam splitters 2114#1 and 2114#2 and the 1/4 wavelength plates 2115a#1 and 2115a#2 located on the build surface MS side thereof, it is possible to prevent, at a low level, an occurrence of defect that is caused by the return light, which is caused by the build light from one irradiation optical system, entering the other irradiation optical system.

The irradiation optical system 2110a#1 and the irradiation optical system 2110a#2 may be arranged symmetrically with respect to an optical axis AXa of the fθ lens 21171a (namely, an optical axis of the irradiation optical system 2117a). For example, the Galvano mirror 2116a#1 and the Galvano mirror 2116a#2 may be arranged symmetrically with respect to the optical axis AXa of the fθ lens 21171a. For example, the actuator 21161a#1 and the actuator 21161a#2 may be arranged symmetrically with respect to the optical axis AXa of the fθ lens 21171a. For example, the return light dampener 21181a#1 and the return light dampener 21181a#2 may be arranged symmetrically with respect to the optical axis AXa of the fθ lens 21171a. For example, the polarization beam splitter 2114a#1 and the polarization beam splitter 2114a#2 may be arranged symmetrically with respect to the optical axis AXa of the fθ lens 21171a. Moreover, the irradiation optical system 2110a#1 and the irradiation optical system 2110a#2 may not be arranged symmetrically with respect to the optical axis AXa of the fθ lens 21171a (namely, the optical axis of the irradiation unit 2117a). For example, the actuator 21161a#1 and the actuator 21161a#2 may be arranged so that distances from the optical axis AXa of the fθ lens 21171a are different from each other. Moreover, the actuator 21161a#1 and the actuator 21161a#2 may be arranged so that one is located in the YZ plane and the other is located in the XZ plane. In a case where these arrangements are used, it is possible to reduce, to a low level, a possibility that the return light, which is caused by the build light from one irradiation optical system, enters the other irradiation optical system.

The build unit 2a may further include a measurement optical system 2119a. The measurement optical system 2119a is an optical system for measuring the build surface MS. The measurement optical system 2119a includes a measurement apparatus 21191a, a capturing apparatus 21192a, a dichroic mirror 21193a, a mirror 21194a, and a bandpass filter 21195a. Light component in a predetermined wavelength band of the light from the build surface MS may pass through the dichroic mirror 21193a and enter the measurement apparatus 21191a. The measurement apparatus 21191a may detect the light entering the measurement apparatus 21191a. The control apparatus 7 may determine a state of the build surface MS by using a measured result by the measurement apparatus 21191a. For example, the control apparatus 7 may determine a distance from the irradiation optical system 2117a to the build surface MS by using the measured result by the measurement apparatus 21191a. On the other hand, light component in a wavelength band different from the predetermined wavelength band of the light from the build surface MS may be reflected by the dichroic mirror 21193a. The light reflected by the dichroic mirror 21193a may enter the capturing apparatus 21192a through the mirror 21194a. The capturing apparatus 21192a may capture an image of the build surface MS by detecting the light entering the capturing apparatus 21192a. The control apparatus 7 may control the processing system SYS by using a captured result by the capturing apparatus 21192a (namely, the image in which the build surface MS is captured). For example, the control apparatus 7 may determine a size of the melt pool MP formed on the build surface MS by using the captured result by the capturing apparatus 21192a (namely, the image in which the build surface MS is captured), and control the intensity of at least one of the build lights EL#1 and EL#2 based on the determined size of the melt pool MP.

### (4-2) Other Modified Example

In the above-described description, the build system SYS melts the build material M by irradiating the build material M with the build light EL. However, the build system SYS may melt the build material M by irradiating the build material M with any energy beam. At least one of a charged particle beam, an electromagnetic wave and the like is one example of any energy beam. A least one of an electron beam, an ion beam and the like is one example of the charged particle beam.

In the above-described description, the build unit 2 builds the three-dimensional structural object ST by performing the additive manufacturing based on the Laser Metal Deposition. However, the build unit 2 may build the 3D structural obj ect ST by performing the additive manufacturing based on another method for building the 3D structural object. At least one of a PBF (Powder Bed Fusion) such as a SLS (Selective Laser Sintering), a Binder Jetting, a SLA (Stereolithography), a Material Jetting, a LMS (Laser Metal Fusion) is one example of another method for building the three-dimensional structural object. Alternatively, the build unit 2 may build the three-dimensional structural object ST by performing a removal processing in addition to or instead of performing the additive manufacturing. The build unit 2 may build the three-dimensional structural object ST by performing a machining-processing in addition to or instead of performing at least one of the additive manufacturing and the removal processing.

The above-described build unit 2 (especially, the build head 21) may be attached to a robot. For example, the build unit 2 (especially, the build head 21) may be attached to a welding robot for performing a welding. For example, the build unit 2 (especially, the build head 21) may be attached to a self-propelled mobile robot.

### (9) Supplementary Note

Regarding the above described example embodiment, below described Supplementary notes are further disclosed.

### [Supplementary Note 1]

A build system including:
a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and
a control apparatus that is configured to control the build apparatus,
wherein
the first irradiation optical system includes a first deflection member that changes a deflection angle of the first energy beam so that a first irradiation position moves on the surface of the object, the first irradiation position is an irradiation position of the first energy beam on the surface of the object,
the second irradiation optical system includes a second deflection member that changes a deflection angle of the second energy beam so that a second irradiation position moves on the surface of the object, the second irradiation position is an irradiation position of the second energy beam on the surface of the object,
the control apparatus controls the build apparatus to:
   irradiate a third position with the first energy beam at a second time;
   irradiate the third position with the second energy beam at a third time different from the second time;
   irradiate a fourth position different from the third position with the first energy beam at a fourth time different from the second time and the third time; and
   irradiate the fourth position with the second energy beam at a fifth time different from the second time, the third time, and the fourth time.

### [Supplementary Note 2]

A build system including:
a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and
a control apparatus that is configured to control the build apparatus,
wherein
the first irradiation optical system includes a first deflection member that changes a deflection angle of the first energy beam so that a first irradiation position moves on the surface of the object, the first irradiation position is an irradiation position of the first energy beam on the surface of the object,
the second irradiation optical system includes a second deflection member that changes a deflection angle of the second energy beam so that a second irradiation position moves on the surface of the object, the second irradiation position is an irradiation position of the second energy beam on the surface of the object,
the control apparatus controls the build apparatus to:
   irradiate the fifth position with the first energy beam at a sixth time;
   irradiate the fifth position with the first energy beam at a seventh time different from the sixth time;
   irradiate a sixth position different from the fifth position with the second energy beam at an eighth time different from the sixth time and the seventh time; and
   irradiate the sixth position with the second energy beam at a ninth time different from the sixth time, the seventh time, and the eighth time.

### [Supplementary Note 3]

The build system according to the Supplementary Note 1 or 2, wherein
the first deflection member deflects the first energy beam so that the first irradiation position moves on a surface of the object in a plurality of directions.

### [Supplementary Note 4]

The build system according to the Supplementary Note 3, wherein
the second deflection member deflects the second energy beam so that the second irradiation position moves on a surface of the object in a plurality of directions.

### [Supplementary Note 5]

The build system according to the Supplementary Note 4, wherein
the first deflection member deflects the first energy beam so that the first irradiation position moves in a first area on a surface of the object in the plurality of directions.

### [Supplementary Note 6]

The build system according to the Supplementary Note 5, wherein
the second deflection member deflects the second energy beam so that the second irradiation position moves in the first area on a surface of the object in the plurality of directions.

### [Supplementary Note 7]

The build system according to the Supplementary Note 5 or 6, wherein
the first deflection member deflects the first energy beam so as to move in a second area that is adjacent to or partially overlaps with the first area in the plurality of directions.

### [Supplementary Note 8]

The build system according to the Supplementary Note 7, wherein
the first area and the second area are a build unit area having a first shape,
the control apparatus controls the first irradiation optical system so that the first irradiation position moves in the build unit area set on the object,
the control apparatus controls the second irradiation optical system so that the second irradiation position moves in the build unit area.

### [Supplementary Note 9]

The build system according to the Supplementary Note 7 or 8, wherein
the second deflection member deflects the second energy beam so as to move in a second area that is adjacent to or partially overlaps with the first area in the plurality of directions.

### [Supplementary Note 10]

The build system according to any one of Supplementary Notes 4 to 9 further including:
a placing apparatus on which the object is placed;
a build head that includes at least the first deflection member and the second deflection member; and
a position change apparatus that is configured to change a relative positional relationship between the placing apparatus and the build head,
wherein
the plurality of directions include a direction that is parallel to a movement direction by the position change apparatus and a direction that intersects the movement direction.

### [Supplementary Note 11]

The build system according to the Supplementary Note 10 further including an input unit that inputs a build condition, wherein
the control apparatus controls the first and second deflection members so as to move the first irradiation position and the second irradiation position based on information related to a build width per unit build path included in the build condition,
the build width is a length moving in a direction in which the first irradiation position and the second irradiation position intersects the movement direction.

### [Supplementary Note 12]

The build system according to any one of Supplementary Notes 1 to 13 further including an input unit that inputs a build condition, wherein
the control apparatus controls the first and second deflection members so as to move the first irradiation position and the second irradiation position based on information related to a build width per unit build path included in the build condition.

### [Supplementary Note 13]

The build system according to any one of Supplementary Notes 4 to 11, wherein
the control apparatus controls the first deflection member so as to reciprocate the first energy beam along a first direction, which is along a surface of the object, of the plurality of directions at least one time and reciprocate it along a second direction, which is along a surface of the object and intersects the first direction, of the plurality of directions at least one time in a first period,
the control apparatus controls the second deflection member so as to reciprocate the second energy beam along the first direction at least one time and reciprocate it along the second direction at least one time in the first period,

### [Supplementary Note 14]

The build system according to the Supplementary Note 8, wherein
the control apparatus controls the first irradiation optical system and the second irradiation optical system so that the first irradiation position and the second irradiation position are note located simultaneously on the same position in the build unit area.

### [Supplementary Note 15]

The build system according to the Supplementary Note 8 or 14, wherein
the control apparatus controls the first irradiation optical system and the second irradiation optical system so that at least a part of a movement trajectory of the first irradiation position in the build unit area is located between two partial trajectories that are included in a movement trajectory of the second irradiation position in the build unit area and that are adjacent to each other in a direction along a surface of the object.

### [Supplementary Note 16]

The build system according to the Supplementary Note 8, wherein
the control apparatus controls the first irradiation optical system so that the first irradiation position reciprocates regularly along a first direction, which is along a surface of the object, of the plurality of directions and the first irradiation position reciprocates regularly along a second direction, which is along a surface of the object and intersects the first direction, of the plurality of directions in the build unit area,
the control apparatus controls the second irradiation optical system so that the second irradiation position reciprocates regularly along the first direction and the second irradiation position reciprocates regularly along the second direction in the build unit area,
a first number of times by which the first irradiation position reciprocates along the first direction per unit time is different from a second number of times by which the first irradiation position reciprocates along the second direction per unit time,
a third number of times by which the second irradiation position reciprocates along the first direction per unit time is different from a fourth number of times by which the second irradiation position reciprocates along the second direction per unit time.

### [Supplementary Note 17]

The build system according to the Supplementary Note 16, wherein
the control apparatus controls the first and second optical systems so that:
the first irradiation position moves along the first direction in accordance with a first equation of x1 = sin (2π×t×f1+α1), wherein the first number of times is f1, a first phase amount indicating an initial position of the first irradiation position in the first direction is α1, and a positional coordinate of the first irradiation position along the first direction in the build unit area at a time t is x1,
the first irradiation position moves along the second direction in accordance with a second equation of y1 = cos (2π×t×f2+α2), wherein the second number of times is f2, a second phase amount indicating an initial position of the first irradiation position in the second direction is α2, and a positional coordinate of the first irradiation position along the second direction in the build unit area at the time t is y1,
the second irradiation position moves along the first direction in accordance with a third equation of x2 = sin (2π×t×f3+α3), wherein the third number of times is f3, a third phase amount indicating an initial position of the second irradiation position in the first direction is α3, and a positional coordinate of the second irradiation position along the first direction in the build unit area at the time t is x2,
the second irradiation position moves along the second direction in accordance with a fourth equation of y2 = cos (2π×t×f4+α4), wherein the fourth number of times is f4, a fourth phase amount indicating an initial position of the second irradiation position in the second direction is α4, and a positional coordinate of the second irradiation position along the first direction in the build unit area at the time t is y2.

### [Supplementary Note 18]

The build system according to the Supplementary Note 17, wherein
the first to fourth phase amounts satisfy (i) a first condition that the first phase amount is different from the second phase amount by a multiple of 45 degrees or the first phase amount is equal to the second phase amount, (ii) a second condition that the third phase amount is different from the fourth phase amount by a multiple of 45 degrees or the third phase amount is equal to the fourth phase amount, (iii) a third condition that the first phase amount is different from the third phase amount by a multiple of 90 degrees or the first phase amount is equal to the third phase amount, and (iv) a fourth condition that the second phase amount is different from the fourth phase amount by a multiple of 45 degrees or the second phase amount is equal to the fourth phase amount.

### [Supplementary Note 19]

The build system according to the Supplementary Note 1 or 2, wherein
the first irradiation optical system is configured to irradiate a first irradiation area with the first energy beam,
the first irradiation area is set in a plane orthogonal to an optical axis of the first irradiation optical system,
a position of the first energy beam in the first irradiation area is movable in a direction that is parallel to a first axis orthogonal to the optical axis, a direction that is parallel to a second axis orthogonal to the first axis, and a direction that intersects both of the first axis and the second axis by using the first deflection member,
the first irradiation position is moved on a surface of the object by using the first deflection member to move the first energy beam in the first irradiation area,
the second irradiation optical system is configured to irradiate a second irradiation area with the second energy beam,
the second irradiation area is set in a plane orthogonal to an optical axis of the second irradiation optical system,
a position of the second energy beam in the second irradiation area is movable in a direction that is parallel to a third axis orthogonal to the optical axis, a direction that is parallel to a fourth axis orthogonal to the third axis, and a direction that intersects both of the third axis and the fourth axis by using the second deflection member,
the second irradiation position is moved on a surface of the object by using the second deflection member to move the second energy beam in the second irradiation area,

### [Supplementary Note 20]

The build system according to the Supplementary Note 19, wherein
the first irradiation area and the second irradiation area are a common area set in the same plane.

### [Supplementary Note 21]

The build system according to the Supplementary Note 19 or 20, wherein
the first axis is parallel to the third axis, and the second axis is parallel to the fourth axis.

### [Supplementary Note 22]

The build system according to any one of Supplementary Notes 19 to 21 further including:
a placing apparatus on which the object is placed;
a build head that includes at least the first deflection member and the second deflection member; and
a position change apparatus that is configured to change a relative positional relationship between the placing apparatus and the build head.

### [Supplementary Note 23]

The build system according to the Supplementary Note 22, wherein
a positional relationship between the object and the first irradiation area is changed and a positional relationship between the object and the second irradiation area is changed by a change of the relative positional relationship between the placing apparatus and the build head,
a movement of the first energy beam in the first irradiation area and a movement of the second energy beam in the second irradiation area are performed in parallel with the change of the relative positional relationship between the placing apparatus and the build head by the position change apparatus.

### [Supplementary Note 24]

The build system according to the Supplementary Note 22 or 23, wherein
the position change apparatus is configured to change the relative positional relationship between the placing apparatus and the build head in a direction that is parallel to the first axis.

### [Supplementary Note 25]

The build system according to any one of Supplementary Notes 22 to 24, wherein
the first irradiation position is moved in a first area on a surface of the object and an additive manufacturing of a part of the first area is performed by moving the first energy beam in at least a part of the first irradiation area.

### [Supplementary Note 26]

The build system according to the Supplementary Note 25, wherein
the second irradiation position is moved in the first area on a surface of the object and an additive manufacturing of another part of the first area is performed by moving the second energy beam in at least a part of the second irradiation area.

### [Supplementary Note 27]

The build system according to the Supplementary Note 26, wherein
the additive manufacturing is performed in whole of the first area,
the additive manufacturing of the first area includes at least an additive manufacturing by an irradiation of the first energy beam and an additive manufacturing by an irradiation of the second energy beam.

### [Supplementary Note 28]

The build system according to any one of Supplementary Notes 25 to 27, wherein
the first energy beam reciprocates at least one time along a direction parallel to the first axis in the first irradiation area in a first period during which the additive manufacturing of the first area is performed,
the reciprocation is performed while moving the first energy beam along a direction parallel to the second axis in the first irradiation area.

### [Supplementary Note 29]

The build system according to the Supplementary Note 28, wherein
the first energy beam reciprocates at least one time along the direction parallel to the second axis in the first irradiation area in the first period.

### [Supplementary Note 30]

The build system according to any one of Supplementary Notes 25 to 29, wherein
the second energy beam reciprocates at least one time along a direction parallel to the third axis in the second irradiation area in a first period during which the additive manufacturing of the first area is performed,
the reciprocation is performed while moving the second energy beam along a direction parallel to the fourth axis in the second irradiation area.

### [Supplementary Note 31]

The build system according to the Supplementary Note 30, wherein
the second energy beam reciprocates at least one time along the direction parallel to the fourth axis in the second irradiation area in the first period.

### [Supplementary Note 32]

The build system according to any one of Supplementary Notes 25 to 31, wherein
a relative positional relationship between the placing apparatus and the build head is changed by the position change apparatus to perform an additive manufacturing of a second area that is adj acent to the first area.

### [Supplementary Note 33]

The build system according to any one of Supplementary Notes25 to 32, wherein
the material supply member supplies the build material to the first area.

### [Supplementary Note 34]

The build system according to any one of Supplementary Notes 19 to 33, wherein
the material supply member is configured to supply the build material to the first irradiation area and the second irradiation area.

### [Supplementary Note 35]

The build system according to any one of Supplementary Notes 19 to 34, wherein
a melt pool that is formed on the object by an irradiation of the first energy beam moves on a surface of the object by a movement of the first irradiation area,
a melt pool that is formed on the object by an irradiation of the second energy beam moves on a surface of the object by a movement of the second irradiation area.

### [Supplementary Note 36]

The build system according to the Supplementary Note 35, wherein
the build material is a powdery material,
the build material is supplied to a melt pool that is formed on the object by an irradiation of the first energy beam and that moves in the first irradiation area by the material supply member supplying the build material to the first irradiation area,
the build material is supplied to a melt pool that is formed on the object by an irradiation of the second energy beam and that moves in the second irradiation area by the material supply member supplying the build material to the second irradiation area.

### [Supplementary Note 37]

A build system including:
a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and
a control apparatus that is configured to control the build apparatus,
wherein
the control apparatus is configured to control a speed for moving at least one of the first energy beam and the second energy beam based on the build path information related to the path along which the build apparatus performs the building.

### [Supplementary Note 38]

A build system including:
a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and
a control apparatus that is configured to control the build apparatus,
wherein
the control apparatus is configured to control a beam intensity of at least one of the first energy beam and the second energy beam based on build path information related to a path along which the build apparatus performs a building.

### [Supplementary Note 39]

A build system including:
a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and
a control apparatus that is configured to control the build apparatus,
wherein
the control apparatus is configured to control at least one of the number of pulses and a pulse interval of at least one of the first energy beam and the second energy beam based on the build path information related to the path along which the build apparatus performs the building.

### [Supplementary Note 40]

A build system including:
a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and
a control apparatus that is configured to control the build apparatus,
wherein
the control apparatus is configured to control at least one of a cycle and an amplitude of a locus of at least one of the first energy beam and the second energy beam based on build path information related to a path along which the build apparatus performs a building.

### [Supplementary Note 41]

The build system according to any one of Supplementary Notes 37 to 40, wherein
the control apparatus is configured to control a heat amount per unit area that is transferred from at least one of the first energy beam and the second energy beam in a first area on a surface of the object based on the build path information.

### [Supplementary Note 42]

The build system according to the Supplementary Note 41, wherein
the control apparatus irradiates a second area on a surface of the object that is different from the first area with the first energy beam but does not irradiate the second area with the second energy beam based on the build path information.

### [Supplementary Note 43]

The build system according to the Supplementary Note 42 further including a condensing member that condenses the first energy beam and the second energy beam, wherein
the first area includes a first inclined area in an inclined surface that is inclined with respect to an optical axis of the condensing member,
the second area includes a second inclined area in the inclined surface that is located at a position different from a position of the first inclined area along a direction intersecting the optical axis,
the control apparatus controls at least one of the first and second energy beams so that a heat amount per unit area that is transferred from at least one of the first and the second energy beams in the first inclined area is equal to a heat amount per unit area that is transferred from at least one of the first and the second energy beams in the second inclined area.

### [Supplementary Note 44]

The build system according to the Supplementary Note 43, wherein
the first irradiation optical system irradiates the first inclined area with the first energy beam,
the second irradiation optical system irradiates the second inclined area with the second energy beam,
the control apparatus controls a condensed position of at least one of the first and second energy beams so that a condensed position of the first energy beam is located at a position that is different from a position of a condensed position of the second energy beam.

### [Supplementary Note 45]

The build system according to the Supplementary Note 43 or 44, wherein
the first irradiation optical system irradiates the first inclined area with the first energy beam,
the second irradiation optical system irradiates the second inclined area with the second energy beam,
the control apparatus controls an intensity of at least one of the first and second energy beams so that an intensity of the first energy beam is different from an intensity of the second energy beam.

### [Supplementary Note 46]

The build system according to any one of Supplementary Notes 42 to 45 further including a condensing member that condenses the first energy beam and the second energy beam, wherein
the first area includes a first inclined area in an inclined surface that is inclined with respect to an optical axis of the condensing member,
the second area includes a second inclined area in the inclined surface that is located at a position different from a position of the first inclined area along a direction intersecting the optical axis,
the first irradiation optical system irradiates the first inclined area with the first energy beam while moving a first irradiation area, which is set on a surface of the object and is irradiated with the first energy beam, along a surface of the object,
the second irradiation optical system irradiates the second inclined area with the second energy beam while moving a second irradiation area, which is set on a surface of the object and is irradiated with the second energy beam, along a surface of the object,
the control apparatus controls a movement of at least one of the first and second energy beams so that each of a shape of a first build unit area that is a range in which the first optical system moves the first irradiation area and a shape of a second build unit area that is a range in which the second optical system moves the second irradiation area is a desired shape.

### [Supplementary Note 47]

The build system according to any one of Supplementary Notes 42 to 46, wherein
the first area includes a third area on a surface of the object,
the second area includes a fourth area on a surface of the object that is closer to an edge part of the object than the third area is,
the control apparatus controls at least one of the first and second energy beams so that a heat amount that is transferred from at least one of the first and the second energy beams per unit area in the fourth area is smaller than a heat amount that is transferred from at least one of the first and the second energy beams per unit area in the third area.

### [Supplementary Note 48]

The build system according to any one of Supplementary Notes 42 to 47, wherein
the first area includes a fifth area of the object,
the second area includes a sixth area of the object that is thinner than the fifth area,
the control apparatus controls at least one of the first and second energy beams so that a heat amount that is transferred from at least one of the first and the second energy beams per unit area in the sixth area is smaller than a heat amount that is transferred from at least one of the first and the second energy beams per unit area in the fifth area.

### [Supplementary Note 49]

The build system according to any one of Supplementary Notes 37 to 48, wherein
the control apparatus is configured to control at least one of the first and second energy beams individually based on the build path information so that a heat amount that is transferred from at least one of the first and the second energy beams per unit area in a first area on a surface of the object and a heat amount that is transferred from at least one of the first and the second energy beams per unit area in a second area on a surface of the object satisfy a predetermined heat condition.

### [Supplementary Note 50]

The build system according to any one of Supplementary Notes 37 to 49 further including an input unit that inputs a build condition, wherein
the build condition includes the build path information and information related to a build width that is a width of the path,
the control apparatus controls the build apparatus to move the first energy beam and the second energy beam based on the information related to the build width.

### [Supplementary Note 51]

The build system according to the Supplementary Note 50 further including:
a placing apparatus on which the object is placed;
a build head that includes at least a part of the first irradiation optical system and at least a part of the second irradiation optical system; and
a position change apparatus that is configured to change a relative positional relationship between the placing apparatus and the build head,
wherein
the build width is a length along a direction that intersects a movement direction by the position change apparatus.

### [Supplementary Note 52]

The build system according to the Supplementary Note 49 further including:
a placing apparatus on which the object is placed;
a build head that includes at least a part of the first irradiation optical system and at least a part of the second irradiation optical system; and
a position change apparatus that is configured to change a relative positional relationship between the placing apparatus and the build head,
wherein
the position change apparatus changes a relative positional relationship between the object and each of the first and second irradiation optical systems along at least one of first and second directions so that a first irradiation position of the first energy beam set on a surface of the object and a second irradiation position of the second energy beam set on a surface of the object move along at least one of the first direction, which is along a surface of the object, and the second direction, which is along a surface of the object and intersects the first direction,
the first optical system is configured to deflect the first energy beam so that the first irradiation position move on a surface of the object along at least one of the first and second directions,
the second optical system is configured to deflect the second energy beam so that the second irradiation position moves on a surface of the object along at least one of the first and second directions,
the control apparatus controls at least one of the position change apparatus, the first optical system, and the second optical system so that each of the first irradiation position and the second irradiation position moves along an intersecting direction that is along a surface of the object and that intersects a movement trajectory while each of the first irradiation position and the second irradiation position moves along the movement trajectory that is along a surface of the object,
the first area includes a first division area that is either one of two division areas, which are obtained by diving an area on a surface of the object in which the movement trajectory is located along the intersecting direction with the movement trajectory as a border, and the second area includes a second division area that is the other one of the two division areas,
the control apparatus controls at least one of the first and second energy beams so that a heat amount that is transferred from at least one of the first and the second energy beams per unit area in the first division area is equal to a heat amount that is transferred from at least one of the first and the second energy beams per unit area in the second division area.

### [Supplementary Note 53]

The build system according to the Supplementary Note 52, wherein
in a case where the movement trajectory is a trajectory extending in a curved line, the control apparatus controls at least one of the first and second energy beams so that a characteristic of at least one of the first and the second energy beams in the first division area is different from a characteristic of at least one of the first and the second energy beams in the second division area.

### [Supplementary Note 54]

The build system according to the Supplementary Note 53, wherein
the first division area is located at an inner side from the movement trajectory extending in the curved line,
the second division area is located at an outer side from the movement trajectory extending in the curved line,
the characteristics of the first and second energy beams include intensities of the first and second energy beams, respectively,
the control apparatus controls the intensity of at least one of the first and second energy beams so that the intensity of at least one of the first and the second energy beams in the second division area is higher than the intensity of at least one of the first and the second energy beams in the first division area.

### [Supplementary Note 55]

The build system according to the Supplementary Note 53 or 54, wherein
the first division area is located at an inner side from the movement trajectory extending in the curved line,
the second division area is located at an outer side from the movement trajectory extending in the curved line,
the characteristics of the first and second energy beams include movement speeds of the first and second irradiation positions on a surface of the object, respectively,
the control apparatus controls the movement speed of at least one of the first and second irradiation positions so that the movement speed of at least one of the first and second irradiation positions in the second division area is slower than the movement speed of at least one of the first and second irradiation positions in the first division area.

### [Supplementary Note 56]

The build system according to any one of Supplementary Notes 53 to 55, wherein
the first division area is located at an inner side from the movement trajectory extending in the curved line,
the second division area is located at an outer side from the movement trajectory extending in the curved line,
the irradiation aspects of the first and second energy beams include centers of movement of the first and second irradiation positions along the intersecting directions, respectively,
the control apparatus controls the center of movement of the first irradiation position so that the center of movement of the first irradiation position is away from a border between the first and second division areas toward the second division area side.

### [Supplementary Note 57]

The build system according to any one of Supplementary Notes 53 to 56, wherein
the first irradiation optical system deflects the first energy beam so as to reciprocate the first irradiation position along the intersecting direction on a surface of the object,
the second irradiation optical system deflects the second energy beam so as to reciprocate the second irradiation position along the intersecting direction on a surface of the obj ect,
the irradiation aspect of the first energy beam includes at least one of a reciprocation time that is necessary for reciprocating the first irradiation position one time and a moving distance of a reciprocation of the first irradiation position,
the irradiation aspect of the second energy beam includes at least one of a reciprocation time that is necessary for reciprocating the second irradiation position one time and a moving distance of a reciprocation of the second irradiation position,
the control apparatus controls the reciprocation of at least one of the first and second irradiation positions so that the reciprocation time of the first irradiation position is shorter than the reciprocation time of the second irradiation position and the moving distance of the reciprocation of the first irradiation position is shorter than the moving distance of the reciprocation of the second irradiation position.

### [Supplementary Note 58]

A build system including:
a build apparatus that includes an irradiation optical system configured to irradiate a surface of an object with an energy beam, a material supply member configured to supply a build material to a melt pool formed by the energy beam, and a build head including at least a part of the irradiation optical system;
a position change apparatus that is configured to change a relative positional relationship between the build head and the object; and
a control apparatus,
wherein
the control apparatus controls the irradiation optical system so as to move an irradiation position, which is irradiated with the energy beam, along at least a second direction intersecting a first direction in a first area on the object moving due to a change of the positional relationship in a period in which the positional relationship along the first direction is changed,
the control apparatus controls the irradiation optical system so as to move the irradiation position along at least the second direction in a second area on the object moving due to a change of the positional relationship after the irradiation of the first area with the energy beam is finished.

### [Supplementary Note 59]

The build system according to the Supplementary Note 58, wherein
the first area is away from the second area at least partially along a first direction that is along a surface of the object.

### [Supplementary Note 60]

The build system according to the Supplementary Note 59, wherein
the control apparatus controls the irradiation optical system so as to move the irradiation position from the second area to a third area on the object, which is different from the first and second areas at least partially, after the irradiation of the second area with the energy beam is finished,
the control apparatus controls the irradiation optical system so that the irradiation position moves along a movement trajectory in the third area while the irradiation position follows the third area that moves relative to the irradiation optical system due to a change of the positional relationship after the irradiation position moves to the third area,
the third area is away from at least one of the first and second areas at least partially along the second direction that is along a surface of the object and the that intersects the first direction.

### [Supplementary Note 61]

The build system according to any one of Supplementary Notes 58 to 60, wherein
the control apparatus controls the irradiation optical system so that the energy beam moves along a first movement trajectory in the first area,
the control apparatus controls the irradiation optical system so that the energy beam moves along a second movement trajectory in the second area.

### [Supplementary Note 62]

The build system according to the Supplementary Note 61, wherein
the first movement trajectory and the second movement trajectory are the same trajectories.

### [Supplementary Note 63]

The build system according to any one of Supplementary Notes 58 to 62 further including an input unit that inputs a build condition, wherein
the build condition includes build path information related to a path along which the build apparatus performs a building,
the control apparatus controls a change of the positional relationship by the position change apparatus based on the build path information.

### [Supplementary Note 64]

The build system according to the Supplementary Note 63, wherein
the build condition include information related to a build width per unit build path,
the control apparatus controls the irradiation optical system based on the information related to the build width.

### [Supplementary Note 65]

The build system according to the Supplementary Note 64, wherein
the build width is a length per unit build path along a direction intersecting the first direction.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a build system, which involves such changes, is also intended to be within the technical scope of the present invention.

### Description of Reference Codes

- SYS: build system
- 2: build unit
- 21: build head
- 211: irradiation optical system
- 2112: Galvano mirror
- 2113: fθ lens
- 212: material nozzle
- 22: head driving system
- 3: stage unit
- 31: stage
- 32: stage driving system
- W: workpiece
- MS: build surface
- EL: build light
- MP: melt pool
- ESA: build shot area
- BSA: build unit area

## Claims

1. A build system comprising:
a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and
a control apparatus that is configured to control the build apparatus,
wherein
the first irradiation optical system includes a first deflection member that changes a deflection angle of the first energy beam so that a first irradiation position moves on the surface of the object, the first irradiation position is an irradiation position of the first energy beam on the surface of the object,
the second irradiation optical system includes a second deflection member that changes a deflection angle of the second energy beam so that a second irradiation position moves on the surface of the object, the second irradiation position is an irradiation position of the second energy beam on the surface of the object,
the control apparatus controls the build apparatus to:
irradiate a second position different from a first position with the second energy beam at a first time at which the first position is irradiated with the first energy beam;
irradiate a third position different from the first position and the second position with the first energy beam at a second time different from the first time; and
irradiate the third position with the second energy beam at a third time different from the second time.

2. The build system according to claim 1, wherein
the control apparatus controls the build apparatus to:
irradiate a fourth position different from the first position, the second position, and the third position with the first energy beam at a fourth different from the first time, the second time, and the third time; and
irradiate the fourth position different with the second energy beam at a fifth different from the first time, the second time, the third time, and the fourth time.

3. The build system according to claim 1 or 2, wherein
the control apparatus controls the build apparatus to:
irradiate a fifth position different from the first position, the second position, the third position, and the fourth position with the first energy beam at a sixth different from the first time, the second time, the third time, the fourth time, and the fifth time;
irradiate the fifth position with the first energy beam at a seventh different from the first time, the second time, the third time, the fourth time, the fifth time, and the sixth time;
irradiate a sixth position different from the fifth position with the second energy beam at an eighth different from the first time, the second time, the third time, the fourth time, the fifth time, the sixth time, and the seventh time; and
irradiate the sixth position with the second energy beam at a ninth different from the first time, the second time, the third time, the fourth time, the fifth time, the sixth time, the seventh time, and the eighth time.

4. The build system according to any one of claims 1 to 3, wherein
the control apparatus controls the build apparatus to:
irradiate the third position with the first energy beam at the second time;
irradiate the third position with the second energy beam at the third time different from the second time;
irradiate a fourth position different from the third position with the first energy beam at a fourth time different from the second time and the third time; and
irradiate the fourth position with the second energy beam at a fifth time different from the second time, the third time, and the fourth time.

5. The build system according to any one of claims 1 to 4, wherein
the control apparatus controls the build apparatus to:
irradiate the fifth position with the first energy beam at a sixth time;
irradiate the fifth position with the first energy beam at a seventh time different from the sixth time;
irradiate a sixth position different from the fifth position with the second energy beam at an eighth time different from the sixth time and the seventh time; and
irradiate the sixth position with the second energy beam at a ninth time different from the sixth time, the seventh time, and the eighth time.

6. The build system according to any one of claims 1 to 5, wherein
the first deflection member deflects the first energy beam so that the first irradiation position moves on a surface of the object in a plurality of directions.

7. The build system according to claim 6, wherein
the second deflection member deflects the second energy beam so that the second irradiation position moves on a surface of the object in a plurality of directions.

8. The build system according to claim 7, wherein
the first deflection member deflects the first energy beam so that the first irradiation position moves in a first area on a surface of the object in the plurality of directions.

9. The build system according to claim 8, wherein
the second deflection member deflects the second energy beam so that the second irradiation position moves in the first area on a surface of the object in the plurality of directions.

10. The build system according to claim 8 or 9, wherein
the first deflection member deflects the first energy beam so as to move in a second area that is adjacent to or partially overlaps with the first area in the plurality of directions.

11. The build system according to claim 10, wherein
the first area and the second area are a build unit area having a first shape,
the control apparatus controls the first irradiation optical system so that the first irradiation position moves in the build unit area set on the object,
the control apparatus controls the second irradiation optical system so that the second irradiation position moves in the build unit area.

12. The build system according to claim 10 or 11, wherein
the second deflection member deflects the second energy beam so as to move in a second area that is adjacent to or partially overlaps with the first area in the plurality of directions.

13. The build system according to claim 1, wherein
each of the first position, the second position, and the third position are located in a first area on a surface of the object
the control apparatus controls the build apparatus to:
irradiate a fifth position different from a fourth position in a second area with the second energy beam at a fourth time at which the fourth position in the second area that is adjacent to or partially overlaps is irradiated with the first area with the first energy beam;
irradiate a sixth position different from the first and second positions with the first energy beam at a fifth time different from the fourth time; and
irradiate the sixth position with the second energy beam at the fifth time/

14. The build system according to claim 13, wherein
the first area and the second area are a build unit area having a first shape,
the control apparatus controls the first irradiation optical system so that the first irradiation position moves in the build unit area set on the object,
the control apparatus controls the second irradiation optical system so that the second irradiation position moves in the build unit area.

15. The build system according to claim 13 or 14, wherein
the first deflection member deflects the first energy beam so that the first irradiation position moves on a surface of the object in a plurality of directions,
the second deflection member deflects the second energy beam so that the second irradiation position moves on a surface of the object in a plurality of directions.

16. The build system according to any one of claims 7 to 12 and 15 further comprising:
a placing apparatus on which the object is placed;
a build head that includes at least the first deflection member and the second deflection member; and
a position change apparatus that is configured to change a relative positional relationship between the placing apparatus and the build head,
wherein
the plurality of directions includes a direction that is parallel to a movement direction by the position change apparatus and a direction that intersects the movement direction.

17. The build system according to claim 16 further comprising an input unit that inputs a build condition, wherein
the control apparatus controls the first and second deflection members so as to move the first irradiation position and the second irradiation position based on information related to a build width per unit build path included in the build condition,
the build width is a length moving in a direction in which the first irradiation position and the second irradiation position intersects the movement direction.

18. The build system according to any one of claims 1 to 16 further comprising an input unit that inputs a build condition, wherein
the control apparatus controls the first and second deflection members so as to move the first irradiation position and the second irradiation position based on information related to a build width per unit build path included in the build condition.

19. The build system according to any one of claims 7 to 12 and 15 to 17, wherein
the control apparatus controls the first deflection member so as to reciprocate the first energy beam along a first direction, which is along a surface of the object, of the plurality of directions at least one time and reciprocate it along a second direction, which is along a surface of the object and intersects the first direction, of the plurality of directions at least one time in a first period,
the control apparatus controls the second deflection member so as to reciprocate the second energy beam along the first direction at least one time and reciprocate it along the second direction at least one time in the first period,

20. The build system according to claim 11 or 14, wherein
the control apparatus controls the first irradiation optical system and the second irradiation optical system so that the first irradiation position and the second irradiation position are not located simultaneously on the same position in the build unit area.

21. The build system according to claim 11, 14 or 20, wherein
the control apparatus controls the first irradiation optical system and the second irradiation optical system so that at least a part of a movement trajectory of the first irradiation position in the build unit area is located between two partial trajectories that are included in a movement trajectory of the second irradiation position in the build unit area and that are adjacent to each other in a direction along a surface of the object.

22. The build system according to claim 11, wherein
the control apparatus controls the first irradiation optical system so that the first irradiation position reciprocates regularly along a first direction, which is along a surface of the object, of the plurality of directions and the first irradiation position reciprocates regularly along a second direction, which is along a surface of the object and intersects the first direction, of the plurality of directions in the build unit area,
the control apparatus controls the second irradiation optical system so that the second irradiation position reciprocates regularly along the first direction and the second irradiation position reciprocates regularly along the second direction in the build unit area,
a first number of times by which the first irradiation position reciprocates along the first direction per unit time is different from a second number of times by which the first irradiation position reciprocates along the second direction per unit time,
a third number of times by which the second irradiation position reciprocates along the first direction per unit time is different from a fourth number of times by which the second irradiation position reciprocates along the second direction per unit time.

23. The build system according to claim 22, wherein
the control apparatus controls the first and second optical systems so that:
the first irradiation position moves along the first direction in accordance with a first equation of x1 = sin (2π×t×f1+α1), wherein the first number of times is f1, a first phase amount indicating an initial position of the first irradiation position in the first direction is α1, and a positional coordinate of the first irradiation position along the first direction in the build unit area at a time t is x1,
the first irradiation position moves along the second direction in accordance with a second equation of y1 = cos (2π×t×f2+α2), wherein the second number of times is f2, a second phase amount indicating an initial position of the first irradiation position in the second direction is α2, and a positional coordinate of the first irradiation position along the second direction in the build unit area at the time t is y1,
the second irradiation position moves along the first direction in accordance with a third equation of x2 = sin (2π×t×f3+α3), wherein the third number of times is f3, a third phase amount indicating an initial position of the second irradiation position in the first direction is α3, and a positional coordinate of the second irradiation position along the first direction in the build unit area at the time t is x2,
the second irradiation position moves along the second direction in accordance with a fourth equation of y2 = cos (2π×t×f4+α4), wherein the fourth number of times is f4, a fourth phase amount indicating an initial position of the second irradiation position in the second direction is α4, and a positional coordinate of the second irradiation position along the first direction in the build unit area at the time t is y2.

24. The build system according to claim 23, wherein
the first to fourth phase amounts satisfy (i) a first condition that the first phase amount is different from the second phase amount by a multiple of 45 degrees or the first phase amount is equal to the second phase amount, (ii) a second condition that the third phase amount is different from the fourth phase amount by a multiple of 45 degrees or the third phase amount is equal to the fourth phase amount, (iii) a third condition that the first phase amount is different from the third phase amount by a multiple of 90 degrees or the first phase amount is equal to the third phase amount, and (iv) a fourth condition that the second phase amount is different from the fourth phase amount by a multiple of 45 degrees or the second phase amount is equal to the fourth phase amount.

25. The build system according to any one of claims 1 to 5, wherein
the first irradiation optical system is configured to irradiate a first irradiation area with the first energy beam,
the first irradiation area is set in a plane orthogonal to an optical axis of the first irradiation optical system,
a position of the first energy beam in the first irradiation area is movable in a direction that is parallel to a first axis orthogonal to the optical axis, a direction that is parallel to a second axis orthogonal to the first axis, and a direction that intersects both of the first axis and the second axis by using the first deflection member,
the first irradiation position is moved on a surface of the object by using the first deflection member to move the first energy beam in the first irradiation area,
the second irradiation optical system is configured to irradiate a second irradiation area with the second energy beam,
the second irradiation area is set in a plane orthogonal to an optical axis of the second irradiation optical system,
a position of the second energy beam in the second irradiation area is movable in a direction that is parallel to a third axis orthogonal to the optical axis, a direction that is parallel to a fourth axis orthogonal to the third axis, and a direction that intersects both of the third axis and the fourth axis by using the second deflection member,
the second irradiation position is moved on a surface of the object by using the second deflection member to move the second energy beam in the second irradiation area,

26. The build system according to claim 25, wherein
the first irradiation area and the second irradiation area are a common area set in the same plane.

27. The build system according to claim 25 or 26, wherein
the first axis is parallel to the third axis, and the second axis is parallel to the fourth axis.

28. The build system according to any one of claims 25 to 27 further comprising:
a placing apparatus on which the object is placed;
a build head that includes at least the first deflection member and the second deflection member; and
a position change apparatus that is configured to change a relative positional relationship between the placing apparatus and the build head.

29. The build system according to claim 28, wherein
a positional relationship between the object and the first irradiation area is changed and a positional relationship between the object and the second irradiation area is changed by a change of the relative positional relationship between the placing apparatus and the build head,
a movement of the first energy beam in the first irradiation area and a movement of the second energy beam in the second irradiation area are performed in parallel with the change of the relative positional relationship between the placing apparatus and the build head by the position change apparatus.

30. The build system according to claim 28 or 29, wherein
the position change apparatus is configured to change the relative positional relationship between the placing apparatus and the build head in a direction that is parallel to the first axis.

31. The build system according to any one of claims 28 to 30, wherein
the first irradiation position is moved in a first area on a surface of the object and an additive manufacturing of a part of the first area is performed by moving the first energy beam in at least a part of the first irradiation area.

32. The build system according to claim 31, wherein
the second irradiation position is moved in the first area on a surface of the object and an additive manufacturing of another part of the first area is performed by moving the second energy beam in at least a part of the second irradiation area.

33. The build system according to claim 32, wherein
the additive manufacturing is performed in whole of the first area,
the additive manufacturing of the first area includes at least an additive manufacturing by an irradiation of the first energy beam and an additive manufacturing by an irradiation of the second energy beam.

34. The build system according to any one of claims 31 to 33, wherein
the first energy beam reciprocates at least one time along a direction parallel to the first axis in the first irradiation area in a first period during which the additive manufacturing of the first area is performed,
the reciprocation is performed while moving the first energy beam along a direction parallel to the second axis in the first irradiation area.

35. The build system according to claim 34, wherein
the first energy beam reciprocates at least one time along the direction parallel to the second axis in the first irradiation area in the first period.

36. The build system according to any one of claims 31 to 35, wherein
the second energy beam reciprocates at least one time along a direction parallel to the third axis in the second irradiation area in a first period during which the additive manufacturing of the first area is performed,
the reciprocation is performed while moving the second energy beam along a direction parallel to the fourth axis in the second irradiation area.

37. The build system according to claim 36, wherein
the second energy beam reciprocates at least one time along the direction parallel to the fourth axis in the second irradiation area in the first period.

38. The build system according to any one of claims 31 to 37, wherein
a relative positional relationship between the placing apparatus and the build head is changed by the position change apparatus to perform an additive manufacturing of a second area that is adj acent to the first area.

39. The build system according to any one of claims 31 to 38, wherein
the material supply member supplies the build material to the first area.

40. The build system according to any one of claims 25 to 39, wherein
the material supply member is configured to supply the build material to the first irradiation area and the second irradiation area.

41. The build system according to any one of claims 25 to 40, wherein
a melt pool that is formed on the object by an irradiation of the first energy beam moves on a surface of the object by a movement of the first irradiation area,
a melt pool that is formed on the object by an irradiation of the second energy beam moves on a surface of the object by a movement of the second irradiation area.

42. The build system according to claim 41, wherein
the build material is a powdery material,
the build material is supplied to a melt pool that is formed on the object by an irradiation of the first energy beam and that moves in the first irradiation area by the material supply member supplying the build material to the first irradiation area,
the build material is supplied to a melt pool that is formed on the object by an irradiation of the second energy beam and that moves in the second irradiation area by the material supply member supplying the build material to the second irradiation area.

43. A build system comprising:
a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and
a control apparatus that is configured to control the build apparatus,
wherein
the control apparatus is configured to control a heat amount per unit area that is transferred from at least one of the first energy beam and the second energy beam based on build path information related to a path along which the build apparatus performs a building.

44. The build system according to claim 43, wherein
the control apparatus is configured to control the heat amount per unit area by controlling a speed for moving at least one of the first energy beam and the second energy beam based on the build path information.

45. The build system according to claim 43 or 44, wherein
the control apparatus is configured to control the heat amount per unit area by controlling at least one of the number of pulses and a pulse interval of at least one of the first energy beam and the second energy beam based on the build path information.

46. The build system according to any one of claims 43 to 45, wherein
the control apparatus is configured to control the heat amount per unit area by controlling a beam intensity of at least one of the first energy beam and the second energy beam based on the build path information.

47. The build system according to any one of claims 43 to 46, wherein
the control apparatus is configured to control at least one of a cycle and an amplitude of a locus of at least one of the first energy beam and the second energy beam based on the build path information.

48. The build system according to any one of claims 43 to 47, wherein
the control apparatus is configured to control a speed for moving at least one of the first energy beam and the second energy beam based on the build path information related to the path along which the build apparatus performs the building.

49. The build system according to any one of claims 1 to 48 comprising:
a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and
a control apparatus that is configured to control the build apparatus,
wherein
the control apparatus is configured to control a beam intensity of at least one of the first energy beam and the second energy beam based on build path information related to a path along which the build apparatus performs a building.

50. The build system according to claim 48, wherein
the control apparatus is configured to control at least one of the number of pulses and a pulse interval of at least one of the first energy beam and the second energy beam based on the build path information related to the path along which the build apparatus performs the building.

51. The build system according to any one of claims 1 to 49 comprising:
a build apparatus that includes a first irradiation optical system configured to irradiate a surface of an object with a first energy beam, a second irradiation optical system configured to irradiate a surface of the object with a second energy beam, and a material supply member configured to supply a build material to a melt pool formed by at least one of the first energy beam and the second energy beam; and
a control apparatus that is configured to control the build apparatus,
wherein
the control apparatus is configured to control at least one of a cycle and an amplitude of a locus of at least one of the first energy beam and the second energy beam based on build path information related to a path along which the build apparatus performs a building.

52. The build system according to any one of claims 43 to 47, wherein
the control apparatus is configured to control a heat amount per unit area that is transferred from at least one of the first energy beam and the second energy beam in a first area on a surface of the object based on the build path information.

53. The build system according to claim 52, wherein
the control apparatus irradiates a second area on a surface of the object that is different from the first area with the first energy beam but does not irradiate the second area with the second energy beam based on the build path information.

54. The build system according to claim 53 further comprising a condensing member that condenses the first energy beam and the second energy beam, wherein
the first area includes a first inclined area in an inclined surface that is inclined with respect to an optical axis of the condensing member,
the second area includes a second inclined area in the inclined surface that is located at a position different from a position of the first inclined area along a direction intersecting the optical axis,
the control apparatus controls at least one of the first and second energy beams so that a heat amount per unit area that is transferred from at least one of the first and the second energy beams in the first inclined area is equal to a heat amount per unit area that is transferred from at least one of the first and the second energy beams in the second inclined area.

55. The build system according to claim 54, wherein
the first irradiation optical system irradiates the first inclined area with the first energy beam,
the second irradiation optical system irradiates the second inclined area with the second energy beam,
the control apparatus controls a condensed position of at least one of the first and second energy beams so that a condensed position of the first energy beam is located at a position that is different from a position of a condensed position of the second energy beam.

56. The build system according to claim 54 or 55, wherein
the first irradiation optical system irradiates the first inclined area with the first energy beam,
the second irradiation optical system irradiates the second inclined area with the second energy beam,
the control apparatus controls an intensity of at least one of the first and second energy beams so that an intensity of the first energy beam is different from an intensity of the second energy beam.

57. The build system according to any one of claims 53 to 56 further comprising a condensing member that condenses the first energy beam and the second energy beam, wherein
the first area includes a first inclined area in an inclined surface that is inclined with respect to an optical axis of the condensing member,
the second area includes a second inclined area in the inclined surface that is located at a position different from a position of the first inclined area along a direction intersecting the optical axis,
the first irradiation optical system irradiates the first inclined area with the first energy beam while moving a first irradiation area, which is set on a surface of the object and is irradiated with the first energy beam, along a surface of the object,
the second irradiation optical system irradiates the second inclined area with the second energy beam while moving a second irradiation area, which is set on a surface of the object and is irradiated with the second energy beam, along a surface of the object,
the control apparatus controls a movement of at least one of the first and second energy beams so that each of a shape of a first build unit area that is a range in which the first optical system moves the first irradiation area and a shape of a second build unit area that is a range in which the second optical system moves the second irradiation area is a desired shape.

58. The build system according to any one of claims 53 to 57, wherein
the first area includes a third area on a surface of the object,
the second area includes a fourth area on a surface of the object that is closer to an edge part of the object than the third area is,
the control apparatus controls at least one of the first and second energy beams so that a heat amount that is transferred from at least one of the first and the second energy beams per unit area in the fourth area is smaller than a heat amount that is transferred from at least one of the first and the second energy beams per unit area in the third area.

59. The build system according to any one of claims 53 to 58, wherein
the first area includes a fifth area of the object,
the second area includes a sixth area of the object that is thinner than the fifth area,
the control apparatus controls at least one of the first and second energy beams so that a heat amount that is transferred from at least one of the first and the second energy beams per unit area in the sixth area is smaller than a heat amount that is transferred from at least one of the first and the second energy beams per unit area in the fifth area.

60. The build system according to any one of claims 43 to 59, wherein
the control apparatus is configured to control at least one of the first and second energy beams individually based on the build path information so that a heat amount that is transferred from at least one of the first and the second energy beams per unit area in a first area on a surface of the object and a heat amount that is transferred from at least one of the first and the second energy beams per unit area in a second area on a surface of the object satisfy a predetermined heat condition.

61. The build system according to any one of claims 43 to 60 further comprising an input unit that inputs a build condition, wherein
the build condition includes the build path information and information related to a build width that is a width of the path,
the control apparatus controls the build apparatus to move the first energy beam and the second energy beam based on the information related to the build width.

62. The build system according to claim 61 further comprising:
a placing apparatus on which the object is placed;
a build head that includes at least a part of the first irradiation optical system and at least a part of the second irradiation optical system; and
a position change apparatus that is configured to change a relative positional relationship between the placing apparatus and the build head,
wherein
the build width is a length along a direction that intersects a movement direction by the position change apparatus.

63. The build system according to claim 60 further comprising:
a placing apparatus on which the object is placed;
a build head that includes at least a part of the first irradiation optical system and at least a part of the second irradiation optical system; and
a position change apparatus that is configured to change a relative positional relationship between the placing apparatus and the build head,
wherein
the position change apparatus changes a relative positional relationship between the object and each of the first and second irradiation optical systems along at least one of first and second directions so that a first irradiation position of the first energy beam set on a surface of the object and a second irradiation position of the second energy beam set on a surface of the object move along at least one of the first direction, which is along a surface of the object, and the second direction, which is along a surface of the object and intersects the first direction,
the first optical system is configured to deflect the first energy beam so that the first irradiation position moves on a surface of the object along at least one of the first and second directions,
the second optical system is configured to deflect the second energy beam so that the second irradiation position moves on a surface of the object along at least one of the first and second directions,
the control apparatus controls at least one of the position change apparatus, the first optical system, and the second optical system so that each of the first irradiation position and the second irradiation position moves along an intersecting direction that is along a surface of the object and that intersects a movement trajectory while each of the first irradiation position and the second irradiation position moves along the movement trajectory that is along a surface of the object,
the first area includes a first division area that is either one of two division areas, which are obtained by diving an area on a surface of the object in which the movement trajectory is located along the intersecting direction with the movement trajectory as a border, and the second area includes a second division area that is the other one of the two division areas,
the control apparatus controls at least one of the first and second energy beams so that a heat amount that is transferred from at least one of the first and the second energy beams per unit area in the first division area is equal to a heat amount that is transferred from at least one of the first and the second energy beams per unit area in the second division area.

64. The build system according to claim 63, wherein
in a case where the movement trajectory is a trajectory extending in a curved line, the control apparatus controls at least one of the first and second energy beams so that a characteristic of at least one of the first and the second energy beams in the first division area is different from a characteristic of at least one of the first and the second energy beams in the second division area.

65. The build system according to claim 64, wherein
the first division area is located at an inner side from the movement trajectory extending in the curved line,
the second division area is located at an outer side from the movement trajectory extending in the curved line,
the characteristics of the first and second energy beams include intensities of the first and second energy beams, respectively,
the control apparatus controls the intensity of at least one of the first and second energy beams so that the intensity of at least one of the first and the second energy beams in the second division area is higher than the intensity of at least one of the first and the second energy beams in the first division area.

66. The build system according to claim 64 or 65, wherein
the first division area is located at an inner side from the movement trajectory extending in the curved line,
the second division area is located at an outer side from the movement trajectory extending in the curved line,
the characteristics of the first and second energy beams include movement speeds of the first and second irradiation positions on a surface of the object, respectively,
the control apparatus controls the movement speed of at least one of the first and second irradiation positions so that the movement speed of at least one of the first and second irradiation positions in the second division area is slower than the movement speed of at least one of the first and second irradiation positions in the first division area.

67. The build system according to any one of claims 64 to 66, wherein
the first division area is located at an inner side from the movement trajectory extending in the curved line,
the second division area is located at an outer side from the movement trajectory extending in the curved line,
the irradiation aspects of the first and second energy beams include centers of movement of the first and second irradiation positions along the intersecting directions, respectively,
the control apparatus controls the center of movement of the first irradiation position so that the center of movement of the first irradiation position is away from a border between the first and second division areas toward the second division area side.

68. The build system according to any one of claims 64 to 67, wherein
the first irradiation optical system deflects the first energy beam so as to reciprocate the first irradiation position along the intersecting direction on a surface of the object,
the second irradiation optical system deflects the second energy beam so as to reciprocate the second irradiation position along the intersecting direction on a surface of the obj ect,
the irradiation aspect of the first energy beam includes at least one of a reciprocation time that is necessary for reciprocating the first irradiation position one time and a moving distance of a reciprocation of the first irradiation position,
the irradiation aspect of the second energy beam includes at least one of a reciprocation time that is necessary for reciprocating the second irradiation position one time and a moving distance of a reciprocation of the second irradiation position,
the control apparatus controls the reciprocation of at least one of the first and second irradiation positions so that the reciprocation time of the first irradiation position is shorter than the reciprocation time of the second irradiation position and the moving distance of the reciprocation of the first irradiation position is shorter than the moving distance of the reciprocation of the second irradiation position.

69. A build system that is a build apparatus comprising:
a first light source;
a second light source that is different from the second light source;
an irradiation optical system that is configured to irradiate a surface of an object with a first energy beam from the first light source and a second energy beam from the second light source;
a material supply member that is configured to supply a build material to a melt pool formed by at least one of the first energy beam and the second energy beam; and
a build head that includes at least a part of the irradiation optical system,
wherein
the irradiation optical system includes:
a first deflection member that deflects the first energy beam from the first light source;
a second deflection member that deflects the second energy beam from the second light source; and
a condensing member that condenses the first energy beam deflected by the first deflection member and the second energy beam deflected by the second deflection member,
the build head includes:
a first change apparatus that changes a position or an orientation of the first deflection member to change an irradiation position of the first energy beam; and
a second change apparatus that changes a position or an orientation of the second deflection member to change an irradiation position of the second energy beam.

70. The build system according to claim 60, wherein
the first change apparatus supports the first deflection member in a rotatable manner,
the second change apparatus supports the second deflection member in a rotatable manner.

71. The build system according to claim 69 or 70, wherein
the irradiation optical system includes a first Galvano mirror as the first deflection member, includes a second Galvano mirror as the second deflection member, and includes a fθ lens as the condensing optical system,
the irradiation optical system is configured to scan a surface of the object with the first energy beam and the second energy beam.

72. The build system according to claim 69 or 70, wherein
the irradiation optical system includes a first Galvano mirror and a third Galvano mirror as the first deflection member, includes a second Galvano mirror and a fourth Galvano mirror as the second deflection member, and includes a fθ lens as the condensing optical system,
the irradiation optical system is configured to scan a surface of the object with the first energy beam and the second energy beam.

73. The build system according to any one of claims 69 to 72, wherein
the first change apparatus includes a first rotation apparatus that rotates the first deflection member in a first direction, and a second rotation apparatus that rotates the first deflection member in a second direction that is different from the first direction,
the second change apparatus includes a third rotation apparatus that rotates the second deflection member in a third direction, and a fourth rotation apparatus that rotates the second deflection member in a fourth direction that is different from the third direction.

74. The build system according to any one of claims 69 to 73, wherein
the first deflection member and the second deflection member are arranged symmetrically about an optical axis of the condensing member.

75. The build system according to any one of claims 69 to 74, wherein
the first change apparatus and the second change apparatus are arranged symmetrically about an optical axis of the condensing member.

76. The build system according to any one of claims 69 to 75, wherein
the irradiation optical system includes a first polarized beam splitter and a second polarized beam splitter,
the first deflection member deflects one of a reflection light and a transmitted light of the first energy beam from the first polarized beam splitter toward the condensing member,
the second deflection member deflects one of reflection light and transmitted light of the second energy beam from the second polarized beam splitter toward the condensing member.

77. The build system according to claim 76, wherein
the irradiation optical system includes a first beam dumper,
at least a part of reflection light and scattering light of at least one of the first energy beam and the second energy beam from a surface of the object enters the first beam dumper through the first polarized beam splitter.

78. The build system according to claim 77, wherein
the irradiation optical system includes a second beam dumper,
at least a part of reflection light and scattering light of at least one of the first energy beam and the second energy beam from a surface of the object enters the second beam dumper through the second polarized beam splitter.

79. The build system according to claim 78, wherein
the first beam dumper and the second beam dumper are arranged symmetrically about an optical axis of the condensing member.

80. The build system according to claims 69 to 79, wherein
the first irradiation optical system is configured to irradiate a first irradiation area with the first energy beam,
the first irradiation area is set in a plane orthogonal to an optical axis of the irradiation optical system,
a position of the first energy beam in the first irradiation area is movable in a direction that is parallel to a first axis orthogonal to the optical axis, a direction that is parallel to a second axis orthogonal to the first axis, and a direction that intersects both of the first axis and the second axis by using the first deflection member,
the second irradiation optical system is configured to irradiate a second irradiation area with the second energy beam,
the second irradiation area is set in a plane orthogonal to the optical axis,
a position of the second energy beam in the second irradiation area is movable in a direction that is parallel to a third axis orthogonal to the optical axis, a direction that is parallel to a fourth axis orthogonal to the third axis, and a direction that intersects both of the third axis and the fourth axis by using the second deflection member.

81. The build system according to claim 80, wherein
the first irradiation area and the second irradiation area are a common area set in the same plane.

82. The build system according to claim 80 or 81, wherein
the first axis is parallel to the third axis, and the second axis is parallel to the fourth axis.

83. The build system according to any one of claims 80 to 82 further comprising:
a placing apparatus on which the object is placed;
a build head that includes at least the first deflection member and the second deflection member; and
a position change apparatus that is configured to change a relative positional relationship between the placing apparatus and the build head.

84. The build system according to claim 83, wherein
a positional relationship between the object and the first irradiation area is changed and a positional relationship between the object and the second irradiation area is changed by a change of the relative positional relationship between the placing apparatus and the build head,
a movement of the first energy beam in the first irradiation area and a movement of the second energy beam in the second irradiation area are performed in parallel with the change of the relative positional relationship between the placing apparatus and the build head by the position change apparatus.

85. The build system according to claim 83 or 84, wherein
the position change apparatus is configured to change the relative positional relationship between the placing apparatus and the build head in a direction that is parallel to the first axis.

86. The build system according to any one of claims 80 to 85, wherein
the material supply member is configured to supply the build material to the first irradiation area and the second irradiation area.

87. The build system according to any one of claims 80 to 86, wherein
a melt pool that is formed on the object by an irradiation of the first energy beam moves on a surface of the object by a movement of the first irradiation area,
a melt pool that is formed on the object by an irradiation of the second energy beam moves on a surface of the object by a movement of the second irradiation area.

88. The build system according to claim 87, wherein
the build material is a powdery material,
the build material is supplied to a melt pool that is formed on the object by an irradiation of the first energy beam moving in the first irradiation area by the supply member supplying the build material to the first irradiation area,
the build material is supplied to a melt pool that is formed on the object by an irradiation of the second energy beam moving in the second irradiation area by the supply member supplying the build material to the second irradiation area.

89. A build system comprising:
a build apparatus that includes an irradiation optical system configured to irradiate a surface of an object with an energy beam, a material supply member configured to supply a build material to a melt pool formed by the energy beam, and a build head including at least a part of the irradiation optical system;
a position change apparatus that is configured to change a relative positional relationship between the build head and the object; and
a control apparatus,
wherein
the control apparatus controls the irradiation optical system so as to reciprocate an irradiation position, which is irradiated with the energy beam, along a second direction intersecting a first direction in a first section in a first period in a period in which the positional relationship along the first direction is changed,
the control apparatus controls the irradiation optical system so as to reciprocate the irradiation position, which is irradiated with the energy beam, along the second direction intersecting the first direction in a second section different from the first section in a second period different from the first period.

90. The build system according to any one of claims 1 to 89, wherein
the control apparatus controls the irradiation optical system so as to move an irradiation position, which is irradiated with the energy beam, along at least a second direction intersecting a first direction in a first area on the object moving due to a change of the positional relationship in a period in which the positional relationship along the first direction is changed,
the control apparatus controls the irradiation optical system so as to move the irradiation position along at least the second direction in a second area on the object moving due to a change of the positional relationship after the irradiation of the first area with the energy beam is finished.

91. The build system according to claim 90, wherein
the first area is away from the second area at least partially along a first direction that is along a surface of the object.

92. The build system according to claim 91, wherein
the control apparatus controls the irradiation optical system so as to move the irradiation position from the second area to a third area on the object, which is different from the first and second areas at least partially, after the irradiation of the second area with the energy beam is finished,
the control apparatus controls the irradiation optical system so that the irradiation position moves along a movement trajectory in the third area while the irradiation position follows the third area that moves relative to the irradiation optical system due to a change of the positional relationship after the irradiation position moves to the third area,
the third area is away from at least one of the first and second areas at least partially along the second direction that is along a surface of the object and the that intersects the first direction.

93. The build system according to any one of claims 90 to 92, wherein
the control apparatus controls the irradiation optical system so that the energy beam moves along a first movement trajectory in the first area,
the control apparatus controls the irradiation optical system so that the energy beam moves along a second movement trajectory in the second area.

94. The build system according to claim 93, wherein
the first movement trajectory and the second movement trajectory are the same trajectories.

95. The build system according to any one of claims 89 to 94 further comprising an input unit that inputs a build condition, wherein
the build condition includes build path information related to a path along which the build apparatus performs a building,
the control apparatus controls a change of the positional relationship by the position change apparatus based on the build path information.

96. The build system according to claim 95, wherein
the build condition includes information related to a build width per unit build path,
the control apparatus controls the irradiation optical system based on the information related to the build width.

97. The build system according to claim 96, wherein
the build width is a length per unit build path along a direction intersecting the first direction.

98. A build system comprising:
a build apparatus that includes an irradiation optical system configured to irradiate a surface of an object with an energy beam, and a material supply member configured to supply a build material to a melt pool formed by the energy beam;
a control apparatus that is configured to control the build apparatus,
wherein
the control apparatus controls the irradiation optical system so that an irradiation position of the energy beam, which is set on a surface of the object, moves along a first movement trajectory in a build unit area on the object,
the control apparatus controls at least one of an intensity, the number of pulses, and a pulse width of the energy beam based on heat amount distribution information related to a distribution of a heat mount that is transferred from the energy beam to the object in a case where the build unit area is irradiated with the energy beam having a first intensity so that the irradiation position moves along the first movement path in the build unit area.

99. The build system according to claim 98, wherein
the control apparatus changes at least one of the intensity, the number of pulses, and the pulse width of the energy beam in the build unit area.

100. The build system according to claim 98 or 99, wherein
the control apparatus controls at least one of the intensity, the number of pulses, and the pulse width of the energy beam based on the heat amount distribution information so that a variation in the build unit area of the heat amount that is transferred from the energy beam to the object per unit area is reduced.

101. The build system according to any one of claims 98 to 100, wherein
the control apparatus calculates, based on the heat amount distribution information, a control amount that has a negative correlation with a heat amount that is transferred from the energy beam having the first intensity to one part of the object, and controls at least one of the intensity, the number of pulses, and the pulse width of the energy beam with which the one part is irradiated based on the control amount.

102. The build system according to any one of claims 98 to 101, wherein
the control apparatus calculates, based on the heat amount distribution information, a control amount that is inversely proportional to a heat amount that is transferred from the energy beam having the first intensity to one part of the object, and controls at least one of the intensity, the number of pulses, and the pulse width of the energy beam with which the one part is irradiated based on the control amount.

103. The build system according to claim 101 or 102, wherein
the control apparatus controls the intensity of the energy beam so that the one part is irradiated with the energy beam having a corrected intensity that is obtained by adding the control amount to the first intensity.

104. The build system according to any one of claims 101 to 103, wherein
the control apparatus irradiates one part of the object with the energy beam having the first intensity, and irradiates the one part with the energy beam having an intensity changed from the first intensity,
the intensity changed from the first intensity is calculated based on the heat amount distribution information.

105. The build system according to any one of claims 101 to 104, wherein
the control apparatus irradiates one part of the object with the energy beam having the first intensity, and irradiates the one part with the energy beam having a correction intensity corrected from the first intensity,
the correction intensity corrected from the first intensity is calculated based on the heat amount distribution information.

106. The build system according to any one of claims 98 to 105 further comprising an input unit that inputs a build condition, wherein
the build condition includes build path information related to a path along which the build apparatus performs a building,
the control apparatus controls the irradiation optical system based on the build path information.

107. The build system according to any one of claims 98 to 106 further comprising an input unit that inputs a build condition, wherein
the build condition includes build path information related to a path along which the build apparatus performs a building, and information related to a build width per unit build path,
the control apparatus controls the irradiation optical system based on the information related to the build width so that the irradiation position of the energy beam moves along the first movement trajectory.

108. The build system according to claim 107 further comprising:
a placing apparatus on which the object is placed;
a build head that includes at least a part of the irradiation optical system; and
a position change apparatus that is configured to change a relative positional relationship between the placing apparatus and the build head,
wherein
the build width is a length along a direction that intersects a movement direction by the position change apparatus.

109. A build system comprising:
a build apparatus that includes an irradiation optical system configured to irradiate a surface of an object with a first energy beam and a second energy beam, and a material supply member configured to supply a build material to a melt pool formed by at least one of the first energy beam and the second energy beam; and
a control apparatus that is configured to control the build apparatus,
wherein
the irradiation optical system includes: a first deflection member that changes a deflection angle of the first energy beam so that a first irradiation position moves on the surface of the object along a surface of the object; and a second deflection member that changes a deflection angle of the second energy beam so that a second irradiation position moves on the surface of the object along a surface of the object,
the control apparatus controls the build apparatus to:
irradiate a second position different from a first position with the second energy beam at a first time at which the first position is irradiated with the first energy beam;
irradiate a third position different from the first position and the second position with the first energy beam at a second time different from the first time; and
irradiate the third position with the second energy beam at a third time different from the second time.

110. A build system comprising:
a build apparatus that includes an irradiation optical system configured to irradiate a surface of an object with a first energy beam and a second energy beam, and a material supply member configured to supply a build material to a melt pool formed by at least one of the first energy beam and the second energy beam; and
a control apparatus that is configured to control the build apparatus,
wherein
the irradiation optical system includes: a first deflection member that changes a deflection angle of the first energy beam so that a first irradiation position moves on the surface of the object along a surface of the object; and a second deflection member that changes a deflection angle of the second energy beam so that a second irradiation position moves on the surface of the object along a surface of the object,
the control apparatus controls the build apparatus to:
irradiate a third position with the first energy beam at a second time;
irradiate the third position with the second energy beam at a third time different from the second time;
irradiate a fourth position different from the third position with the first energy beam at a fourth time different from the second time and the third time; and
irradiate the fourth position with the second energy beam at a fifth time different from the second time, the third time, and the fourth time.

111. A build system comprising:
a build apparatus that includes an irradiation optical system configured to irradiate a surface of an object with a first energy beam and a second energy beam, and a material supply member configured to supply a build material to a melt pool formed by at least one of the first energy beam and the second energy beam; and
a control apparatus that is configured to control the build apparatus,
wherein
the irradiation optical system includes: a first deflection member that changes a deflection angle of the first energy beam so that a first irradiation position moves on the surface of the object along a surface of the object; and a second deflection member that changes a deflection angle of the second energy beam so that a second irradiation position moves on the surface of the object along a surface of the object,
the control apparatus controls the build apparatus to:
irradiate the fifth position with the first energy beam at a sixth time;
irradiate the fifth position with the first energy beam at a seventh time different from the sixth time;
irradiate a sixth position different from the fifth position with the second energy beam at an eighth time different from the sixth time and the seventh time; and
irradiate the sixth position with the second energy beam at a ninth time different from the sixth time, the seventh time, and the eighth time.

112. A build system comprising:
a build apparatus that includes an irradiation optical system configured to irradiate a surface of an object with an energy beam, a material supply member configured to supply a build material to a melt pool formed by the energy beam, and a build head including at least a part of the irradiation optical system;
a position change apparatus that is configured to change a relative positional relationship between the build head and the object; and
a control apparatus,
wherein
the control apparatus controls the irradiation optical system so that an irradiation position, which is irradiated with the energy beam, moves along a second direction intersecting a first direction in a first section in a first period in a period in which the positional relationship along the first direction is changed,
the control apparatus controls the irradiation optical system that the irradiation position, which is irradiated with the energy beam, moves along the second direction intersecting the first direction in a second section different from the first section in a second period different from the first period.

113. A build system comprising:
a build apparatus that includes an irradiation optical system configured to irradiate a surface of an object with a first energy beam and a second energy beam, and a material supply member configured to supply a build material to a melt pool formed by at least one of the first energy beam and the second energy beam; and
a control apparatus that is configured to control the build apparatus,
wherein
the control apparatus is configured to control a heat amount per unit area that is transferred from at least one of the first energy beam and the second energy beam based on build path information related to a path along which the build apparatus performs a building.

114. A build system that is a build apparatus comprising:
an irradiation optical system that is configured to irradiate a surface of an object with a first energy beam and a second energy beam;
a material supply member that is configured to supply a build material to a melt pool formed by at least one of the first energy beam and the second energy beam; and
a build head that includes at least a part of the irradiation optical system,
wherein
the irradiation optical system includes:
a first deflection member that deflects the first energy beam;
a second deflection member that deflects the second energy beam; and
a condensing member that condenses the first energy beam deflected by the first deflection member and the second energy beam deflected by the second deflection member,
the build head includes:
a first change apparatus that changes a position or an orientation of the first deflection member to change an irradiation position of the first energy beam; and
a second change apparatus that changes a position or an orientation of the second deflection member to change an irradiation position of the second energy beam.
